(19) Europäisches Patentamt / European Patent Office / Office européen des brevets

(11) **EP 2 759 589 A1**

(12) **EUROPEAN PATENT APPLICATION**
published in accordance with Art. 153(4) EPC

(43) Date of publication:
**30.07.2014 Bulletin 2014/31**

(21) Application number: **13738249.5**

(22) Date of filing: **18.01.2013**

(51) Int Cl.:
*C10M 169/04* (2006.01)   *C10M 103/06* (2006.01)
*C10M 125/02* (2006.01)   *C10M 125/04* (2006.01)
*C10M 177/00* (2006.01)   *F16C 19/06* (2006.01)
*F16C 19/16* (2006.01)    *F16C 29/06* (2006.01)
*F16C 33/372* (2006.01)   *F16C 33/38* (2006.01)
*F16C 33/42* (2006.01)    *F16C 33/66* (2006.01)
*F16H 25/24* (2006.01)    *C10N 10/02* (2006.01)
*C10N 10/12* (2006.01)    *C10N 10/16* (2006.01)
*C10N 20/06* (2006.01)    *C10N 30/06* (2006.01)
*C10N 40/02* (2006.01)    *C10N 50/08* (2006.01)
*C10N 70/00* (2006.01)

(86) International application number:
**PCT/JP2013/000241**

(87) International publication number:
**WO 2013/108638 (25.07.2013 Gazette 2013/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.01.2012   JP 2012009058
30.03.2012   PCT/JP2012/002243
29.06.2012   JP 2012147867
30.10.2012   JP 2012239353
27.12.2012   JP 2012285939**

(71) Applicant: **NSK Ltd.
Tokyo 141-8560 (JP)**

(72) Inventor: **The designation of the inventor has not
yet been filed**

(74) Representative: **Klingseisen, Franz
Klingseisen & Partner
Postfach 10 15 61
80089 München (DE)**

(54) **SELF-LUBRICATING COMPOSITE MATERIAL AND ROLLING BEARING, LINEAR MOTION DEVICE, BALL SCREW DEVICE, LINEAR MOTION GUIDE DEVICE, AND TRANSPORT DEVICE USING SAME**

(57)   There are provided a self-lubricating composite material capable of obtaining a necessary strength at a mixing ratio of a solid lubricant such as molybdenum disulfide ($MoS_2$) of 60 mass% or greater; and a rolling bearing, a linear motion device, a ball screw device, a linear motion guide device, and a transport device using the same To that end, a self-lubricating composite material which is material used in a solid-lubricant spacer (6) of a rolling bearing (1) contains 60 mass% to 80 mass% of molybdenum disulfide ($MoS_2$) and a balance containing iron (Fe).

FIG. 54

EP 2 759 589 A1

**Description**

Technical Field

The present invention relates to a self-lubricating composite material containing a solid lubricant which is used for, for example, a bearing member or a sliding member of various machines; a rolling bearing, a linear motion device, a ball screw device, and a linear motion guide device using the same; and a transport device including one of the above-described devices.

Background Art

In the related art, a sintered compact containing: a solid lubricant such as molybdenum disulfide ($MoS_2$), which is powder having a hexagonal crystal structure, graphite, or tungsten disulfide ($WS_2$); and a binding material such as various metals or alloys, is used as a self-lubricating composite material. A representative example of such a composite material is, for example, as PTL 1 discloses, a composite material which is formed by sintering, the composite material containing major components such as: molybdenum disulfide ($MoS_2$), graphite, and tungsten disulfide ($WS_2$) as a solid lubricant; and copper (Cu), chromium (Cr), tungsten (W), and iron (Fe) as a metal binder for imparting a strength.

Citation List

Patent Literature
PTL 1: JP 2000-199028 A

Summary of Invention

Technical Problem

However, in the related art, the mixing ratio of a solid lubricant such as molybdenum disulfide ($MoS_2$) is suppressed to be less than or equal to about 50 mass%. This is because, when the mixing ratio is greater than 50 mass%, the strength required for enduring use is not obtained even after sintering.
The present invention has been made in order to solve the above-described problem, and an object thereof is to provide a self-lubricating composite material capable of obtaining a necessary strength at a mixing ratio of a solid lubricant such as molybdenum disulfide ($MoS_2$) of 60 mass% or grater; and a rolling bearing, a linear motion device, a ball screw device, a linear motion guide device, and a transport device using the same.

Solution to Problem

In order to achieve the above-described object, according to an embodiment of the present invention, there is provided a self-lubricating composite material containing: 60 mass% to 80 mass% of molybdenum disulfide ($MoS_2$); and a balance containing iron (Fe).
In addition, in the self-lubricating composite material, lubricating particles bind to a binder material to be complexed. The lubricating particles contain 70 mass% to 90 mass% of molybdenum disulfide ($MoS_2$) and 10 mass% to 30 mass% of iron (Fe). The binder material contains at least one of copper (Cu), nickel (Ni), graphite (C), and tungsten (W).
The self-lubricating composite material contains a lubricant phase that contains the lubricating particles as a major component; and a binder phase that contains the binder material as a major component and binds to the lubricant phase.
In addition, in the self-lubricating composite material, the content of at least one of copper (Cu) and nickel (Ni) is preferably 0.1 mass% to 2 mass% and more preferably 0.1 mass% to 1.8 mass%.
In addition, in the self-lubricating composite material, it is preferable that the balance contains 2 mass% to 7 mass% of graphite, 2 mass% to 20 mass% of tungsten (W), and 5 mass% to 20 mass% of iron (Fe).
In addition, it is preferable that the self-lubricating composite material contain a lubricant phase that contains lubricating particles containing molybdenum disulfide ($MoS_2$) and iron (Fe) as a major component; and a binder phase that contains at least one of copper (Cu) and nickel (Ni).
In addition, it is preferable that the binder phase contain at least one of carbon (C) and tungsten (W).
In addition, in the self-lubricating composite material, it is preferable that an area ratio of the lubricant phase to the binder phase be 98:2 to 80:20.
In addition, in the self-lubricating composite material, a particle size of the lubricating particles is preferably 10 $\mu$m to 700 $\mu$m and more preferably 30 $\mu$m to 500 $\mu$m.

In addition, in the self-lubricating composite material, it is preferable that a compound of iron (Fe) and nickel (Ni) be formed.

In addition, in the self-lubricating composite material, it is preferable that a compound of nickel (Ni) and molybdenum disulfide ($MoS_2$) be formed.

In addition, in the self-lubricating composite material, it is preferable that a particle size of the compound is 1 $\mu$m to 1mm.

In addition, it is preferable that the self-lubricating composite material be formed by sintering 60 mass% to 80 mass% of powdered molybdenum disulfide ($MoS_2$) ; 0.1 mass% to 2 mass% of at least one of powdered copper (Cu) and powdered nickel (Ni); and a balance containing at least powdered iron (Fe).

In addition, in the self-lubricating composite material, it is preferable that a compressive strength after sintering be higher than or equal to 40 MPa.

In order to achieve the above-described object, according to an embodiment of the present invention, there is provided a rolling bearing in which a self-lubricating composite material is arranged between rolling elements, the self-lubricating composite material being formed by sintering 60 mass% to 80 mass% of powdered molybdenum disulfide ($MoS_2$); 0.1 mass% to 2 mass% of at least one of powdered copper (Cu) and powdered nickel (Ni) ; and a balance containing at least powdered iron (Fe).

In this case, it is preferable that the self-lubricating composite material arranged between the rolling elements be cylindrical.

In addition, in the rolling bearing, it is preferable that the balance of the self-lubricating composite material contain 2 mass % to 7 mass% of graphite, 2 mass% to 20 mass% of tungsten (W), and 5 mass% to 20 mass% of iron (Fe).

In addition, in the rolling bearing, it is preferable that a compound of iron (Fe) and nickel (Ni) be formed in the self-lubricating composite material.

In addition, in the rolling bearing, it is preferable that a compound of nickel (Ni) and molybdenum disulfide ($MoS_2$) be formed in the self-lubricating composite material.

In addition, in the rolling bearing, it is preferable that that a particle size of the compound is 1 $\mu$m to 1mm.

In addition, in the rolling bearing, it is preferable that the self-lubricating composite material be formed by sintering at least one of powdered raw materials (at least one of molybdenum disulfide ($MoS_2$), copper (Cu), and nickel (Ni); and iron (Fe).

In addition, it is preferable that the rolling bearing be used during outer ring rotation.

In addition, it is preferable that the rolling bearing be a tenter clip bearing.

In addition, in the rolling bearing, it is preferable that the self-lubricating composite material be arranged between rolling elements.

In addition, in the rolling bearing, it is preferable that the self-lubricating composite material be able to be loaded from a filling slot provided on either or both of an outer ring side and an inner ring side.

In addition, it is preferable that the rolling bearing be an angular contact ball bearing including a cage where a pocket accommodating the self-lubricating composite material is formed.

In addition, it is preferable that the rolling bearing include a machined cage that is formed of the self-lubricating composite material.

In addition, it is preferable that the rolling bearing be used in a high-temperature environment.

In addition, it is preferable that the rolling bearing be used in a vacuum high-temperature environment.

In addition, it is preferable that the rolling bearing be used during outer ring rotation in a high-temperature environment.

In addition, it is preferable that the rolling bearing be used during outer ring rotation in a vacuum high-temperature environment.

In addition, it is preferable that the rolling bearing be used during oscillation in a high-temperature environment.

In addition, it is preferable that the rolling bearing be used during oscillation in a vacuum high-temperature environment.

In addition, it is preferable that the rolling bearing be used in a high-temperature environment under a high-load condition.

In addition, it is preferable that the rolling bearing be used in a vacuum high-temperature environment under a high-load condition.

In addition, it is preferable that the rolling bearing be used during oscillation in a high-temperature environment under a high-load condition.

In addition, it is preferable that the rolling bearing be used during oscillation in a vacuum high-temperature environment under a high-load condition

In addition, it is preferable that the rolling bearing be a tenter clip bearing.

In addition, it is preferable that the transport device include the rolling bearing in which the self-lubricating composite material is arranged between rolling elements.

In addition, it is preferable that the transport device include the rolling bearing in which the self-lubricating composite material be able to be loaded from a filling slot provided on either or both of an outer ring side and an inner ring side.

In addition, it is preferable that the transport device include the angular contact ball bearing including a cage where a pocket accommodating the self-lubricating composite material is formed.

In addition, it is preferable that the transport device include the rolling bearing including a machined cage that is formed of the self-lubricating composite material.

In addition, it is preferable that the transport device be a high-temperature transport device including the rolling bearing used in a high-temperature environment.

In addition, it is preferable that the transport device be a vacuum-high-temperature transport device including the rolling bearing used in a vacuum high-temperature environment.

In addition, it is preferable that the transport device be an outer-ring-rotation-bearing-high-temperature transport device including the rolling bearing used during outer ring rotation in a high-temperature environment.

In addition, it is preferable that the transport device be an outer-ring-rotation-bearing-vacuum-high-temperature transport device including the rolling bearing used during outer ring rotation in a vacuum high-temperature environment.

In addition, it is preferable that the transport device be an oscillating-bearing-high-temperature transport device including the rolling bearing used during oscillation in a high-temperature environment.

In addition, it is preferable that the transport device be an oscillating-bearing-vacuum-high-temperature transport device including the rolling bearing used during oscillation in a vacuum high-temperature environment.

In addition, it is preferable that the transport device be a high-temperature-high-load transport device including the rolling bearing used in a high-temperature environment under a high-load condition.

In addition, it is preferable that the transport device be a vacuum-high-temperature-high-load transport device including the rolling bearing used in a vacuum high-temperature environment under a high-load condition.

In addition, it is preferable that the transport device be an oscillating-bearing-high-temperature-high-load transport device including the rolling bearing used during oscillation in a high-temperature environment under a high-load condition

In addition, it is preferable that the transport device be an oscillating-bearing-vacuum-high-temperature-high-load transport device including the rolling bearing used during oscillation in a vacuum high-temperature environment under a high-load condition.

In addition, according to an embodiment of the present invention, there is provided a transport device including the rolling bearing. An example of this transport device is a tenter clip provided in a film stretching device. This tenter clip is a machine component which holds both ends of a film as a stretching target and stretches the film in a width direction while travelling on a rail with an endless track. The tenter clip bearing is used as a component for guiding the travelling of this machine component on the rail.

In addition, according to an embodiment of the present invention, there is provided a rolling bearing in which a coating film formed of the self-lubricating composite material is formed on at least one of surfaces of rolling elements, a rolling surface of an outer ring, a rolling surface of an inner ring, and a pocket surface of a cage.

An example of such a rolling bearing is a rolling bearing in which the surfaces of the rolling elements are covered with the coating film of the self-lubricating composite material In addition, another example of the rolling bearing is a rolling bearing in which the surfaces of the rolling elements are covered with the coating film of the self-lubricating composite material, and a spacer formed of the self-lubricating composite material adjacent to the rolling elements is arranged. Still another example of the rolling bearing is a rolling bearing in which surfaces of rolling elements are covered with the coating film of the self-lubricating composite material, and at least one of the following, a rolling surface of an outer ring, a rolling surface of an inner ring, and a pocket surface of a cage, is covered with the coating film of the self-lubricating composite material.

In addition, in the rolling bearing, it is preferable that a spacer formed of the self-lubricating composite material be arranged between rolling elements.

In addition, in the rolling bearing, it is preferable that a wet lubricating material be embedded.

In addition, it is preferable that the rolling bearing be a touchdown bearing.

In addition, according to an embodiment of the present invention, it is preferable that a transport device be used in a high-temperature environment and include the rolling bearing.

In addition, according to an embodiment of the present invention, it is preferable that a transport device be used in a vacuum high-temperature environment and include the rolling bearing.

In addition, according to an embodiment of the present invention, there is provided a linear motion device in which a coating film formed of the self-lubricating composite material is formed on at least one of surfaces of rolling elements and a rolling surface of the linear motion device. The linear motion device described herein refers to a device in which a moving member is provided so as to be linearly movable relative to a shaft member using the rolling of rolling elements, and examples thereof include a ball screw device and a linear motion guide device.

In addition, in the linear motion device, it is preferable that a spacer formed of the self-lubricating composite material be provided to be in contact with a shaft member.

In addition, in the linear motion device, it is preferable that a wet lubricating material be embedded.

In addition, according to an embodiment of the present invention, it is preferable that a transport device be used in a high-temperature environment and include the linear motion device.

In addition, according to an embodiment of the present invention, it is preferable that a transport device be used in a vacuum high-temperature environment and include the linear motion device.

In addition, according to an embodiment of the present invention, there is provided a ball screw device including: a screw shaft; a nut that penetrates the screw shaft and is screwed into the screw shaft through rolling elements so as to be movable in an axis direction of the screw shaft; and the self-lubricating composite material according to any one of the above embodiments, that has a ring shape and is attached on an end portion side of the nut, in which the inner circumferential surface of the self-lubricating composite material is attached on the nut so as to be slidable on the screw shaft.

In addition, in the ball screw device, it is preferable that the self-lubricating composite material be accommodated in a fixing member which is provided on the same axis as that of the self-lubricating composite material on the end surface of the nut.

In addition, in the ball screw device, it is preferable that the inner circumferential surface of the self-lubricating composite material is attached on the end surface of the nut so as to be screwed into the screw shaft.

In addition, it is preferable that the ball screw device further include a binding member for allowing the self-lubricating composite material and the fixing member to rotate together.

In addition, in the ball screw device, it is preferable that the self-lubricating composite material be divided into plural pieces in a circumferential direction

In addition, according to an embodiment of the present invention, it is preferable that a transport device be used in a high-temperature environment and include the ball screw device.

In addition, according to an embodiment of the present invention, it is preferable that a transport device be used in a vacuum high-temperature environment and include the ball screw device

In addition, according to an embodiment of the present invention, there is provided a linear motion guide device including: a guide rail having a rail-side rolling element rolling surface, which extends in an axis direction, as an outer surface; a slider that is mounted along the guide rail so as to be movable relative to the guide rail; and a spacer that is arranged on at least one end portion side in a moving direction of the slider and slidably comes into contact with the rail-side rolling element rolling surface, in which the spacer is formed of the self-lubricating composite material.

In addition, in the linear motion guide device, it is preferable that the spacer be held by a spacer holder provided on an end surface of the slider.

In addition, in the linear motion guide device, it is preferable that the spacer be cylindrical.

In addition, in the linear motion guide device, it is preferable that an opening be formed on the rail-side rolling element rolling surface, and that a pocket accommodating the spacer be provided on the spacer holder.

In addition, in the linear motion guide device, it is preferable that a plurality of the spacers be held by the single pocket.

In addition, according to an embodiment of the present invention, it is preferable that a transport device be used in a high-temperature environment and include the linear motion guide device.

In addition, according to an embodiment of the present invention, it is preferable that a transport device be used in a vacuum high-temperature environment and include the linear motion guide device.

Advantageous Effects of Invention

According to the present invention, it is possible to provide a self-lubricating composite material capable of obtaining a necessary strength at a mixing ratio of a solid lubricant such as molybdenum disulfide ($MoS_2$) of 60 mass% or greater; and a rolling bearing, a transport device, a ball screw device, and a linear motion guide device, which use the self-lubricating composite material.

Brief Description of Drawings

FIG. 1 is a cross-sectional view illustrating a part of a configuration of a rolling bearing according to an embodiment of the present invention.

FIG. 2 is a front view illustrating a configuration of a compressive strength measuring device.

FIG. 3 is a front view illustrating a configuration of a friction and wear measuring device.

FIG. 4 is a front view illustrating a configuration of a high-temperature-bearing endurance testing device.

FIG. 5 is a graph illustrating a relationship between a compressive strength and a bearing endurance of a self-lubricating composite material in Examples.

FIG. 6 is a graph illustrating a relationship between an additive amount of $MoS_2$ and a compressive strength of a self-lubricating composite material in Examples.

FIG. 7 is a graph illustrating a relationship between an additive amount of $MoS_2$ and a compressive strength of a self-lubricating composite material in Examples.

FIG. 8 is a graph illustrating lubricating performance (a relationship between the number of reciprocations and a friction coefficient) in Examples.

FIG. 9 is a graph illustrating a relationship between an additive amount of $MoS_2$ and a friction coefficient in Examples.

FIG. 10 is a graph illustrating a weight change caused by oxidation depending on an additive amount of C in Examples.

FIG. 11 is a graph illustrating a relationship between an additive amount of C and a compressive strength in Examples.

FIG.. 12 is a graph illustrating a relationship between an additive amount of Cu and Ni and a compressive strength in Examples

FIG. 13 is a graph illustrating a relationship between an additive amount of Cu and Ni and bearing endurance performance in Examples.

FIG. 14 is a graph illustrating the depth of wear of a sample after a friction test in Examples.

FIG.. 15 is a graph illustrating a relationship between an additive amount of W and the depth of wear in Examples.

FIG. 16 is a graph illustrating a relationship between an additive amount of W and a compressive strength in Examples.

FIG. 17 is a graph illustrating a relationship between an additive amount of Fe and a compressive strength in Examples

FIG. 18 is a graph illustrating a relationship between an additive amount of Fe and a friction coefficient in Examples.

FIG. 19 is a graph illustrating endurance performance in Examples.

FIGS. 20A and 20B are diagrams illustrating a configuration of a high-temperature-outer-and-inner-ring-rotation friction coefficient measuring device. FIG.. 20A is a front view during an outer ring rotation test and FIG. 20B is a front view during an inner ring rotation test.

FIG. 21 is a graph illustrating a temporal change in friction coefficient after starting an evaluation to evaluate the lubricating performance of Examples.

FIG. 22 is a graph illustrating a relationship between a rotating speed and a friction coefficient in Examples.

FIG. 23 is a front view illustrating a configuration of a high-temperature-outer-ring-rotation-bearing endurance testing device in Examples.

FIGS. 24A and 24B are diagrams illustrating a configuration of a machined cage in Examples. FIG. 24A is a cross-sectional view taken along a surface in an axis direction and FIG. 24B is a cross-sectional view taken along a surface in a radial direction.

FIGS. 25A and 25B are diagrams illustrating a configuration of a cylindrical-spacer-filling-slot-type bearing in Examples. FIG. 25A is a cross-sectional view taken along a surface in an axis direction and FIG. 25B is a cross-sectional view taken along a surface in a radial direction.

FIGS. 26A and 26B are diagrams illustrating a configuration of a cylindrical-spacer-cage-supporting-type angular bearing in Examples FIG. 26A is a cross-sectional view taken along a surface in an axis direction and FIG. 26B is a perspective view of a cage.

FIGS. 27A and 27B are diagrams illustrating a configuration of a cylindrical-spacer-cage-supporting-type angular bearing in Examples. FIGS. 27A and 27B are cross-sectional views taken along a surface in an axis direction.

FIG. 28 is a graph illustrating a relationship between a rotating speed and a friction coefficient in Examples.

FIG.. 29 is a graph illustrating an endurance performance comparison (inner ring rotation) when a machined cage is used..

FIG. 30 is a graph illustrating an endurance performance comparison (outer ring rotation) when a machined cage is used.

FIG. 31 is a graph illustrating an endurance performance comparison (inner ring rotation) when a spacer-filling-slot-type bearing is used.

FIG. 32 is a graph illustrating an endurance performance comparison (outer ring rotation) when a spacer-filling-slot-type bearing is used.

FIG. 33 is a graph illustrating an endurance performance comparison (inner ring rotation) when a cylindrical-spacer-cage-supporting-type angular bearing is used.

FIG. 34 is a graph illustrating an endurance performance comparison (outer ring rotation) when a cylindrical-spacer-cage-supporting-type angular bearing is used.

FIG. 35 is a graph illustrating an endurance performance comparison (inner ring rotation) when a cylindrical-spacer-cage-supporting-type angular bearing is oscillated.

FIG. 36 is a graph illustrating an endurance performance comparison (outer ring rotation) when a cylindrical-spacer-cage-supporting-type angular bearing is oscillated.

FIG. 37 is a front view illustrating a configuration of a tenter clip used in a rolling bearing according to an embodiment of the present invention.

FIG. 38 is a perspective view illustrating the configuration of the tenter clip used in the rolling bearing according to the embodiment.

FIG. 39 is a diagram illustrating the summary of the operation and the heating of the tenter clip used in the rolling bearing according to the embodiment

FIG. 40 is a diagram schematically illustrating a configuration of an outgassing testing device in Examples.

FIG. 41 is a graph illustrating an outgassing property of a bearing in a vacuum environment at a high temperature.

FIG. 42 is a graph illustrating oscillating bearing endurance performance in a vacuum environment at a high temperature.

FIG. 43 is a diagram schematically illustrating a configuration of a vacuum-high-temperature-bearing endurance testing device.

FIG. 44 is a graph illustrating bearing endurance performance in a vacuum high-temperature environment.

FIG. 45 is a diagram schematically illustrating a configuration of a high-temperature film transport device.

FIG. 46 is a diagram schematically illustrating a configuration of an intra-furnace conveyor.

FIG 47 is a diagram schematically illustrating a configuration of a kiln car.

FIG 48 is a diagram schematically illustrating a configuration of a vacuum deposition device

FIG. 49 is a diagram schematically illustrating a configuration of a continuous sputtering furnace.

FIG. 50 is a diagram schematically illustrating a configuration of a vacuum robot for transporting a panel.

FIG. 51 is a perspective view illustrating a configuration of a self-lubricating composite material coating device (ball-mill type).

FIG. 52 is a cross-sectional view illustrating an internal configuration of a pod of the self-lubricating composite material coating device (ball-mill type).

FIG. 53 is a cross-sectional view illustrating a part of a configuration of a rolling bearing in which a coating film according to Embodiment (1) is formed on rolling elements.

FIG. 54 is a cross-sectional view illustrating a part of a configuration of a rolling bearing in which a coating film according to Embodiment (2) is formed on rolling elements.

FIG. 55 is a cross-sectional view illustrating a part of a configuration of a rolling bearing in which a coating film according to Embodiment (3) is formed on rolling elements.

FIG. 56 is a cross-sectional view illustrating a part of a configuration of a rolling bearing in which a coating film according to Embodiment (4) is formed on rolling elements.

FIG. 57 is a graph illustrating endurance performance of a rolling bearing, which is subjected to a coating film treatment according to a third embodiment, at a high temperature.

FIG. 58A and 58B are cross-sectional views illustrating a configuration of a ball screw device according to a fourth embodiment.

FIG. 59 is a diagram schematically illustrating a configuration of a high-temperature-ball-screw-device-endurance testing device.

FIG. 60 is a graph illustrating endurance performance of the ball screw device according to the fourth embodiment at a high temperature.

FIG. 61 is a diagram schematically illustrating a configuration of a vacuum-high-temperature-ball-screw-device-endurance testing device.

FIG. 62 is a graph illustrating endurance performance of the ball screw device according to the fourth embodiment in a vacuum environment at a high temperature.

FIGS. 63A and 63B are diagrams of a linear motion guide device according to a fifth embodiment. FIG. 63A is a front view and FIG. 63B is a cross-sectional view.

FIG. 64 is a perspective view illustrating a configuration of a linear motion guide device according to a fifth embodiment (Embodiment 5-4).

FIG. 65 is a diagram schematically illustrating a configuration of a high-temperature-linear-motion-guide-device-endurance testing device.

FIG. 66 is a graph illustrating endurance performance of the linear motion guide device according to the fifth embodiment at a high temperature.

FIG 67 is a diagram schematically illustrating a configuration of a vacuum-high-temperature-linear-motion-guide-device-endura nce testing device.

FIG. 68 is a graph illustrating endurance performance of the linear motion guide device according to the fourth embodiment in a vacuum environment at a high temperature.

Description of Embodiments

(First Embodiment)

Hereinafter, a first embodiment of a self-lubricating composite material according to the present invention will be described in detail. This embodiment relates to a self-lubricating composite material suited for lubricating a rolling bearing used for various machines, particularly, suited for lubricating a rolling bearing used in a high-temperature special environment, for example, a film transport roller support bearing.

In the related art, it is known that lubricity (low friction and low torque) is improved by increasing the content of molybdenum disulfide ($MoS_2$) in the self-lubricating composite material. However, when the content of molybdenum disulfide ($MoS_2$) is increased, the strength after sintering is insufficient, and thus this technique is not realized.

According to the embodiment, a specific amount of at least one of copper (Cu) and nickel (Ni) is added in the presence of iron (Fe). As a result, a self-lubricating composite material in which the content of molybdenum disulfide ($MoS_2$) is increased without decreasing the strength can be obtained.

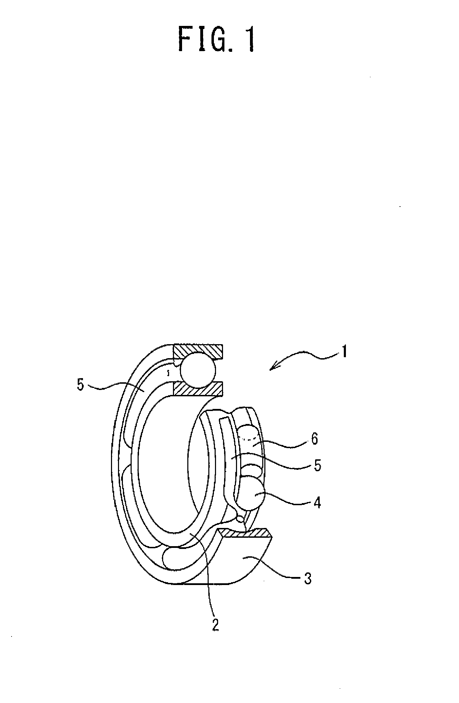

In addition, by arranging this self-lubricating composite material between rolling elements of a rolling bearing, the rolling bearing can be used at a high temperature. At this time, a bearing structure having a rolling element holding structure illustrated in FIG. 1 is preferable.

In FIG. 1, in a rolling bearing 1, a spherical rolling element 4 is rotatably interposed between an annular inner ring 2 having a small diameter and an annular outer ring 3 having a large diameter such that the inner ring 2 and the outer ring 3 can rotate relative to each other. A cage 5 is embedded with plural rolling elements 4 and a solid-lubricant spacer 6 and is connected to another cage 5. The solid-lubricant spacer 6 is arranged between rolling elements 4 to prevent wear from being caused by friction between the rolling elements 4.

The solid-lubricant spacer 6 has a cylindrical shape and is formed of a self-lubricating composite material constituted of a composition containing: 60 mass% to 80 mass% of molybdenum disulfide ($MoS_2$) ; 0.1 mass% to 2 mass% of at least one of copper (Cu) and nickel (Ni); and a balance containing at least iron (Fe). According to this composition, even when the content of molybdenum disulfide ($MoS_2$) is greater than or equal to 60 mass%, the strength of a sintered compact can be prevented from being decreased by the interaction between nickel (Ni) and copper (Cu) in the presence of iron (Fe). The reason is presumed to be that molybdenum disulfide ($MoS_2$) and nickel (Ni), copper (Cu), and iron (Fe) forms a composite compound (complex compound), which strengthens the binding of a sintered compact and prevents a decrease in strength. However, when the content of molybdenum disulfide ($MoS_2$) is greater than 80 mass%, the effect of the composite compound is small, which leads to a decrease in strength. Accordingly, according to this composition, favorable lubricity is obtained by controlling the content of molybdenum disulfide ($MoS_2$) to be greater than or equal to 60 mass% while suppressing a decrease in strength..

In addition, in this composition, it is preferable that each content of copper (Cu) and nickel (Ni) be 0.1 mass% to 2 mass% and a total content thereof be 0.1 mass% to 2 mass%. When the content is less than the lower limit, the strength increasing effect is not obtained. When the content is greater than the upper limit, the strength increasing effect is saturated The reason is that, since copper (Cu) and nickel (Ni) are likely to be oxidized, it is necessary that the content of graphite as an antioxidant be increased, which brings about a decrease in strength.

In addition, in the self-lubricating composite material, it is preferable that the balance contains 2 mass% to 7 mass% of graphite, 2 mass% to 20 mass% of tungsten (W), and 5 mass% to 20 mass% of iron (Fe). Graphite has an antioxidant effect at a high temperature, and particularly, it is necessary that the content thereof be 2 mass% to 7 mass% in order to prevent the oxidation of copper (Cu) and nickel (Ni). When the content of graphite is less than 2 mass%, the antioxidant effect is insufficient. When the content of graphite is greater than 7 mass%, the strength is decreased. In addition, when iron (Fe) is present as the balance, an effect of preventing a decrease in strength is obtained. It is preferable that iron (Fe) be used in combination with tungsten (W). In addition, it is more preferable that the weight ratio of tungsten (W) and iron (Fe) be 1:1 because the strength is stable. When the content of tungsten (W) is greater than 20 mass%, the strength may be decreased. When the content of tungsten (W) is less than 2 mass%, the stabilization of the strength may deteriorate due to the interaction with iron (Fe).

In addition, in the self-lubricating composite material according to the embodiment, it is preferable that a compound of iron (Fe) and nickel (Ni) be formed. In addition, in the self-lubricating composite material according to the embodiment, it is preferable that a compound of nickel (Ni) and molybdenum disulfide ($MoS_2$) be formed. The reason is that the compounds strengthen the binding of the composite material.

In addition, in the self-lubricating composite material according to the embodiment, it is preferable that a particle size of the compound be 1 $\mu$m to 1 mm. In addition, in the self-lubricating composite material according to the embodiment, it is preferable that powdered raw materials be sintered.. In addition, it is preferable that a particle size of the raw material powder be less than or equal to 0.8 mm. As a result, favorable lubricity and necessary strength are obtained. "Raw materials" described herein include 60 mass% to 80 mass% of powdered molybdenum disulfide ($MoS_2$) and 0.1 mass% to 2 mass% of at least one of powdered copper (Cu) and powdered nickel (Ni), and a balance containing powdered iron (Fe).

(Second Embodiment)

Hereinafter, a second embodiment of the self-lubricating composite material according to the present invention will be described in detail. This embodiment relates to a self-lubricating composite material suited for lubricating a rolling bearing used for various machines, particularly, suited for lubricating a rolling bearing used in a high-temperature special environment, for example, a film transport roller support bearing.

The self-lubricating composite material according to the embodiment satisfies the following (a) to (d).

(a) Lubricating particles containing molybdenum disulfide ($MoS_2$) and iron (Fe) bind to a binding material to be complexed. A particle size of the lubricating particles is 10 $\mu$m to 700 $\mu$m (preferably 30 $\mu$m to 500 $\mu$m). The ratio of molybdenum disulfide ($MoS_2$) and iron (Fe) is 70 mass% to 90 mass%:10 mass% to 30 mass%. In addition, examples of the binding material include tungsten (W), graphite (C), nickel (Ni), and copper (Cu). "Particle size" described herein refers to "average particle size". The average particle size can be calculated by observing, for example, a region of 0.. 5 mm×0.5 mm and measuring maximum particle sizes (lengths) of particles using an SEM (scanning electron microscope) in a visual field containing 10 or more particles..

(b) Regarding mixing ratios of the lubricating particles and the binding material, the content of the lubricating particles is 70 mass% to 90 mass%, and the content of the binding material is 30 mass% to 10 mass%.

(c) The lubricating particles have a porosity of 20% or less (preferably 10% or less).

(d) The content of molybdenum disulfide ($MoS_2$) is 60 mass% to 80 mass%, and the content of at least one of copper (Cu) and nickel (Ni) is 0.1 mass% to 2 mass%.

In the related art, the content of a solid lubricant component, for example, molybdenum disulfide ($MoS_2$), contained in a solid lubricant composite material in which the solid lubricant and a metal are complexed is suppressed to be less than or equal to 50 mass%. In order to improve lubricity, it is important to increase the content of $MoS_2$, which is a lubricating component, as much as possible. When the content is greater than 50 mass%, a dense material is not obtained, and a mechanical strength is significantly decreased. In addition, when such a material having a low strength is used as a lubricating material for decreasing friction wear, there is a case where $MoS_2$ preferentially falls off from the material and does not function at all as a lubricant.

Therefore, by satisfying the above-described (a) to (d) as in the embodiment, a greater content of a solid lubricant component can be added without decreasing a mechanical strength, and thus a solid lubricant composite material having superior lubricity can be prepared.

<Regarding (a)>

Hereinafter, the above-described (a) configuring the self-lubricating composite material according to the embodiment will be described.

Raw materials according to the embodiment are $MoS_2$-Fe-W-C-Ni-Cu. The average particle size of commercially available $MoS_2$ powder is approximately 4 $\mu$m. When a solid lubricant composite material is prepared using $MoS_2$ powder having such an average particle size, the contact area between particles is increased due to their fine sizes, a reaction between Cu and Ni is promoted during sintering, and thus $MoS_2$ is decomposed. $MoS_2$ is changed into a material having no lubricity. In addition, the $MoS_2$ powder has significantly poor fluidity, and thus a forming process cannot be performed with this powder.

Therefore, by controlling the average particle size of the lubricating particles containing $MoS_2$ to be 10 $\mu$m to 700 $\mu$m (preferably 30 $\mu$m to 500 $\mu$m) in advance, the contact area between Ni and Cu can be decreased and a reaction with $MoS_2$ can be suppressed. In addition, the fluidity of the powder is improved, and a forming process can be performed.

When the average particle size of the lubricating particles is less than 10 $\mu$m, the reaction is promoted, $MoS_2$ is changed into a material having no lubricity, and a forming process cannot be performed. On the other hand, when the average particle size of the lubricating particles is greater than 700 $\mu$m, dispersibility deteriorates, which leads to a decrease in strength. In addition, from the viewpoints of strength and lubricity, it is preferable that the width of a particle size distribution be narrow. The average particle size is more preferably 50 $\mu$m to 300 $\mu$m from the viewpoint of productivity.

In addition, regarding the preparation of the lubricating particles, it was found that a stronger sulfide (sulfide of Mo and Fe) having lubricity can be formed by dispersing Fe in particles of $MoS_2$ having a particle size of 10 $\mu$m to 700 $\mu$m (preferably 30 $\mu$m to 500 $\mu$m) rather than by adding Fe alone.

Further, when the content of $MoS_2$ is greater than 90%, a strong sulfide is not formed. When the content of $MoS_2$ is less than 70%, Fe becomes rich, and thus lubricity is lost.

Therefore, by increasing the particle size of the lubricating particles and dispersing Fe in the lubricating particles, a lubricating component becomes strong and is difficult to fall with respect to friction wear.

<Regarding (b)>

Hereinafter, the above-described (b) configuring the self-lubricating composite material according to the embodiment will be described.

Since the lubricating particles containing MoS$_2$ and Fe has a greater particle size (10 $\mu$m to 700 $\mu$m) than that of the related art, pores are likely to be formed in the grain boundaries, and such lubricating particles tend to fall off.

Therefore, by adding W, C, Cu, and Ni to the lubricating particles, the pores are filled. Since W, C, Cu, and Ni function as a binder phase between the lubricating particles, and the fall-off of the lubricating particles can be suppressed.

When the content of metals (W, C, Cu, and Ni) constituting the binder phase is less than 10 mass%, pores are not filled. On the other hand, when the content of metals (W, C, Cu, and Ni) constituting the binder phase is greater than 30 mass%, a reaction between the lubricating particles and the binder phase (in particular, a reaction between Cu and Ni) is promoted, and a material having no lubricity is formed.

Here, the reason for adding each metal constituting the binder phase will be described.

W is added to the lubricating particles in order to improve wear resistance, and graphite is added to the lubricating particles in order to keep lubricity at a high temperature.

In addition, Cu and Ni are added in order to improve a binding strength between W, graphite, and the lubricating particles.

The composition (W-C-Cu-Ni) which functions as the binder phase of the lubricating particles contains 2 mass% to 3 mass% of Cu, 5 mass% to 6 mass% of Ni, and a balance containing w and C, in which a volume ratio W: C is preferably about 1:3.. In this composition, a strong binder phase is formed.

<Regarding (c)>

Hereinafter, the above-described (c) configuring the self-lubricating composite material according to the embodiment will be described.

The lubricating particles containing MoS$_2$ and Fe has denseness in which the porosity is less than or equal to 20% (preferably less than or equal to 10%).

When the porosity is greater than 20%, a large number of pores are formed, and the lubricating particles are likely to fall off. In addition, oxidation degradation at a high temperature becomes severe.

An example of a method of preparing a dense compact having a porosity of 20% or less is a method of preparing a dense compact in which CIP or the like is used during the forming process of powder so as to control a molding pressure to be ultra-high. In addition, another example is a method of pre-syntering the lubricating particles of (MoS$_2$-Fe) in advance and pulverizing a dense material to prepare lubricating particles having an appropriate particle size. In addition, still another example is a mechanical alloying method. In this way, there are various methods of preparing a dense compact having a porosity of 20% or less, but the method is not limited as long as a dense compact is prepared.

<Regarding (d)>

Hereinafter, the above-described (d) configuring the self-lubricating composite material according to the embodiment will be described

As described above, in the self-lubricating composite material according to the embodiment, the content of molybdenum disulfide (MoS$_2$) is 60 mass% to 80 mass%, and the content of at least one of copper (Cu) and nickel (Ni) is 0.1 mass% to 2 mass%.

According to this composition, even when the content of molybdenum disulfide (MoS$_2$) is greater than or equal to 60 mass%, the strength of a sintered compact can be prevented from being decreased by the interaction between nickel (Ni) and copper (Cu) in the presence of iron (Fe). The reason is presumed to be that molybdenum disulfide (MoS$_2$) and nickel (Ni), copper (Cu), and iron (Fe) form a composite compound (complex compound), which strengthens the binding of a sintered compact and prevents a decrease in strength. However, when the content of molybdenum disulfide (MoS$_2$) is greater than 80 mass%, the effect of the composite compound is small, which leads to a decrease in strength. Accordingly, according to this composition, favorable lubricity is obtained by controlling the content of molybdenum disulfide (MoS$_2$) to be less than or equal to 60 mass% while suppressing a decrease in strength..

[Examples]

Hereinafter, the present invention will be described in more detail using examples but is not limited thereto.

(Example 1)

Raw material powders containing 60 mass% to 80 mass% of molybdenum disulfide (MoS$_2$), 0.1 mass% to 2 mass% of copper (Cu), 0.1 mass% to 2 mass% of nickel (Ni), and a balance containing iron (Fe) and tungsten at a ratio of about 1:1 and further containing graphite were molded using a cylindrical sintering mold for a rolling bearing (inner diameter: 10 mm) illustrated in FIG. 1, followed by sintering. As a result, a self-lubricating composite material of Example 1 was prepared. At this time, the raw material powders (MoS$_2$, Cu, Ni, Fe, W) had a particle size of 0.8 mm or less, and a representative composition thereof was as follows.
60 mass% of MoS$_2$-1.0 mass% of Cu and Ni in total (the respective contents of Cu and Ni are the same)-4 mass% of C-17.5 mass% of W-17.5 mass% of balance containing Fe

(Comparative Example 1)

Raw material powders that did not contain copper (Cu) and nickel (Ni) and contained 60 mass% to 80 mass% of molybdenum disulfide (MoS$_2$) and a balance containing iron (Fe) and tungsten (W) at a ratio of about 1:1 and further containing graphite were molded and sintered under the same conditions as that of Example 1. As a result, a self-lubricating composite material of Comparative Example 1 was prepared. The detail of the composition was as follows.
60 mass% of MoS$_2$-4 mass% of C-18 mass% of W-18 mass% of balance containing Fe

(Sintering Result)

In Example 1, a cylindrical material was able to be formed after sintering; whereas, in comparative Example 1, a cylindrical shape of a material was not able to be maintained after sintering. Through microscope observation and material analysis, in Example 1, a compound of iron (Fe) and nickel (Ni) and a compound of nickel (Ni) and molybdenum disulfide (MoS$_2$) were observed. In addition, in Example 1, the observed compounds had a particle size of 1 $\mu$m to 1 mm.

(Evaluation)

The cylindrical self-lubricating composite material of Example 1 and Comparative Example 1 were evaluated as follows (1) Rotation Test
The obtained material of Example 1 as the solid-lubricant spacer 6 was attached on the rolling bearing 1 illustrated in FIG. 1. Then, a rotation test was performed. As a result, there were no problems in rotating properties at room temperature and at a high temperature (400°C).

(2) Measurement of Compressive Strength

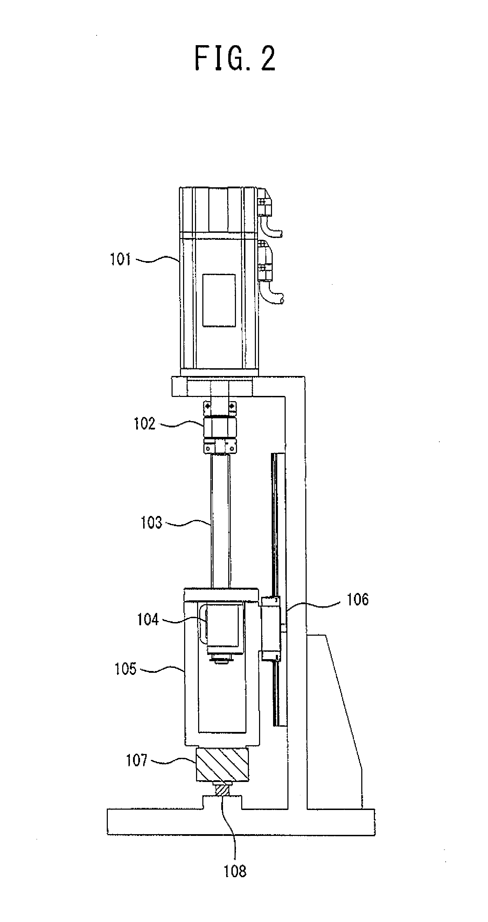

Using a compressive strength measuring device illustrated in FIG. 2, the compressive strength of each cylindrical self-lubricating composite material was measured in the following manner.
As illustrated in FIG. 2, in the compressive strength measuring device, a nut 104 of a ball screw 103 is connected to a linear motion guide 106 so as to have the same guide direction. By rotating a motor 101 connected to an end of a screw shaft of the ball screw 103, the nut 104 is guided by the linear motion guide 106 to move up and down. A cylindrical housing 105 is attached on the nut 104, and a load cell 107 is provided on an end surface of the housing 105. An end surface of the load cell 107 is parallel to an end surface of a cylindrical sample (self-lubricating composite material) 108. By rotating the motor 101, the end surface of the load cell 107 is brought into Contact with the end surface of the sample 108, and the nut 104 is linearly moved at a predetermined compression speed. As a result, the load cell 107 compresses the sample 108. When the cylindrical sample is further compressed by linearly moving the load cell 107 further, a compressive load reaches a compressive strength load of the sample 108, and thus the sample 108 is broken. By dividing this compressive strength load by a cross-sectional area of the sample 108, a compressive load (in the unit of pressure) per unit area is obtained as a compressive strength of the sample 108
In this example, test conditions (measurement conditions) were set as follows.
Shape of sample: Cylindrical spacer having a size of about $\phi$ 4 mmx3 mm
Compression speed: 5 $\mu$m/s
Number of samples: 3 (average value was adopted)

(3) Measurement of Friction and Wear

A method of measuring a friction coefficient of an end surface of a cylindrical sample (self-lubricating composite material) and measuring the depth of wear after a friction test using a friction and wear measuring device will be described.

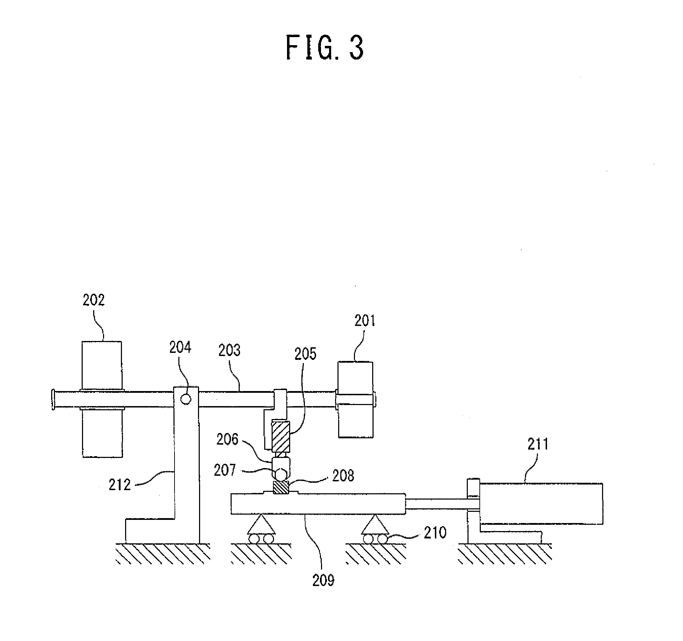

As illustrated in FIG. 3, in the friction and wear measuring device, a weight 201 is fixed to an end of a seesaw type arm 203. Meanwhile, a movable weight 202 is arranged near the other end of the arm 203.. By moving the weight 202 back and forth on the arm 203, the size of a load applied to an end surface of the sample 208 through a load cell 205, which is arranged between a fulcrum 204 of the arm 203 and the weight 201, can be adjusted. A ball holder 206 is provided on an end surface of the load cell 205 such that a ball 207 applies a load to the sample 208 in a normal direction of the end surface of the sample 208. An end surface of the sample 208 opposite the ball 207 is fixed to a disc 209 which is horizontally arranged. The disc 209 is arranged on a linear motion device 210 which is linearly movable in a horizontal direction and can be linearly moved by a linear motion motor 211 connected to the disc 209. When the disc 209 linearly moves, the sample 208 fixed to the disc 209 also linearly moves. At this time, sliding occurs between a surface of the ball 207 and an end surface of the sample 208 in contact with each other, and a frictional resistance thereof can be measured using the load cell 205. The linear motion motor 211 repetitively reciprocates a predetermined distance.. By this reciprocation, whenever the direction of the linear motion is reversed, the direction of the frictional resistance is also reversed. However, the load cell 205 can measure a load in both directions. By causing the linear motion motor 211 to reciprocate a predetermined total number of times, frictional resistance values during the reciprocation are continuously measured, and changes in friction coefficient calculated from the frictional resistance values can be measured. The sample 208 is surrounded by a heater (not illustrated) such that a friction measurement at a high temperature can be performed.

In this example, test conditions (measurement conditions) were set to be as follows.

Shape of sample: Cylindrical spacer having a size of about $\phi$ 4 mmx3 mm

Ball diameter: About 3 mm

Load: 5 N

Reciprocation distance: 2 mm

Reciprocating speed: 1 reciprocation/sec

Number of reciprocations: 1800

Temperature: Room temperature and 300°C

(4) High-Temperature-Bearing Endurance Test

A method of performing a rotation endurance test of a bearing at a high temperature using a high-temperature-bearing endurance testing device will be described.

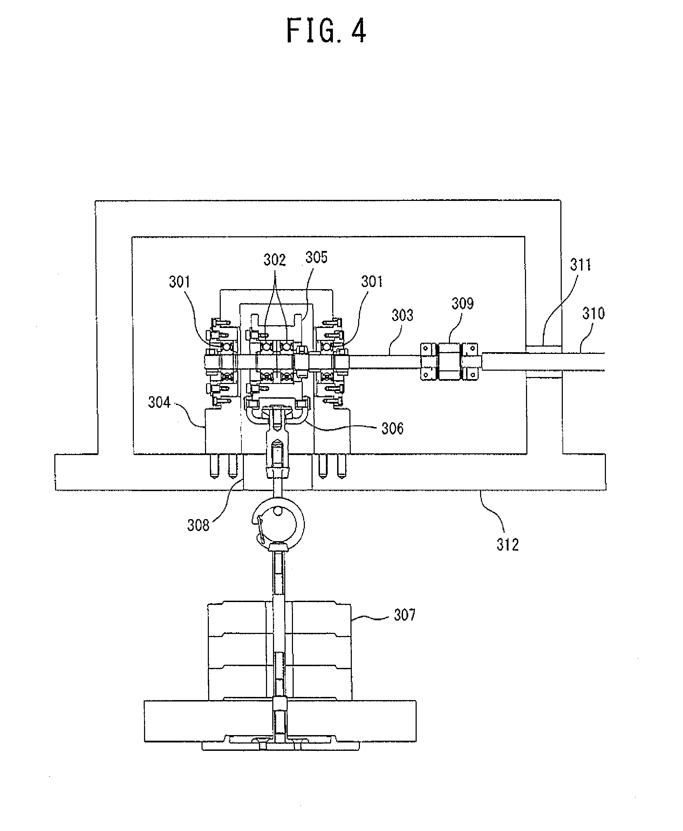

As illustrated in FIG. 4, in the high-temperature-bearing endurance testing device, four bearings are inserted in a shaft 303, the four bearings including two support bearings 302 and 302 on the center and two test bearings 301 and 301 on the outside. The two support bearings 302 and 302 and the two test bearings 301 and 301 have the same model numbers, respectively. Outer rings of the test bearings 301 are supported by a gate-type housing 304 and fixed to the bottom of a thermostatic chamber 312. Outer rings of the support bearings 302 are supported by a support housing 305 such that a radial load is applied to the support bearings 302 by a weight 307 through a bracket 306, in which the weight 307 is suspended across the bottom of the thermostatic chamber 312, and the bracket 306 is attached on the support housing 305. The support bearings 302 are arranged on the intermediate position between the two test bearings 301 and 301 such that a radial load, which is 1/2 of the radial load applied to the support bearings 302, is applied to each of the test bearings 301.. An end of the shaft 303 is connected through a coupling 309 to a rotation introducing shaft 310 which is inserted through a wall surface of the thermostatic chamber 312. When the rotation introducing shaft 310 is rotated by a motor (not illustrated), the test bearing 301 can be rotated. By setting the thermostatic chamber 312 to a predetermined temperature, a bearing rotation endurance test at a constant high temperature can be performed. By monitoring a torque voltage of the motor, an increase in bearing torque caused by a damage of the test bearings 301 is measured, and an endurance test time of the test bearings 301 is measured. The gate-type housing 304 is an integrated component and is prepared by making a cube hollow from the bottom. A hollow hole is connected to a bottom hole of the thermostatic chamber 312 such that cold air is introduced by a blower (not illustrated) from below through the hollow hole to cool the support bearings 302. Therefore, the support bearings 302 are not damaged by the test bearings 301 in an early stage.

In this example, test conditions (measurement conditions) were set as follows.

Shape of self-lubricating composite material inside test bearings: Cylindrical spacer having a size of about $\phi$ 4 mmx3 mm

Bearing inner diameter : $\phi$ 10 mm

Bearing type: Bearing having a shape illustrated in FIG. 1; however, when self-lubricating composite materials are compared to each other, a machined-cage-type (cut-out-cage-type) bearing or a cylindrical-spacer-filling-slot type is used

Radial load: 50 N/1 bearing

Rotating speed: 1000 $\text{min}^{-1}$

Bearing temperature: 400°C

(5) Relationship between Compressive Strength and Bearing Endurance of Self-Lubricating Composite Material

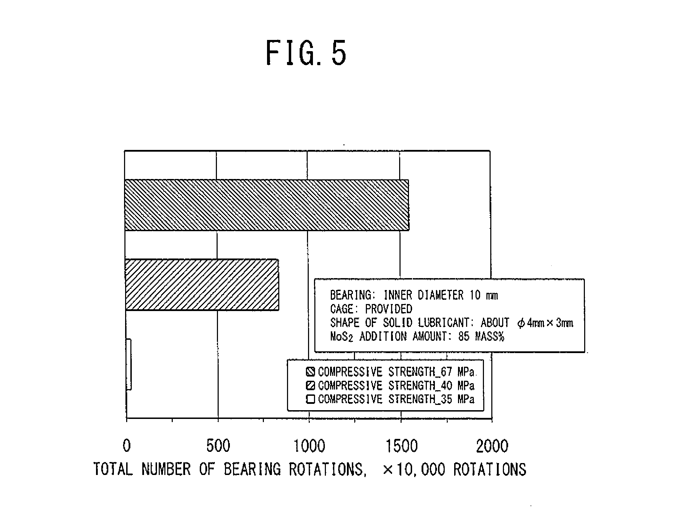

By changing the sintering conditions of Example 1, two kinds of self-lubricating composite materials were formed by sintering. A difference in sintering conditions is that the sintering time of one material is 1/2 that of the other material. A compression test of the sintered self-lubricating composite materials was performed under the same measurement conditions using the compressive strength measuring device illustrated in FIG. 2. As a result, the compressive strength of one material was 40 MPa, and the compressive strength of the other material was 67 MPa. Each material was attached on the bearing having a shape illustrated in FIG. 1, and an endurance test was performed under the same test conditions using the high-temperature-bearing endurance testing device illustrated in FIG. 5. As a result, the service life of the 40-MPa bearing was over at 8,380,000 rotations, and the service life of the 67-MPa bearing was over at 15,500,000 rotations. The results are illustrated in FIG. 5 The damage pattern is a rotation difficulty caused by the clogging of wear debris. By sintering, $MoS_2$ particles bind to each other through reinforcing metals, such as Fe and W, embedded in the grain boundaries. However, when the binding strength is low, that is, when the compressive strength is low, the $MoS_2$ particles easily fall off and are not used for lubrication, and the wear of the self-lubricating composite material advances more than necessary, which brings about the clogging of wear debris in the bearing. Accordingly, with the same composition, the compressive strength has a correlation with the bearing service life: the higher the compressive strength, the longer the bearing life. Accordingly, it is important to increase the compressive strength of the self-lubricating composite material.

Further, a bearing of a self-lubricating composite material having a compressive strength of 35 MPa was prepared to perform the same bearing test. The self-lubricating composite material inside the bearing was cracked in an initial stage at starting rotation, and the bearing was not able to rotate at about 300,000 rotations. As a result, it was found that the compressive strength is required to be higher than or equal to 40 MPa.

(6) Relationship between Additive amount of $MoS_2$ and Compressive Strength of Self-Lubricating Composite Material

When the additive amount of $MoS_2$ which is a major component of a lubricant of the self-lubricating composite material is small, the lubricating performance of the self-lubricating composite material is decreased. Therefore, it is preferable that a large amount of $MoS_2$ be added. However, when the additive amount of $MoS_2$ is greater than 80 mass%, the compressive strength of the self-lubricating composite material is significantly decreased. Accordingly, the upper limit of the additive amount of $MoS_2$ is determined as 80 mass%..

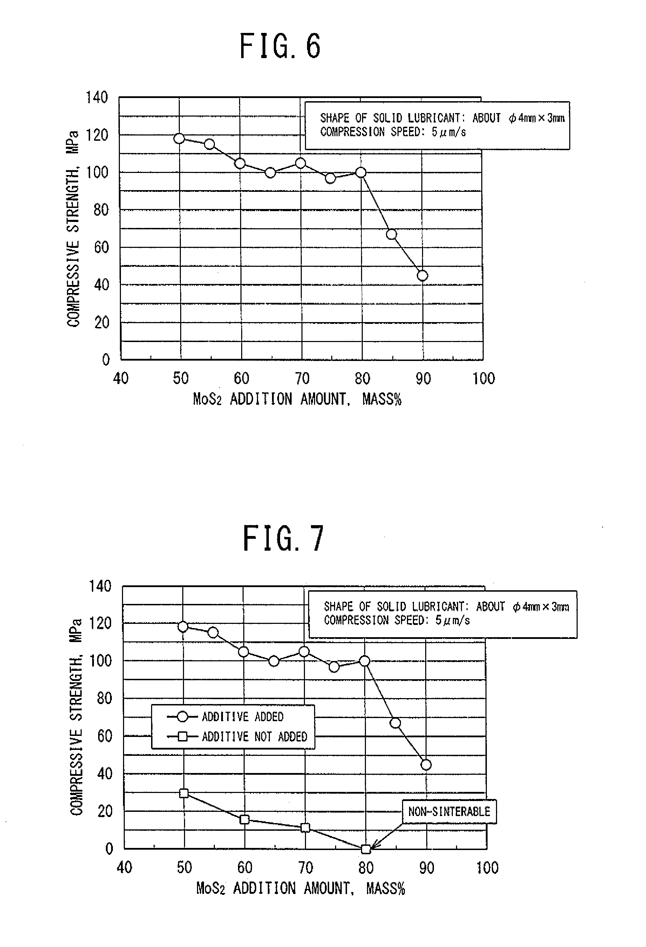

Here, raw material powders were prepared while changing the additive amount of $MoS_2$ from 50 mass% to 90 mass% at intervals of 5 mass%. The prepared raw material powders were sintered under the same conditions, and differences between the compressive strengths of the self-lubricating composite materials were investigated.. As described in Example 1, in the composition mixing ratios, the total mass% of $MoS_2$ and Fe was set to be constant, and the other compositions were the same. Using the compressive strength measuring device illustrated in FIG. 2, the compressive strength was measured. The results are illustrated in FIG. 6. It was found from the results that, when the additive amount of $MoS_2$ is greater than 80 mass%, the compressive strength of the self-lubricating composite material is significantly decreased

In addition, 4.2 mass% of an additive having the following composition was added, and a balance of 95.8 mass% of two major materials containing $MoS_2$ and Fe were mixed with the additive while changing a mixing ratio, and the mixtures were sintered. As a result, self-lubricating composite materials were obtained, and the compressive strengths thereof were measured. In the measurement of the compressive strengths, the shapes of the self-lubricating composite materials were set as a cylindrical shape having a radius of about 4 mm and a length of about 3 mm, and the compression speed was set to 5 $\mu$m/s. The results are illustrated in FIG. 7.

[Composition of Additive]

C: 2.0 mass%, Cu: 0.1 mass%, Ni: 0.1 mass%, W: 2.0 mass% (Total 4.2 mass%)

Likewise, the compressive strengths of self-lubricating composite materials to which the additive was not added at all were measured. The results are illustrated in FIG. 7. In this case, the additive was not added, $MoS_2$ and Fe were mixed with the additive at predetermined ratios, and the mixtures were sintered. As a result, self-lubricating composite materials were obtained, and the compressive strengths thereof were measured. Similarly, in the measurement of the compressive strengths, the shapes of the self-lubricating composite materials were set as a cylindrical shape having a radius of about 4 mm and a length of about 3 mm, and the compression speed was set to 5 $\mu$m/s. As a result, it was found that, when the additive is not added, the compressive strength is significantly decreased; and that, when the additive amount of $MoS_2$ reaches 80 mass%, sintering cannot be performed.

(7) Evaluation of Lubricating Performance

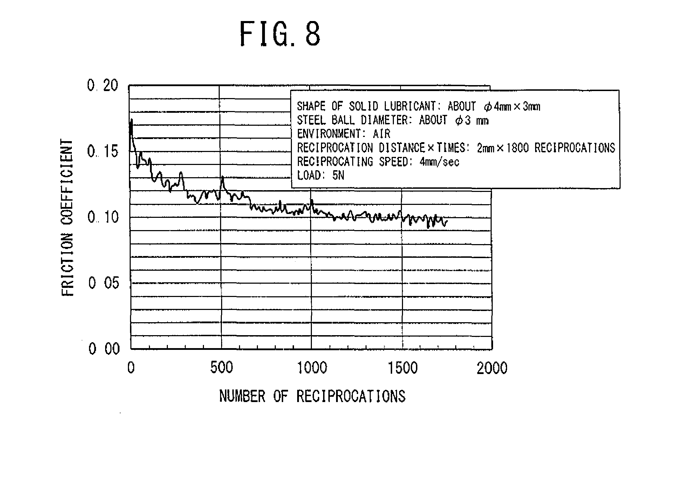

Using the friction and wear measuring device illustrated in FIG 3, the friction coefficient of the self-lubricating composite material of Example 1 was measured to evaluate lubricating performance. The measurement results are illustrated in FIG. 8.

In this measurement, test conditions (measurement conditions) were set as follows

· Shape of sample: Cylindrical spacer having a size of about $\phi$ 4 mm$\times$3 mm
· Ball diameter: About $\phi$ 3 mm
· Environment: Air
· Reciprocation distance$\times$times: 2 mm$\times$1800 reciprocations · Reciprocating speed: 1 reciprocation/sec
· Load: 5 N

(8) Relationship between Additive amount of $MoS_2$ and Friction Coefficient

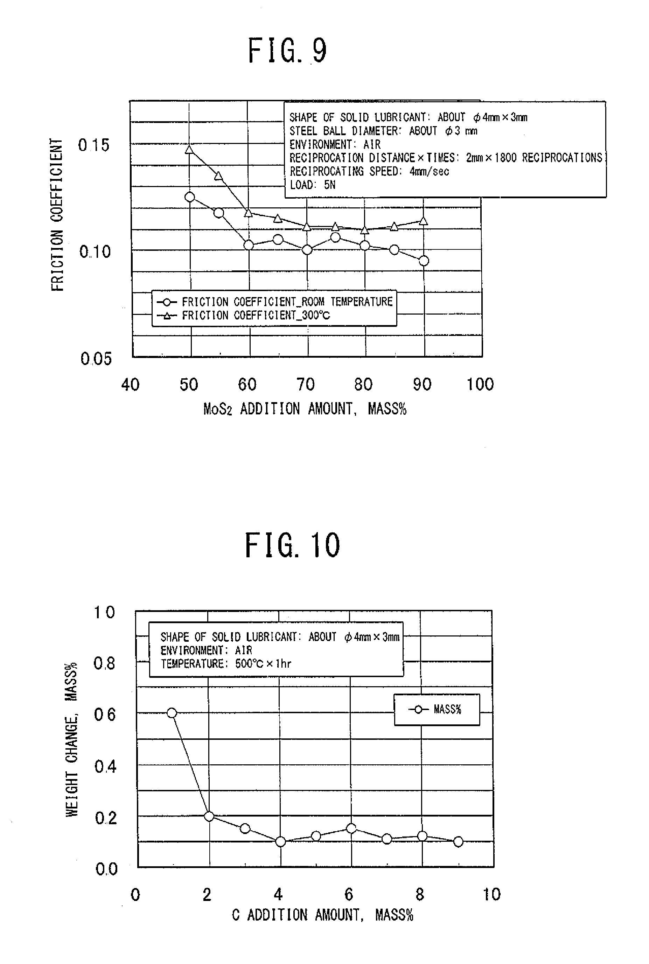

Self-lubricating composite materials were prepared while changing the additive amount of $MoS_2$. Using the friction and wear measuring device illustrated in FIG.. 3, the friction coefficients of the self-lubricating composite materials were measured. The measurement results are illustrated in FIG. 9. As illustrated in FIG. 9, the measurement was performed in two temperature environments of room temperature and 300°C. In both environments, when the additive amount of $MoS_2$ is less than 60 mass%, the friction coefficient is significantly decreased. When the additive amount of $MoS_2$ is greater than or equal to 60 mass%, the friction coefficient is about 0.095 to 0.15 at room temperature and is about 0.11 to 0.12 at 300°C. Accordingly, it is preferable that the additive amount of $MoS_2$ be greater than or equal to 60 mass%.

$MoS_2$ and Fe were mixed in the composition range of Example 1 such that the total mass% thereof was constant. The mixing ratios of the other elements were not changed.

As a result, it was found that, when the additive amount of $MoS_2$ is less than or equal to 60 mass%, the friction coefficient is significantly decreased. This tendency is the same at 300°C.

(9) Weight Change Caused by Oxidation Depending on Additive amount of C

When the additive amount of C was changed in a range of 1 mass% to 9 mass%, the oxidation resistances of the self-lubricating composite materials were investigated. The mixing ratio of each material was in the range defined in Example 1, the total mass% of C and $MoS_2$ was set to be constant, and the amounts of the other elements were not changed Self-lubricating composite materials having different additive amounts of C were exposed to the air and were held at temperatures illustrated in the drawing. Changes in weight before and after the exposure were measured. The measurement results are illustrated in FIG. 10.

As a result, it was found that, when the additive amount of C is less than 2 mass%, the weight is significantly increased. It is determined that this increase in weight is caused by oxidation. Accordingly, it is necessary that the additive amount of C be greater than or equal to 2 mass%. When 2 mass% or greater of C is added, the amount of change in weight is not greatly changed.

In this measurement, measurement conditions were set as follows.

· Shape of sample: Cylindrical spacer having a size of about $\phi$ 4 mm$\times$3 mm
· Number of Samples: 8 samples per composition
· Environment: Air
· Temperature: 500°C (held in a thermostatic chamber) · Holding time: 1 hr
· Weight measurement: Weight changes of all 8 samples before and after the test were obtained and averaged.

As a result, it was found that, when the additive amount of C is less than or equal to 2 mass%, an increase in weight caused by oxidation is significantly large.

(10) Relationship between Additive amount of C and Compressive Strength

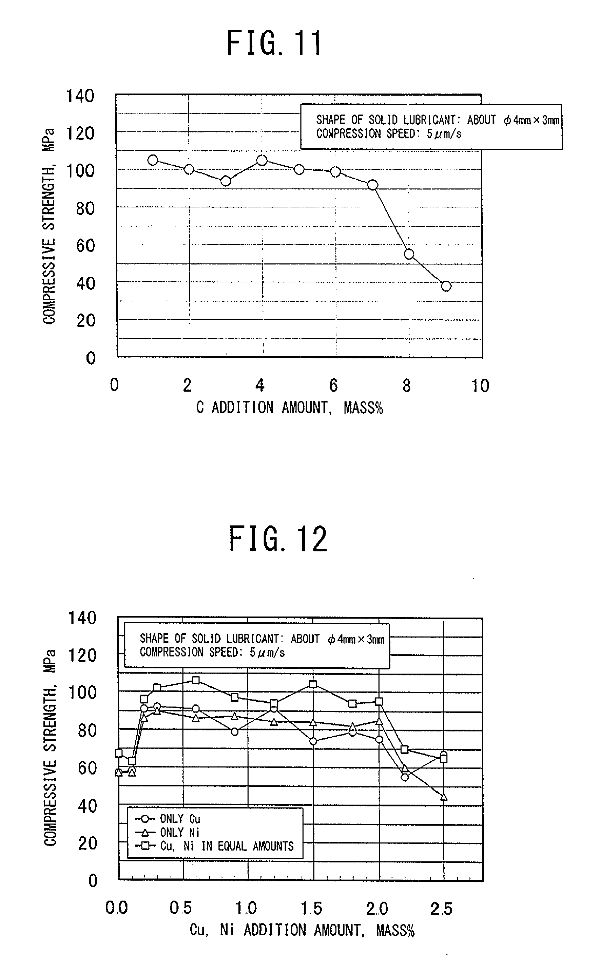

When the additive amount of C was changed in a range of 1 mass% to 9 mass%, the compressive strengths of the self-lubricating composite materials were investigated. The mixing ratio of each material was in the range defined in Example 1, the total mass% of C and $MoS_2$ was set to be constant, and the amounts of the other elements were not changed. Using the compressive strength measuring device illustrated in FIG. 2, the compressive strengths were measured under the same measurement conditions. The measurement results are illustrated in FIG. 11.

As a result, it was found that, when the additive amount of C is greater than 7 mass%, the compressive strength is significantly decreased. Accordingly, it is necessary that the additive amount of C be less than or equal to 7 mass% The compressive strength in a range of 7 mass% or less is not greatly changed.

Accordingly, when this result and the result of the weight changed caused by oxidation depending on the amount of C are taken into consideration together, it is necessary that the amount of C be 2 mass% to 7 mass%.

As a result, it was found, when the additive amount of C is greater than or equal to 7 mass%, the compressive strength is significantly decreased.

(11) Relationship between Additive amount of Cu and Ni and Compressive Strength

When the additive amount of C was changed in a range of 0 mass% to 2.5 mass%, the compressive strengths of the self-lubricating composite materials were investigated. The mixing ratio of each material was in the range defined in Example 1, the total mass% of C and $MoS_2$ was set to be constant, and the amounts of the other elements were not changed Using the compressive strength measuring device illustrated in FIG. 2, the compressive strengths were measured under the same measurement conditions. The measurement results are illustrated in FIG. 12.

As a result, it was found that, when the additive amount of Cu is out of a range of 0.1 mass% to 2 mass%, the compressive strength is significantly decreased. Accordingly, it is necessary that the additive amount of Cu be in a range of 0.1 mass% to 2 mass%. The compressive strength in this range is not greatly changed.

Regarding Ni, the same investigation was performed. The range of the additive amount is the same as that of Cu. As a result, substantially the same results as those of Cu were obtained. Accordingly, it is necessary that the additive amount of Ni be in a range of 0.1 mass% to 2 mass%. The compressive strength in this range is not greatly changed.

Further, regarding the total additive amount of Cu and Ni which were added in equal amounts, the same investigation was performed. As a result, it was found that, similarly to the cases of Cu alone and Ni alone, the compressive strength in a range of 0.1 mass% to 2 mass% is increased. Further, the compressive strength value is higher than those of the case where Cu alone is added and the case where Ni alone is added. Accordingly, when Cu and Ni are added in the same amount such that the total amount thereof is in a range of 0.1 mass% to 2 mass%, the compressive strength can be further increased. Differences between the compressive strengths in the range are small.

As a result, when 0.1 mass% to 2 mass% of Cu and Ni are added, the compressive strength is increased. It was found that, when the additive amount is out of the range, the compressive strength is significantly decreased. In addition, it was found that, when both Cu and Ni are added in the range in equal amounts, the compressive strength is further greatly changed. When the additive amount is out of the range, the compressive strength is significantly decreased, which is the same as above.

[Relationship between Additive amount of Cu and N and Bearing. Endurance Performance]

In the embodiment, in a case where 0.1 mass% to 1.8 mass% of Cu and Ni are added, the endurance performance of a bearing is increased as compared to a case where 2.0 mass% of Cu and Ni are added. Therefore, from the viewpoint of the compressive strength, the additive amount of Cu and Ni is defined to be 0.1 mass% to 2.0 mass% but is preferably in a range of 0.1 mass% to 1.8 mass%.

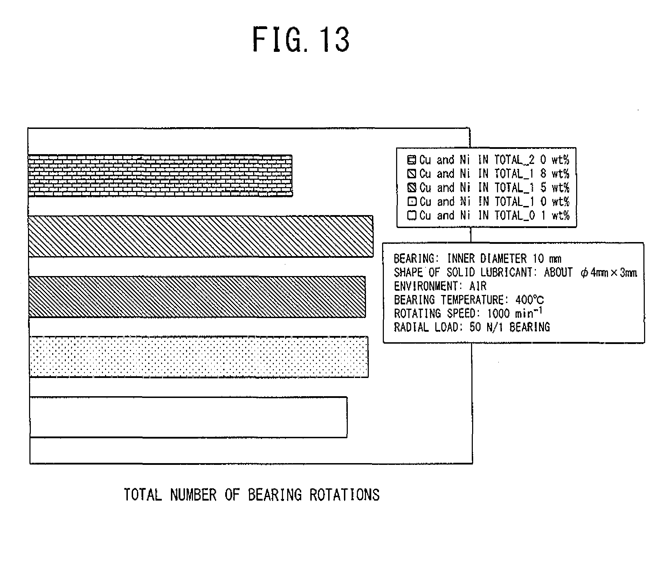

In order to verify this range, self-lubricating composite materials were prepared while changing the total additive amount of Cu and Ni (both elements were added in equal amounts) in a range from 0.1 mass% to 2.0 mass%, bearings having a shape illustrated in FIG. 1 were prepared using the self-lubricating composite materials, and the endurance performances of the bearings were measured. The results are illustrated in FIG. 13.

In this test, regarding the mixing ratio of each material, the content of $MoS_2$ was 60 mass% to 80 mass%, the total content of Cu and Ni was 0.1 mass% to 2 mass%, and a balance contained Fe, in which the total mass% of C and $MoS_2$ was constant, and the amounts of the other elements were not changed. In addition, when the total additive amount of Cu and Ni was less than 0.1 mass% or was greater than 2.0 mass%, a bearing endurance performance test was not performed.

In this measurement, test conditions (measurement conditions) were set as follows.

Shape of self-lubricating composite material inside test bearings: Cylindrical spacer having a size of about $\phi$ 4 mm $\times$ 3 mm

· Bearing inner diameter: $\phi$ 10 mm

Bearing type: Bearing having a shape illustrated in FIG. 1

· Radial load: 50 N/l bearing

· Rotating speed: 1000 min$^{-1}$

· Bearing temperature: 400°C

· Environment: Air

It was found that, as illustrated in FIG 13, when the total additive amount of Cu and Ni is in a range of 0.1 mass% to 1.8 mass%, a large difference in endurance performance (total number of bearing rotations; values are not illustrated) is not shown; and when the total additive amount of Cu and Ni is 2.0 mass%, endurance performance is slightly low.

Even when the total additive amount of Cu and Ni is 2.0 mass%, it is determined that the bearing has sufficient endurance performance. Therefore, the total additive amount of Cu and Ni is defined to be 0.1 mass% to 2.0 mass% and is preferably defined to be 0.1 mass% to 18 mass%.

(12) Depth of Wear of Sample After Friction Test

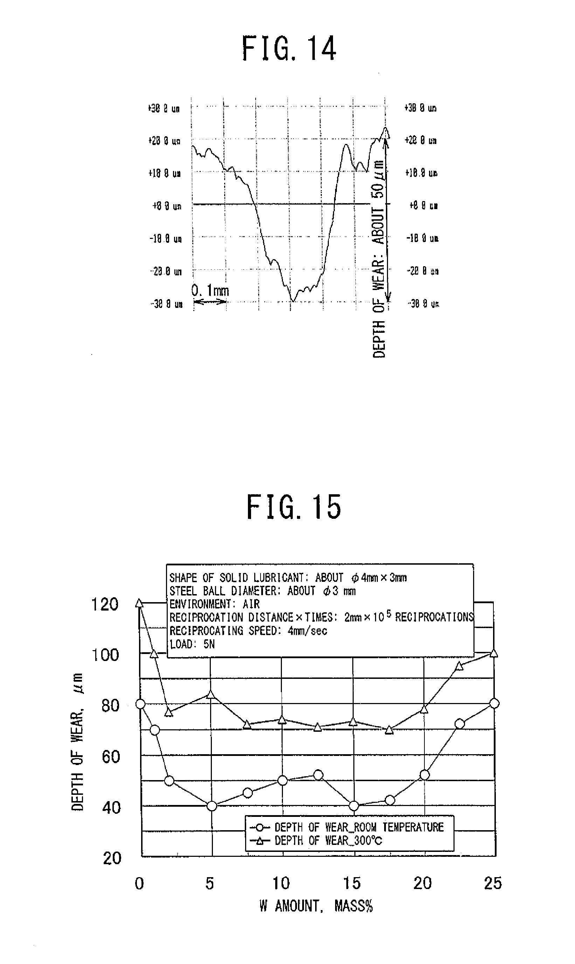

When a friction test is performed using the friction and wear measuring device illustrated in FIG.. 3, a region on which a ball slides is worn in a boat shape (refer to FIG. 14) The shape of the center of a sample in a cross-sectional direction of the boat shape is measured to obtain the depth of wear. Based on values of this measurement, the sizes of the wear amounts of samples can be compared to each other The length of the boat shape in the cross-sectional direction is about 0.6 mm.

As a result, it was found that an end surface of a sample after the friction test is worn, and the size of the wear amount can be represented by the depth of wear of the center of the end surface.

(13) Relationship between Additive amount of W and Depth of Wear

While changing the additive amount of W in a range of 0 mass% to 25 mass%, differences between the depths of wear of self-lubricating composite materials after the friction test were investigated. The mixing ratios of added materials were in the ranges defined in Example 1, and the total additive amount of W and $MoS_2$ was set to be constant. The other elements had the same compositions as those of Example 1. It was confirmed from this result that, as illustrated in FIG. 15, when the total additive amount of W and $MoS_2$ is in a range of 2 mass% to 20 mass%, the depth of wear is decreased.. When the total additive amount is out of the range, the depth of wear is significantly increased. Accordingly, in order to improve the wear resistance of the self-lubricating composite material, it is necessary that 2 mass% to 20 mass% of W be added.. In addition, when the same test was performed at 300°C, the depth of wear was relatively increased compared to that at room temperature. However, it was found that, when the total additive amount is in a range of 2 mass% to 20 mass%, the depth of wear is decreased. There is no significant difference between the depths of wear in the above-described additive amount range at room temperature and at 300°C. The addition of 2 mass% to 20 mass% of W is effective for improving wear resistance in a range from room temperature to a high temperature.

In this measurement, test conditions (measurement conditions) were set as follows..

· Shape of sample: Cylindrical spacer having a size of about $\phi$ 4 mm×3 mm
· Ball diameter: About 3 mm
· Environment: Air
· Reciprocation distance×times: 2 mm×$10^5$ times
· Reciprocating speed: 1 reciprocation/sec
· Load: 5 N
· Temperature: Room temperature and 300°C
As a result, it was found that, when 2 mass% to 20 mass% of W is added, the wear resistance of the self-lubricating composite material can be increased.

(14) Relationship between Additive amount of W and Compressive Strength

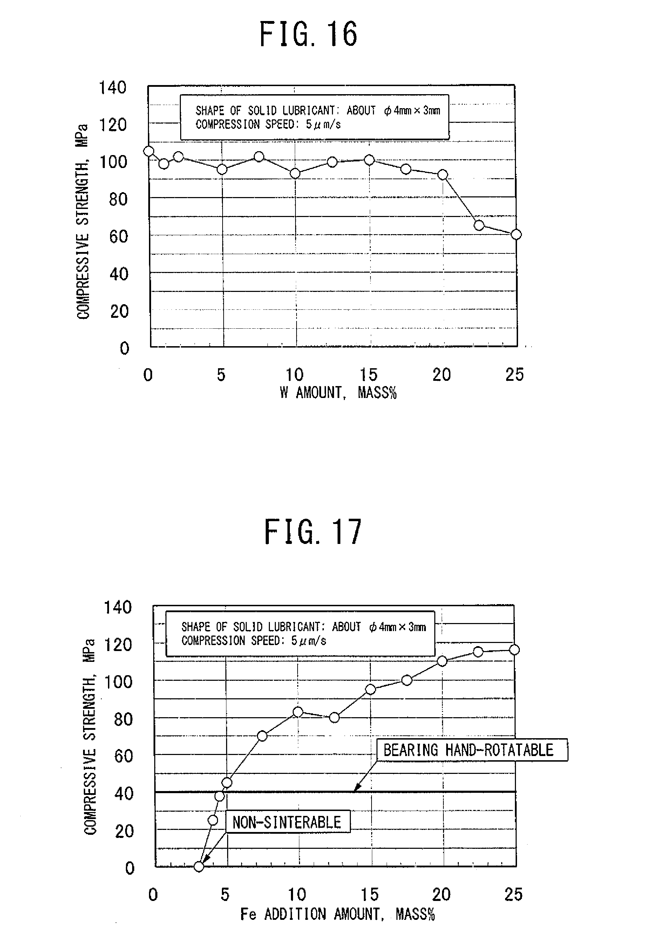

While changing the additive amount of W in a range of 0 mass% to 25 mass%, differences between the compressive strengths were investigated. The mixing ratios of added materials were in the ranges defined in Example 1, and the total additive amount of W and $MoS_2$ was set to be constant. The other elements had the same compositions as those of Example 1. It was confirmed from this result that, as illustrated in FIG. 16, when the additive amount of W is greater than 20 mass%, the compressive strength is decreased Accordingly, it is necessary that the additive amount of W be less than or equal to 20 mass%. When the additive amount of W is less than or equal to 20 mass%, there is no significant difference in compressive strength

When this result and the test result in which wear resistance is improved in an additive amount range of W of 2 mass% to 20 mass% are taken into consideration together, a self-lubricating composite material having high wear resistance and high compressive strength is obtained in an additive amount range of W of 2 mass% to 20 mass%.

In this measurement, test conditions (measurement conditions) were set as follows.

· Shape of sample: Cylindrical spacer having a size of about $\phi$ 4 mm$\times$3 mm
· Ball diameter: About 3 mm
· Environment: Air
· Reciprocation distance$\times$times: 2 mm$\times10^5$ times
· Reciprocating speed: 1 reciprocation/sec
· Load: 5 N
· Temperature: Room temperature

As a result, it was found that, when 2 mass% to 20 mass% of W is added, the wear resistance of the self-lubricating composite material can be increased.

(15) Relationship between Additive amount of Fe and compressive Strength

While changing the additive amount of Fe in a range of 0 mass% to 25 mass%, differences between the compressive strengths were investigated. The mixing ratios of added materials were in the ranges defined in Example 1, and the total additive amount of Fe and $MoS_2$ was set to be constant. The other elements had the same compositions as those of Example 1.
The result was that, as illustrated in FIG. 17, when the additive amount of Fe was less than or equal to 3 mass%, particles did not bind to each other, and sintering was not able to be performed. In addition, using a sample having an additive amount of Fe of 4 mass% or greater, a cylindrical self-lubricating composite material was embedded in a bearing to obtain an assembly, and the rotating property of the bearing was investigated by hand rotation. As a result, it was found that, when the compressive strength is lower than or equal to 40 MPa, the self-lubricating composite material is broken after about 300,000 rotations from the start of rotation, clogging occurs in the bearing, and the bearing is not rotatable. That is, a material having a compressive strength of 40 MPa or lower cannot be used as the self-lubricating composite material to be embedded in the bearing. When the additive amount of Fe is greater than 5 mass%, the compressive strength is higher than or equal to 40 MPa. As the additive amount of Fe is increased, the compressive strength is substantially monotonically increased. Accordingly, when a self-lubricating composite material is embedded in a bearing to be used, it is necessary that the additive amount of Fe be greater than or equal to 5 mass%.
In this test, test conditions (measurement conditions) were set as follows.

Shape of self-lubricating composite material inside test bearings: Cylindrical spacer having a size of about $\phi$ 4 mmx3 mm
· Bearing inner diameter: $\phi$ 10 mm
· Bearing type: Bearing having a shape illustrated in FIG. 1
Hand rotation method: After supporting a bearing by passing a shaft through an inner shaft, an outer ring is rotated with a finger tip from above to below such that an initial rotation speed is about 300 min$^{-1}$ to 500 min$^{-1}$
Compression speed: 5 $\mu$m/s
Number of samples: 3 (average value was adopted)

As a result, it was found that, when 5 mass% to 25 mass% of Fe is added, a compressive strength capable of embedding a self-lubricating composite material in a bearing is obtained.

(16) Relationship between Additive amount of Fe and Friction Coefficient

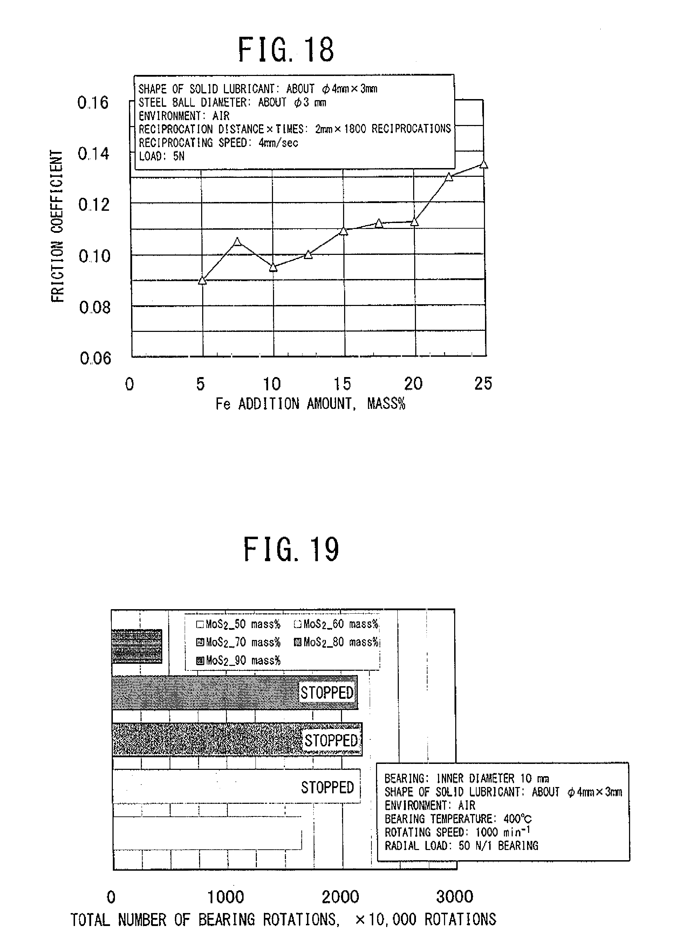

While changing the additive amount of Fe in a range of 5 mass% to 25 mass%, changes in friction coefficient were investigated. The mixing ratios of added materials were in the ranges defined in Example 1, and the total additive amount of Fe and $MoS_2$ was set to be constant. The other elements had the same compositions as those of Example 1. When the additive amount of Fe was less than or equal to 5 mass%, a compressive strength of 40 MPa or higher was not able to be obtained, and thus the test was not performed.
As a result, as illustrated in FIG. 18, as the additive amount of Fe is increased, the friction coefficient tends to be increased. When the additive amount of Fe is greater than 20 mass%, the friction coefficient is significantly increased. Accordingly, it is necessary that the additive amount of Fe be less than or equal to 20 masss %. When this result and the compressive strength measurement result are taken into consideration together, it is preferable that the additive amount of Fe be 5 mass% to 20 mass%.
In this test, test conditions (measurement conditions) were set as follows.

Shape of sample: Cylindrical spacer having a size of about $\phi$ 4 mm$\times$3 mm
Compression speed: 5 $\mu$m/s

Number of samples: 3 (average value was adopted)

Accordingly, when 5 mass% to 25 mass% of Fe is added, the friction coefficient of the self-lubricating composite material is substantially monotonically increased. When the additive amount of Fe is greater than 20 mass%, the friction coefficient is significantly increased. When this result and the compressive strength measurement result are taken into consideration together, it is preferable that the additive amount of Fe be 5 mass% to 20 mass%.

(17) Endurance Performance

Self-lubricating composite materials were prepared while changing the additive amount of $MoS_2$ in a range of 50 mass% to 90 mass%. Using bearings in which the self-lubricating composite materials were embedded, the endurance performance was investigated. The mixing ratios of added materials were in the ranges defined in Example 1, and the total additive amount of Fe and $MoS_2$ was set to be constant. The other elements had the same compositions as those of Example 1.

As a result, as illustrated in FIG. 19, when the additive amount of $MoS_2$ was 60 mass% to 80 mass%, the test of the bearing was stopped at a total number of rotations of more than 20,000,000. When the additive amount of $MoS_2$ was 50 mass%, the bearing service life was over at 16,400,000 rotations, and when the additive amount of $MoS_2$ was 90 mass%, the bearing service life was over at 4,400,000 rotations. That is, the bearing life time was significantly decreased. Accordingly, when a self-lubricating composite material is embedded in a bearing, it is preferable that the additive amount of $MoS_2$ be 60 mass% to 80 mass%.

In this measurement, test conditions (measurement conditions) were set as follows.

· Shape of self-lubricating composite material inside test. bearings: Cylindrical spacer having a size of about $\phi$ 4 mm$\times$3 mm
· Bearing inner diameter: $\phi$ 10 mm
· Bearing type: Bearing having a shape illustrated in FIG. 1
· Radial load: 50 N/l bearing
· Rotating speed: 1000 min$^{-1}$
· Bearing temperature: 400°C
· Environment: Air

Accordingly, it was found that, when the additive amount of $MoS_2$ is 60 mass% to 80 mass%, the endurance performance of a bearing embedded with a self-lubricating composite material is increased.

(18) Measurement of Sliding Friction Coefficients on Outer Ring and Inner Ring at High Temperature

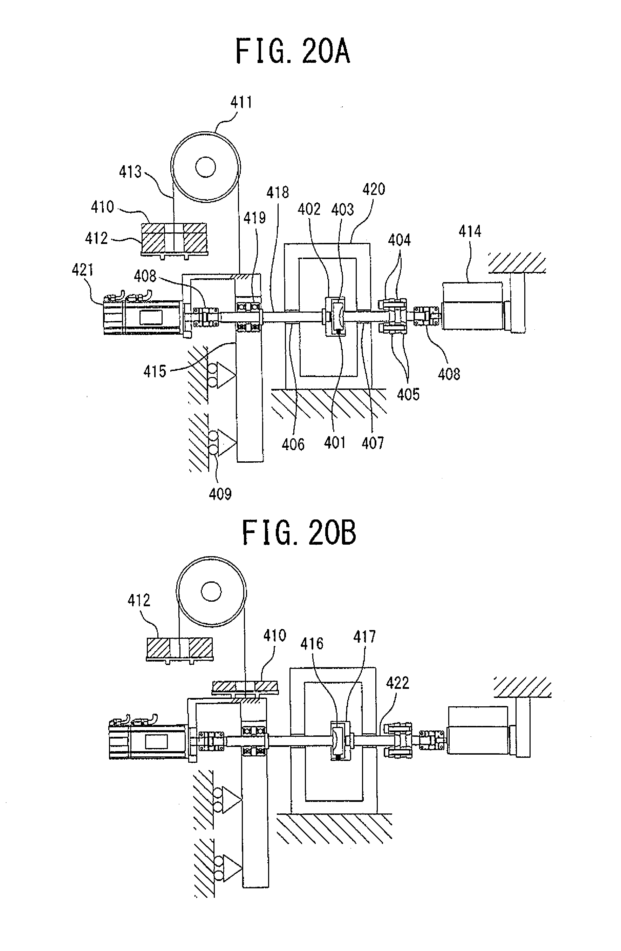

Using a high-temperature-outer-and-inner-ring-rotation-friction coefficient measuring device illustrated in FIGS. 20A and 20B, the sliding friction coefficients of a cylindrical self-lubricating composite material on an outer ring and an inner ring at a high temperature were measured in the following manner. This high-temperature-outer-and-inner-ring-rotation friction coefficient measuring device can measure the sliding friction resistances of both the outer ring rotation and the inner ring rotation by replacing a shaft. FIG.. 20A is a front view when an outer ring rotation test is performed using the high-temperature-outer-and-inner-ring-rotation friction coefficient measuring device, and FIG. 20B is a front view when an inner ring rotation test is performed using the high-temperature-outer-and-inner-ring-rotation-friction coefficient measuring device.

First, referring to FIG. 20A, the friction resistance measurement of the outer ring rotation using the high-temperature-outer-and-inner-ring-rotation friction coefficient measuring device will be described.

As illustrated in FIG. 20A, an outer ring rotation driving shaft (hereinafter, driving shaft) 418 is rotatably connected to a motor 421.

A tip end of the driving shaft 418 is introduced into a thermostatic chamber 420 from a driving shaft introducing hole 406 formed through a wall surface of the thermostatic chamber 420.

The driving shaft introducing hole 406 is formed to be slightly larger than the diameter of the driving shaft 418, and both components are in contact with each other.

On the tip end of the driving shaft 418, an outer ring rotation sliding cup 402 having a U-shaped cross-section is coaxially attached.

The driving shaft 418 is supported by a driving shaft support bearing 419 arranged outside the thermostatic chamber 420 The driving shaft support bearing 419 is housed and supported in a driving bearing housing 415 and is cooled by a cooling fan (not illustrated). Therefore, even when the driving shaft 418 is heated, the bearing temperature is decreased such that the endurance performance of the bearing is not decreased.

The outer ring rotation sliding cup 402 (hereinafter, cup) is made of SUS440C (quenched and tempered product), and an inner circumference thereof is polished and super-finished such that the surface roughness is less than or equal to 0.1 μmRa.

A cylindrical sample (lubricating material in this example; hereinafter sample) 401 is in contact with the lowest position of the inner circumference of the outer ring rotation sliding cup 402 such that both are parallel to the shaft. That is, the inner circumferential surface of the cup 402 is in contact with an outer circumference of the sample 401 on a single line.

The sample 401 is fitted into a cylindrical fitting hole having the same diameter as that of the sample 401 so as not to fall off from an outer ring co-rotating shaft (hereinafter, co-rotating shaft) 403, in which the fitting hole is provided on an outer circumferential portion of the co-rotating shaft 403.

The co-rotating shaft 403 is introduced into the thermostatic chamber 420 from a co-rotating introducing hole 407 of the thermostatic chamber 420, and another shaft end portion arranged outside the thermostatic chamber 420 has a flange shape (shaft binding flange 405).

The other end of the shaft binding flange 405 has a shaft shape and forms a shaft end of the co-rotating shaft 403 integrated with the shaft binding flange 405.

A shaft fixing type torque meter 414 is connected to a shaft end of the co-rotating shaft 403 such that the axial force (torque) of the co-rotating shaft 403 can be measured.

Two shaft binding flanges 405 and 405 are coaxially and integrally fastened through an insulating ceramic sleeve (hereinafter, insulating sleeve) 404. Both fastened flanges 405 and 405 are cooled by a cooling fan (not illustrated) A screw for fastening both flanges 405 and 405 has a structure in contact with only one flange 405 through plural insulating sleeves 404. Therefore, heat conduction through the screw is decreased to the minimum. Therefore, even when the co-rotating shaft 403 is heated and the temperature thereof is increased, heat conduction to the torque meter 414 is suppressed. As a result, the torque meter 414 is prevented from being broken by heat.

A coupling 408 for connecting the torque meter 414 and the co-rotating shaft 403 to each other is a rigid coupling. Thus, there is no case where the coupling 408 is bent to bend the co-rotating shaft 403.

The driving bearing housing 415 is integrated with a linear motion support device 409 and linearly moves only in a vertical direction along with the driving shaft 418. The motor 421 is supported by a bracket integrated with the driving bearing housing 415.

The driving shaft 418 linearly moves downward due to the weight of components connected to the driving shaft 418, such as the driving shaft support bearing 419, the driving bearing housing 415, and the motor 421. If the sample 401 and the co-rotating shaft 403 are not inserted into the cup 402, the driving shaft 418 comes into contact with the driving shaft introducing hole 406 and is stopped. In this case, the weight can be cancelled by changing a direction of a weight pulling wire 413, which is connected to an upper portion of the driving bearing housing 415, with a pulley 411 and connecting a weight compensating weight 412 to an end of the wire 413. Therefore, the driving shaft 418 can be stopped at any position in the vertical direction and can also be positioned in the middle of the driving shaft introducing hole 406.

When a test load weight 410 is additionally loaded on the weight compensating weight 412 in a state where the driving shaft 418 is vertically balanced and stopped, the driving shaft 418 moves upward and stops in contact with the driving shaft introducing hole 406. At this time, a radial load applied to the driving shaft introducing hole 406 is the load of the additionally loaded test load weight 410. At this time, if the co-rotating shaft 403 holding the sample 401 is inserted into the cup 402, the driving shaft 418 is in contact with the sample 401. Therefore, while maintaining its position, the sample 401 is applied with the same radial load as that of the test load weight 410. When the motor 421 is rotated in a state where this positional relationship is maintained, the cup 402 rotates around the co-rotating shaft 403 while sliding on the sample 401. At this time, a dynamic friction force is generated between sliding surfaces of the sample 401 and the cup 402, an axial force to co-rotate the co-rotating shaft 403 is generated, and this force is measured by the torque meter 414.. Based on this measured value and the radial load, a friction coefficient under the test conditions can be obtained. The temperature of the thermostatic chamber 420 is set to a test condition temperature, and the sample is sufficiently held at this temperature Next, the motor 421 is rotated, and a friction coefficient at the setting temperature is obtained.. At this time, the obtained friction coefficient represents the friction coefficient when a ring of the outer ring rotation slides on the sample 401.

Next, referring to FIG. 20B, the friction resistance measurement of the inner ring rotation using the high-temperature-outer-and-inner-ring-rotation friction coefficient measuring device will be described.

The major configuration of the high-temperature-outer-and-inner-ring-rotation friction coefficient measuring device is the same as that of the device of the outer ring rotation test, except that the driving shaft is changed to an inner ring rotating sliding shaft (hereinafter, sliding shaft) 416; the sample 401 is arranged such that an axis thereof is parallel to the sliding shaft 416; and an outer diameter surface of the sample 401 is linearly in contact with the lowest position of the sliding shaft 416.

The sample 401 is attached on an inner ring rotation co-rotating cup (hereinafter, co-rotating cup) 417 and, as in the case of the outer ring rotation test, does not fall off.

In the case of the inner ring rotation test, the sliding shaft 416 can also be stopped at any position in the vertical direction by connecting the weight compensating weight 410 to an end of the wire through the pulley 411. In this state, the sliding shaft 416 is covered with the co-rotating cup 417 to be in contact with the sample 401. Further, when the test load weight 410 is loaded on the upper portion of the driving bearing housing 415, a radial load is applied to the sample 401 through the sliding shaft 416.

When the motor 421 is rotated, the sliding shaft 416 is rotated while sliding on the sample 401 in the co-rotating cup 417, and an axial force is generated on a co-rotating shaft 422. This test is the same as that of the outer ring rotation test, in that the axial force is measured by the torque meter 414 and is converted into a friction coefficient under a predetermined test load.

The thermostatic chamber 420 is set to a test temperature, and the sample is sufficiently held at this temperature such that the temperature thereof reaches the setting temperature. Then, when the rotation starts, a friction coefficient at this temperature is obtained.

The friction coefficient value obtained by the testing machine of FIG. 20B (high-temperature-outer-and-inner-ring-rotation friction coefficient measuring device) represents the friction coefficient when the shaft in contact with the sample 401 rotates (inner ring rotation)

In this example, test conditions (measurement conditions) were set as follows.

· Shape of self-lubricating composite material (shape of sample): Cylindrical spacer having a size of about $\phi$ 4 mm$\times$3 mm
· During outer ring rotation test
· Inner diameter of sliding cup: $\phi$ 30 mm
· Outer diameter of co-rotating shaft: $\phi$ 28 mm
· During inner ring rotation test
· Outer diameter of sliding shaft: $\phi$ 30 mm
· Inner diameter of co-rotating cup: $\phi$ 32 mm
(During both the outer ring rotation test and the inner ring rotation test, the diameter of a sliding surface was set to $\phi$ 30)
· Radial load: 5 N
· Rotating speed: 60 min$^{-1}$, 360 min$^{-1}$
· Bearing temperature: 300°C

(19) Evaluation of Lubricating Performance

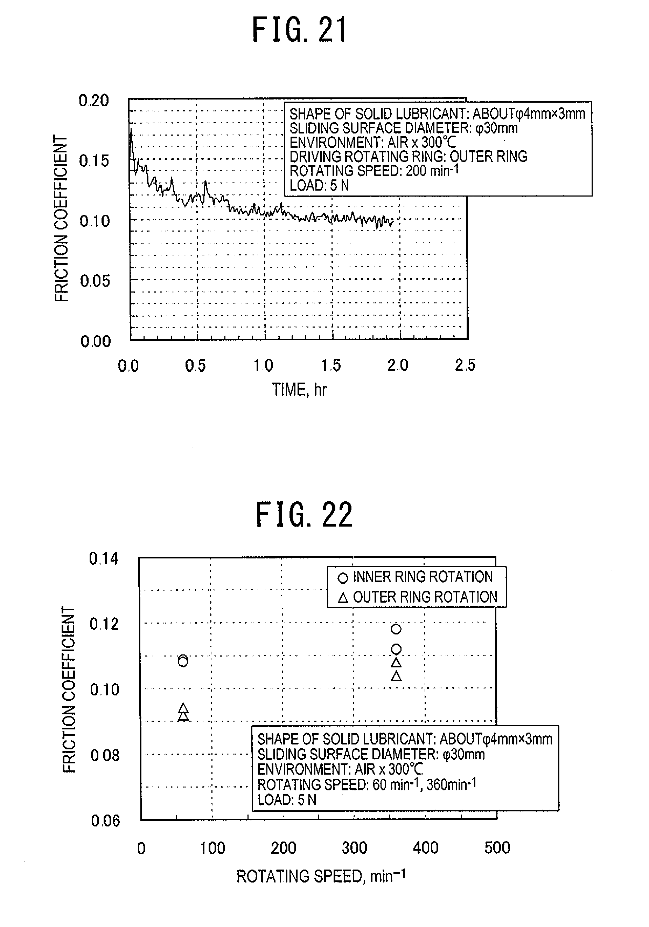

Using the high-temperature-outer-and-inner-ring-rotation-friction coefficient measuring device illustrated in FIG 20A, the friction coefficient of the self-lubricating composite material of Example 1 was measured to evaluate lubricating performance. The measurement results are illustrated in FIG. 21.. FIG. 21 illustrates a temporal change in friction coefficient for about 2 hours after starting the evaluation.

In this measurement, test conditions (measurement conditions) were set as follows.

· Shape of sample: Cylindrical spacer having a size of about $\phi$ 4 mm$\times$3 mm
· Diameter of sliding surface: About $\phi$ 30 mm
· Environment: Air and 300°C
· Rotating ring: Outer ring
· Rotating speed: 200 min$^{-1}$
· Radial load: 5 N

(20) Relationship between Rotating Ring and Friction Coefficient

A relationship between a rotating ring and a friction coefficient was investigated using the high-temperature-outer-and-inner-ring-rotation-friction coefficient measuring device under the above-described measurement conditions.

As a result, under environment conditions of the air and 300°C, the friction coefficient of the outer ring rotation (while the ring is rotated, a sliding surface is an inner diameter surface of the ring) is smaller at the same rotating speed. In addition, when the friction coefficient values of the outer ring rotation and the inner ring rotation at a rotating speed of 60 min$^{-1}$ are compared to those of 360 min$^{-1}$, a difference between the friction coefficient values at a rotating speed of 60 min$^{-1}$ is larger. That is, under conditions of 300°C, the outer ring rotation, and 60 min$^{-1}$, the friction coefficient is the smallest. Accordingly, it can be said that the lubricating performance of the self-lubricating composite material of this example is exhibited particularly under conditions of an environment temperature of about 300°C, the outer ring rotation, and a rotating speed of about 60 min$^{-1}$. Therefore, it is preferable that the self-lubricating composite material of this example be used in, for example, a tenter clip bearing.

(21) Verification of Endurance Performance of Bearing During Outer Ring Rotation at High Temperature

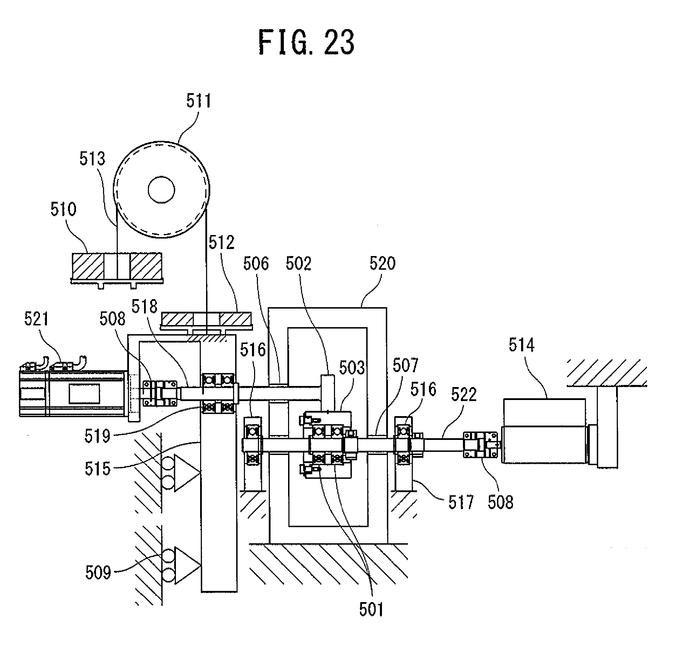

Using a high-temperatuxe-outer-ring-rotation-bearing endurance testing device illustrated in FIG. 23, the endurance performance of a bearing during the outer ring rotation at a high temperature was verified in the following manner. In the high-temperature-outer-ring-rotation-bearing endurance testing device illustrated in FIG. 23, a loading device portion of applying a radial load to the test bearings is substantially the same as a radial load loading device 400 of the high-temperature-outer-and-inner-ring-rotation friction coefficient measuring device illustrated in FIG. 20B.

First, the radial load loading device will be described..

A driving bearing housing 515 is integrated with a linear motion support device 509 and linearly moves only in a vertical direction along with a driving shaft 502 (outer ring rotation driving shaft). A motor 521 is supported by a bracket integrated with the driving bearing housing 515.

The driving shaft 502 linearly moves downward due to the weight of components connected to the driving shaft 502, such as a driving shaft support bearing 519, the driving bearing housing 515, and the motor 521. If test bearings 501 and an outer ring outer cover 503 are loaded in a cup, the driving shaft 502 comes into contact with a driving shaft introducing hole 506 and is stopped. In this case, the weight can be cancelled by changing a direction of a weight pulling wire 513, which is connected to an upper portion of the driving bearing housing 515, with a pulley 511 and connecting a weight compensating weight 512 to an end of the wire 513.

Therefore, the driving shaft 502 can be stopped at any position in the vertical direction and can also be positioned in the middle of the driving shaft introducing hole 506.. When a test load weight 510 is additionally loaded on the upper portion of the driving bearing housing 515 in a state where the driving shaft 502 is vertically balanced and stopped, the driving shaft 502 moves downward and stops in contact with the driving shaft introducing hole 506. At this time, a radial load applied to the driving shaft introducing hole 506 is the load of the additionally loaded test load weight 510. On a shaft end of the driving shaft 502, a flange is provided. When this flange collides with the outer ring outer cover 503 described below before the driving shaft 502 collides with the inner diameter surface of the driving shaft introducing hole 506, a radial load is applied to the outer ring outer cover 503 in a downward direction.

Next, the test bearings 501 and peripheral portions thereof will be described. The test bearings 501 are configured by the same kind of two bearings, and outer rings thereof are fitted to the outer ring outer cover 503. The test bearings 501 are arranged in the center of the thermostatic chamber 520. An inner ring co-rotating shaft 522 is fitted to outer rings of the test bearings 501. Both ends of the co-rotating shaft 522 pass through co-rotating introducing holes 507, which are provided through walls of the thermostatic chamber 520, and protrude to the outside of the thermostatic chamber 520, respectively. In the vicinity of both ends of the co-rotating shaft 522, co-rotating shaft support bearings are fitted thereto and are embedded in co-rotating shaft support bearing housings such that the co-rotating shaft 522 is supported outside the thermostatic chamber 520.

Here, when the outer ring outer cover 503 is rotated, the outer rings of the sample bearings 501 rotate, and the inner rings thereof co-rotate. At this time, when a dynamic friction torque value of the co-rotating shaft support bearings (two in total) is less than a dynamic friction torque value of the test bearings 501 (two in total), the co-rotating shaft 522 rotates (co-rotates). A difference between the dynamic friction torque values is measured by a torque meter connected to the co-rotating shaft.

In a state where the mass of the outer ring rotation driving shaft 502 and peripheral portions thereof is cancelled (in a state where the weight compensating weight is loaded), the driving shaft 502 is vertically adjusted so as not to come into contact with the inner diameter surface of the driving shaft introducing hole 506. A flange on a shaft end of the driving shaft 502 is brought into contact with the outer ring outer cover 503 of the test bearings 501 such that axes thereof are parallel to each other (a contact portion between both forms a straight line). In this state, when the test load weight 510 is loaded, the driving shaft 502 should drop downward, but the position thereof is not changed due to the outer ring outer cover 503. In this case, the same size of radial load as that of the test load weight 510 is applied to the outer ring outer cover 503, and this radial load is applied to the test bearings 501 as it is. To the test bearings 501, a sum of the radial load by the test load weight 510 and the radial load by the weight of the outer ring outer cover 503 is applied as a true radial load. In this state, when the driving shaft 502 is rotated by the motor 521, the outer ring outer cover 503 rotates together with the outer rings of the test bearings 501 due to a friction force between a flange surface of the driving shaft 502 and a surface of the outer ring outer cover 503. Along with this rotation, the inner rings of the test bearings 501 co-rotate, and a dynamic friction torque of the test bearings 501 (to be exact, a difference value between the dynamic friction torque values of the test bearings 501 and the support bearings) can be measured by the torque meter through the co-rotating shaft 522.

By monitoring the output of the torque meter during the rotation test, the dynamic friction torque value of the test bearings 501 can be measured, and changes in the dynamic friction torque value caused by damage of the test bearings 501 can be detected. As a result, the end time of the test can be determined.

The driving shaft support bearing 519 is housed and supported in a driving bearing housing 515 and is cooled by a cooling fan (not illustrated). Therefore, even when the driving shaft 502 is heated, the bearing temperature is decreased such that the endurance performance of the bearing is not decreased. Both the outer ring rotation driving shaft 502 and the outer ring outer cover 503 are made of SUS440C (quenched and tempered product), and the surface roughness of a contact surface between both is less than or equal to 0.4 $\mu$mRa.

The material, heat treatment, and surface roughness of the co-rotating shaft 522 are the same as above. The co-rotating shaft support bearings are lubricated by the application of a small amount of bearing lubricating grease and are cooled by a cooling fan (not illustrated) along with the support bearing housings 517. Therefore, the lubricating grease is prevented from deteriorating due to heat conduction from the co-rotating shaft 522 heated in the thermostatic chamber 520. Accordingly, the co-rotating shaft support bearings are not damaged before the test bearings 501. The lubricating grease is set to be quantitatively applied in a small amount such that the dynamic friction torque of the co-rotating shaft support bearings (two in total) is less than that of the test bearings 501 (two in total). As a result, a difference between the dynamic friction torque values of the test bearings 501 and the co-rotating shaft support bearings is surely measured during the rotation test.

A rotation endurance performance test of a bearing is performed under the following conditions. When the dynamic friction torque value (difference thereof) is four or more times a stable value after starting the test or when the test bearings 501 are damaged and locked, the total number of rotations until that time is evaluated as the endurance performance of the test bearings 501.

In this test (measurement), test conditions (measurement conditions) were set as follows

· Shape of self-lubricating composite material: (1) Machined cage type

(2) Cylindrical spacer having a size of about $\phi$ 4 mm×3 mm
(3) Cylindrical spacer having a size of about $\phi$ 2 mm×2 mm

· Composition of self-lubricating composite material:

· Examples: 60 mass% of MoS$_2$-1.0 mass% of Cu and Ni in total (the respective contents of Cu and Ni are the same)-4 mass% of C-17.5 mass% of W-17.5 mass% of balance containing Fe

· Comparative Examples: 60 mass% of WS$_2$-2.0 mass% of (Ni-20Cr-3B)-3.0 mass% of (Ni-12.7B)-35 mass% of balance containing WB (in a range defined in Japanese Patent No. 3785283)

· Bearing inner diameter: $\phi$ 10 mm
$\phi$ 30 mm (only for bearing type (3))
Bearing type: (1) Machined-cage-type baring

(2) Cylindrical-spacer-filling-slot-type bearing
(example: configuration disclosed in Japanese Patent No.. 3608064)
(3) Cylindrical-spacer-cage-supporting-type angular bearing

· Radial load: 50 N/l bearing
100 N/l bearing (only for bearing type (3))
· Rotating speed (in terms of inner ring rotation) : 1000 min$^{-1}$
500 min$^{-1}$ (only for bearing type (3))
· Bearing temperature: 400°C

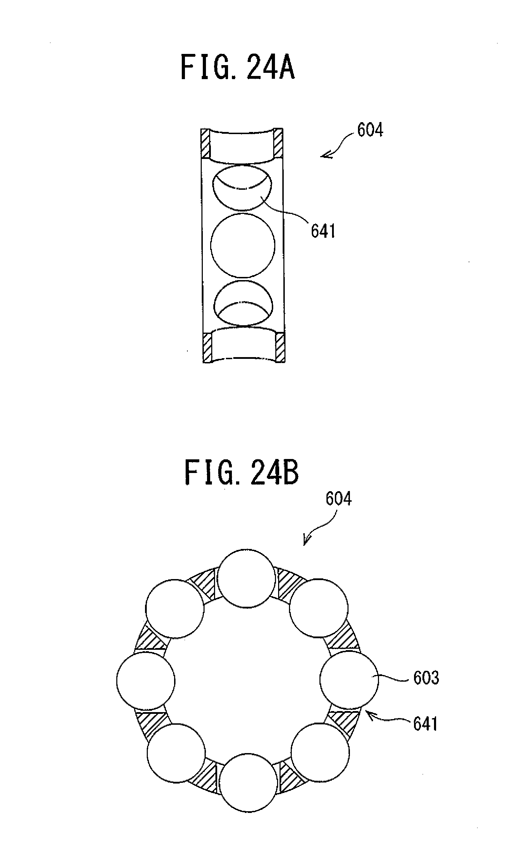

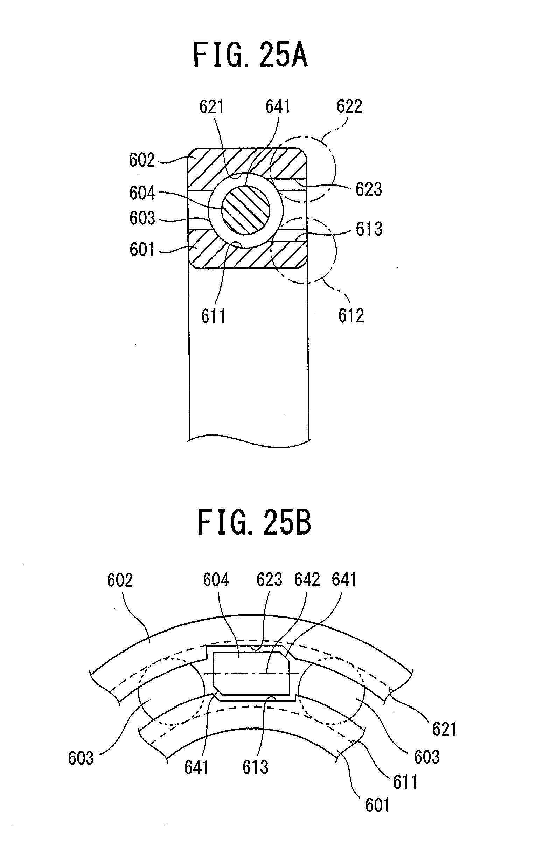

Here, the summary of the above-described "shapes of self-lubricating composite material" (1) to (3) is as follows.
In the machined cage type (1), as illustrated in FIGS. 24A and 24B, straight round holes as ball pockets are formed on a ring formed of a self-lubricating composite material to penetrate from the outer diameter surface to the inner diameter surface.
In addition, although not illustrated in the drawing, the 4x3 cylindrical spacer (2) is used for the bearing type (2) of the cylindrical-spacer-filling-slot-type bearing described below.
Further, although not illustrated in the drawing, the 2x2 cylindrical spacer (3) is used for the bearing type (3) of the cylindrical-spacer-cage-supporting-type angular bearing described below.
In addition, the summary of the above-described "bearing types" (1) to (3) is as follows.
The machined-cage-type bearing (1) is a bearing having a machined cage illustrated in FIGS. 24A and 24B.
In addition, the cylindrical-spacer-filling-slot-type bearing (2) has a structure illustrated in FIGS. 25A and 25B and is, for example, a bearing having a structure disclosed in Japanese Patent No. 3608064 or an equivalent structure thereof.

In FIGS. 25A and 25B, reference numeral 601 represents an inner ring, reference numeral 602 represents an outer ring, reference numeral 603 represents a rolling element, reference numeral 604 represents a spacer, reference numeral 641 represents a clearance of the spacer 604, and reference numeral 642 represents an axial center of the spacer 604. An inner ring notch 613 and an outer ring notch 623 are provided at a shoulder portion 612 of the inner ring 601 and at a shoulder portion 622 of the outer ring 602, respectively. These two notches are combined opposite to each other to form an insertion opening.

The spacer 604 is cylindrical, and a projection plane thereof when seen from an axis direction of a bearing has a shape in which the clearance 641 is provided at a portion of the outer circumference as illustrated in FIG. 25B. This shape is similar to and slightly smaller than the shape of a side surface of the insertion opening when seen from the same direction. In addition, in the spacer 604, with the axial center 642 of the projection plane seen from the axis direction of the bearing as a boundary, two corner portions at positions on a diagonal line of the projection plane are linearly cut out at an angle of 45°, to thereby provide the clearances 641. The spacer 604 has a configuration in which both sides of the inner ring notch 613 and the outer ring notch 623 are asymmetrical to each other with the axial center 642 of the spacer 604 as a boundary. In a filling-slot-type bearing, the above-described asymmetric portion is not necessarily provided on the outer and inner ring notches. As a simple rectangular filling slot, a cylindrical spacer to be loaded may have a simple cylindrical shape having no asymmetric portion. As a cylindrical spacer used for the test according to the embodiment, a spacer having a simple cylindrical shape was used.

Since the spacer can be prepared without using a machined cage, a cylindrical-spacer-filling-slot type, and a cage-forming press die, there is no limitation for the bearing size and the model number. Therefore, by using these structure types, a wide variety of bearings can be prepared.

Further, the cylindrical-spacer-cage-supporting-type angular bearing (3) is, for example, a solid-lubricant-spacer-cage-supporting-type angular bearing disclosed in JP 2009-236314 A. In this angular bearing, a tapered portion, called a counterbore, for loading balls is formed on a single end surface of an outer ring (or an inner ring), and an opening is formed toward the end surface. Therefore, even when a solid-lubricant spacer is loaded between the balls, the spacer does not fall off from the bearing. Further, in the angular bearing, in order to increase load capacity, the number of balls to be loaded is designed such that a pitch circle is filled. Therefore, it is initially difficult to load a cylindrical spacer between balls. Even if it is attempted to load a cylindrical spacer between balls, inevitably, a thin shape such as a coin is formed. Therefore, to deal with this problem, a cage for supporting a cylindrical spacer is introduced as in the embodiment. Regarding this angular bearing, an endurance test was performed.

Here, using an angular bearing disclosed in JP 2009-236314 A as an example, the cylindrical-spacer-cage-supporting-type angular bearing (3) will be described.

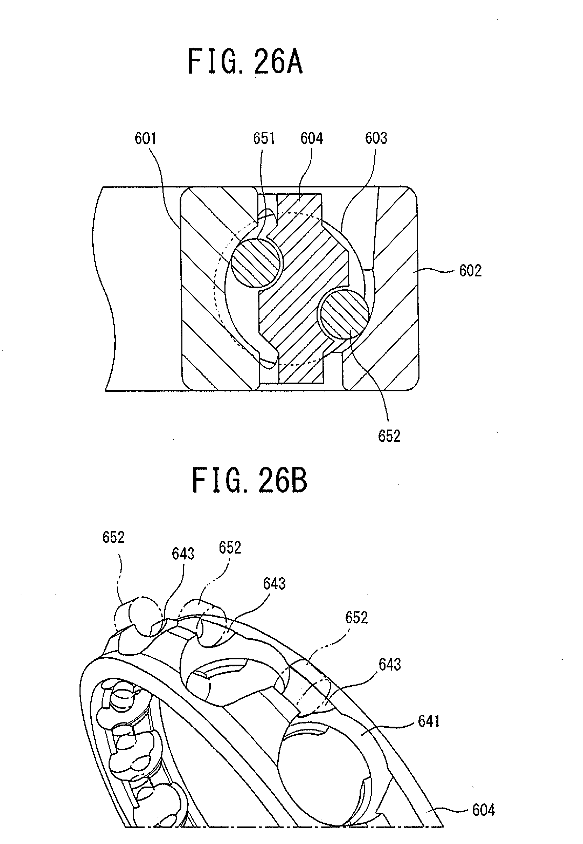

As an embodiment of the cylindrical-spacer-cage-supporting-type angular bearing, as illustrated in FIG. 26A, cylindrical spacers 651 and 652 are arranged in contact angle positions. The diameters of the spacers 651 and 652 are smaller than the radius of the balls 603, and the spacers 651 and 652 are arranged at positions distant from a ball equator where one ball 603 and another ball 603 are closest to each other. Therefore, the longitudinal size of the cylindrical spacers can be secured (a coin shape is not formed). Further, since the spacers 651 and 652 are arranged in the contact angle positions, the spacers 651 and 652 slide on lines where the balls 603 travel on the respective races of the outer ring 602 and the inner ring 601 such that the bearing is lubricated. Therefore, the lubricating performance is increased.

Examples of a cage used for the cylindrical-spacer-cage-supporting-type angular bearing include a cage 604 illustrated in FIG. 26B. In this cage 604, machined holes 641 penetrating from the outer diameter surface to the inner diameter surface of the cage 604 are provided on the circumference to form ball pockets. Circumferential grooves 643 are formed in the outer diameter surface and the inner diameter surface, respectively, so as to bridge over gaps between ball pockets. The circumferential grooves 643 are arranged at the contact angle positions of the bearing. The circumferential grooves 643 formed between the ball pockets function as pockets for solid-lubricant spacers. As the material of the cage 604, for example, brass, mild steel such as S45C, stainless steel such as SUS304, or untempered steel is used.

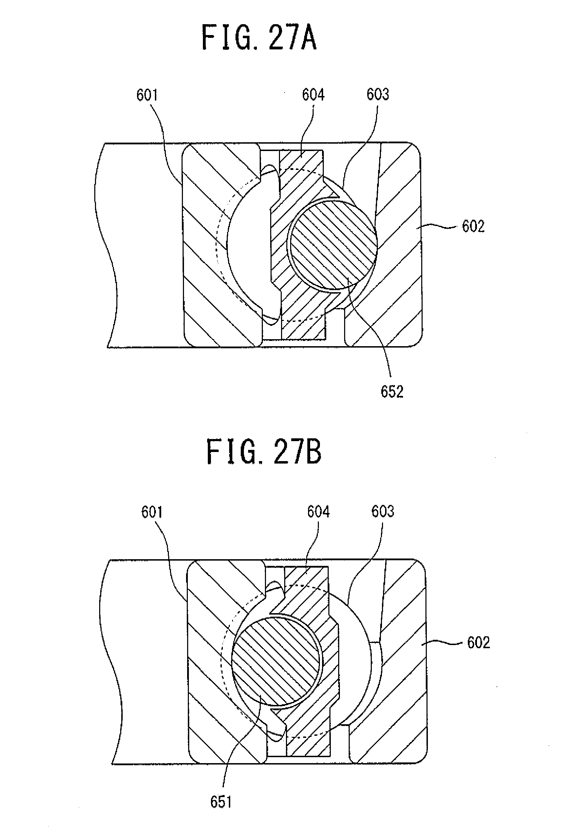

As another embodiment of the cylindrical-spacer-cage-supporting-type angular bearing, as illustrated in FIGS. 27A and 27B, a type in which the diameter of a cylindrical spacer is close to or greater than the radius of balls may be adopted. A cylindrical-spacer-cage-supporting-type angular bearing 600 of FIG. 27A has a structure in which the lubricating component 651 on the inner ring 601 side reaches further outside of the bearing 600 in the radial direction than the pitch circle of the ball 603. On the other hand, a cylindrical-spacer-cage-supporting-type angular bearing 600 of FIG. 27B has a structure in which the cylindrical spacer 652 on the outer ring 602 side reaches further inside of the bearing 600 in the radial direction than the pitch circle of the ball 603. By adopting these structures, end surfaces of cylindrical bodies forming the cylindrical spacers 651 and 652 reliably come into contact with the balls 603. Therefore, the solid lubricant forming the cylindrical spacers 651 and 652 is reliably transferred to the ball 603.

In the embodiment, the cylindrical spacer 652 has a coin shape but is supported by the cage 604. Therefore, the cylindrical spacer 652 does not fall down in the bearing 600. In addition, the diameter of the spacer 652 is large, and the spacer 652 slides on the ball 603 such that an end surface thereof is substantially parallel to a tangent line of a ball surface. Therefore, the solid lubricant is easily transferred from the spacer 652 to the ball 603, and the lubricating performance is easily secured.

(22) Relationship between Self-Lubricating Composite Material and Friction Coefficient

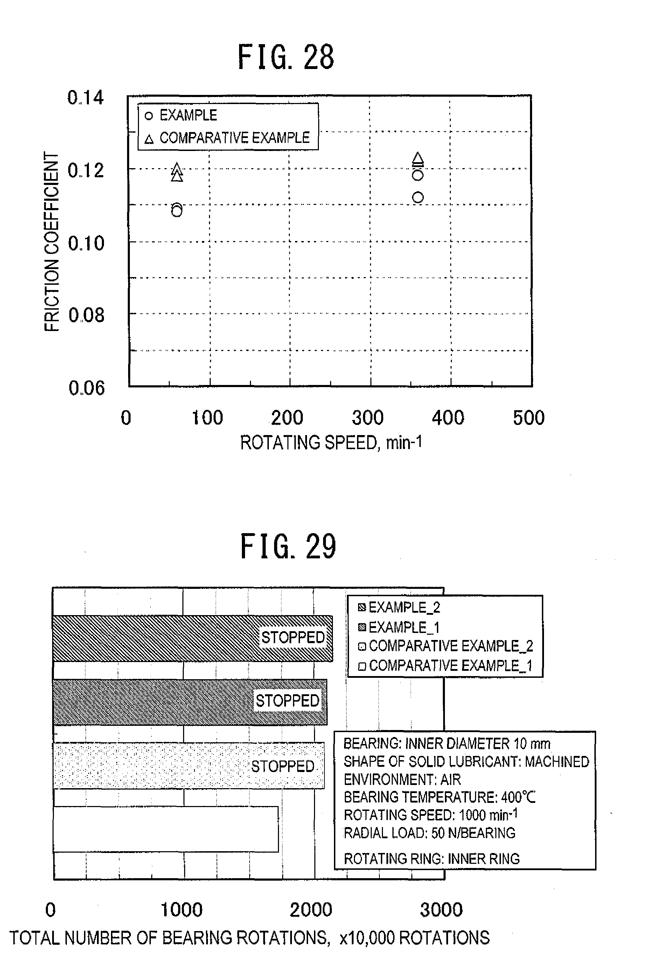

Using the high-temperature-outer-and-inner-ring-rotation-friction coefficient measuring device illustrated in FIG. 20A, the friction coefficient of the self-lubricating composite material of Example 1 was measured to evaluate a relationship between the self-lubricating composite material and the friction coefficient. The measurement results of the friction coefficient depending on the rotating speed are illustrated in FIG. 28. In FIG. 28, there are no significant changes between the friction coefficients of the materials of Examples (inner ring rotation) and Comparative Examples (inner ring rotation). In this evaluation, in the case of 300°C, the compositions of Examples had a smaller friction coefficient than that of the compositions of Comparative Examples at 60 min$^{-1}$ and 300 min$^{-1}$, but a difference therebetween was very small.
In this measurement, test conditions (measurement conditions) were set as follows.

· Shape of sample (self-lubricating composite material): Cylindrical spacer having a size of about $\phi$ 4 mmx3 mm
Composition of self-lubricating composite material: 60 mass% of $MoS_2$-1.0 mass% of Cu and Ni in total (the respective contents of Cu and Ni are the same)-4 mass% of C-17.5 mass% of W-17.5 mass% of balance containing Fe
· Diameter of sliding surface: About $\phi$ 30 mm
· Environment: Air and 300°C
· Rotating ring: Inner ring
· Rotating speed: 60 min$^{-1}$ and 300 min$^{-1}$
· Radial load: 5 N

(23) Endurance Performance Comparison Using Machined Cage (Inner Ring Rotation)

Using the high-temperature-bearing endurance testing device illustrated in FIG. 4, the endurance performances of bearings during the inner ring rotation were compared to each other. The results are illustrated in FIG. 29. In Example_1 and Example_2, bearings using the self-lubricating composite material of Example 1 were used.. In Comparative Example_1 and Comparative Example_2, bearings using the self-lubricating composite material of Comparative Example 1 were used. As the cage, machined cages were used in all the examples As a result, when the inner ring rotation was performed using the machined cage, the tests of two Examples and one Comparative Example were stopped. Specifically, the bearing of Comparative Example_1 was not able to rotate 20,000,000 times but was able to rotate nearly 19,000,000 times. The number of bearings which were able to rotate more than 20,000,000 times was 2 in Examples and 1 in Comparative Examples. It can be said that there was no significant difference in endurance performance between the bearings of Comparative Examples and the bearings of Examples.
In this measurement, test conditions (measurement conditions) were set as follows.

· Bearing inner diameter: About $\phi$ 10 mm
· Shape of self-lubricating composite material: Machined cage type
Composition of self-lubricating composite material: 60 mass% of $MoS_2$-1.0 mass% of Cu and Ni in total (the respective contents of Cu and Ni are the same) -4 mass% of C-17 5 mass% of W-17.5 mass% of balance containing Fe
· Environment: Air
· Bearing temperature: 400°C
· Rotating speed: 1000 min$^{-1}$
· Radial load: 50 N/l bearing
· Rotating ring: Inner ring

(24) Endurance Performance Comparison Using Machined Cage (Outer Ring Rotation)

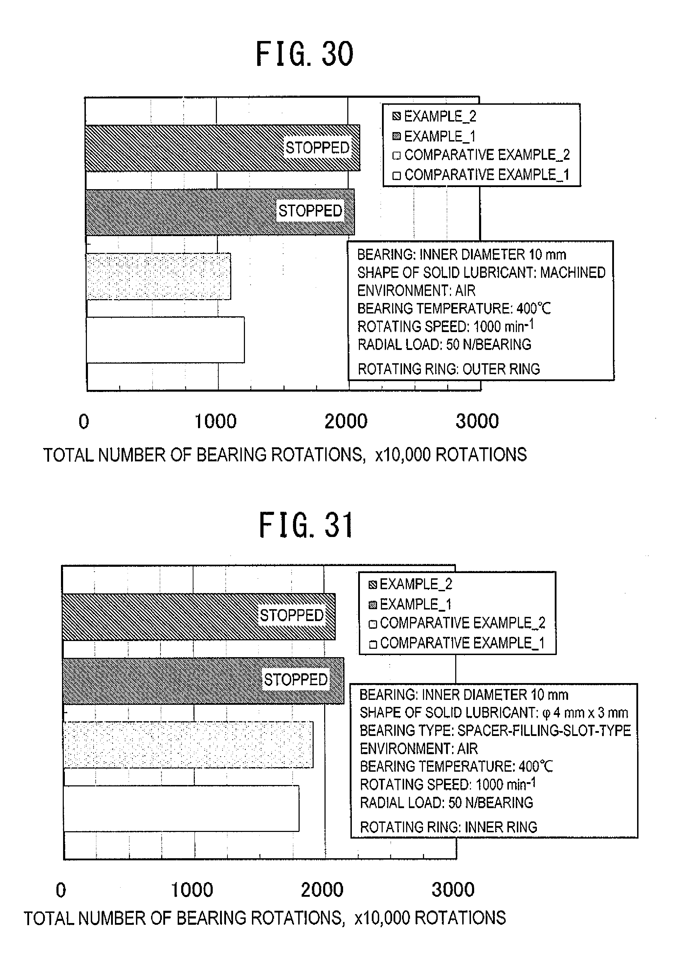

Using the high-temperature-outer-ring-rotation-bearing endurance testing device illustrated in FIG. 23, the endurance performances of bearings during the outer ring rotation were compared to each other. The results are illustrated in FIG. 30. In Example_1 and Example_2, bearings using the self-lubricating composite material of Example 1 were used In Comparative Example_1 and Comparative Example_2, bearings using the self-lubricating composite material of Comparative Example 1 were used. As the cage, machined cages were used in all the examples. As a result, when the outer ring rotation was performed using the machined cage, the tests of two Examples were stopped, and the endurance of two Comparative Examples was only about 1/2 of that of Examples. Specifically, the bearing service lives of the two Comparative Examples were over at more than 10,000,000 rotations. Unlike the inner ring rotation under the same conditions, in the outer ring rotation, there was a large difference in endurance performance between Examples and Comparative Examples. In Example 1, that is, when the machined cage is formed of the self-lubricating composite material having the composition according to the embodiment, during the outer ring rotation, there is a large advantageous effect compared to a bearing containing $WS_2$ as a major component of a solid lubricant. The reason is presumed to be as follows. The specific gravity of $WS_2$ is about 1.5 times that of $MOS_2$. As a result, during the outer ring rotation of the machined cage, the rotation caused by a centrifugal force becomes unstable, and the endurance performance is significantly decreased. That is, it can be said that the self-lubricating composite material according to the embodiment exhibits high endurance performance particularly in the outer ring rotation when a machined cage is formed using the self-lubricating composite material.

In this measurement, test conditions (measurement conditions) were set as follows.

· Bearing inner diameter: About $\phi$ 10 mm
· Shape of self-lubricating composite material: Machined cage type
· Composition of self-lubricating composite material: 60 mass% of $MoS_2$-1.0 mass % of Cu and Ni in total (the respective contents of Cu and Ni are the same) -4 mass% of C-17.5 mass% of W-17.5 mass% of balance containing Fe
· Environment: Air
· Bearing temperature: 400°C
· Rotating speed: 1000 min$^{-1}$
· Radial load: 50 N/l bearing
· Rotating ring: Outer ring

(25) Endurance Performance Comparison Using Spacer-Filling-Slot-Type Bearing (Inner Ring Rotation)

Using the high-temperature-bearing endurance testing device illustrated in FIG. 4, the endurance performances of spacer-filling-slot-type bearings during the inner ring rotation were compared to each other. The results are illustrated in FIG. 31. In Example_l and Example_2, bearings using the self-lubricating composite material of Example 1 were used. In Comparative Example_1 and Comparative Example_2, bearings using the self-lubricating composite material of Comparative Example 1 were used. As the cage, machined cages were used in all the examples. As a result, the tests of two Examples were stopped, and the bearing service lives of two Comparative Examples were over at more than 19,000,000 rotations. Specifically, the bearings of two Comparative Examples were not able to rotate 20,000,000 times but were able to rotate nearly 20,000,000 times. The bearings of Comparative Examples were not able to rotate more than 20,000,000 times, but it was found that there was no significant difference in endurance performance between the bearings of Comparative Examples and the bearings of

Examples.

In this measurement, test conditions (measurement conditions) were set as follows.

· Bearing inner diameter: About $\phi$ 10 mm
· Shape of self-lubricating composite material: Cylindrical spacer having a size of about $\phi$ 4 mmx3 mm
· Composition of self-lubricating composite material: 60 mass% of $MoS_2$-1.0 mass% of Cu and Ni in total (the respective contents of Cu and Ni are the same)-4 mass% of C-17.5 mass% of W-17.5 mass% of balance containing Fe
Bearing type: Spacer-filling-slot-type
Environment: Air
Bearing temperature: 400°C
Rotating speed: 1000 min$^{-1}$
Radial load: 50 N/1 bearing
Rotating ring: Inner ring

(26) Endurance Performance Comparison Using Spacer-Filling-Slot-Type Bearing (Outer Ring Rotation)

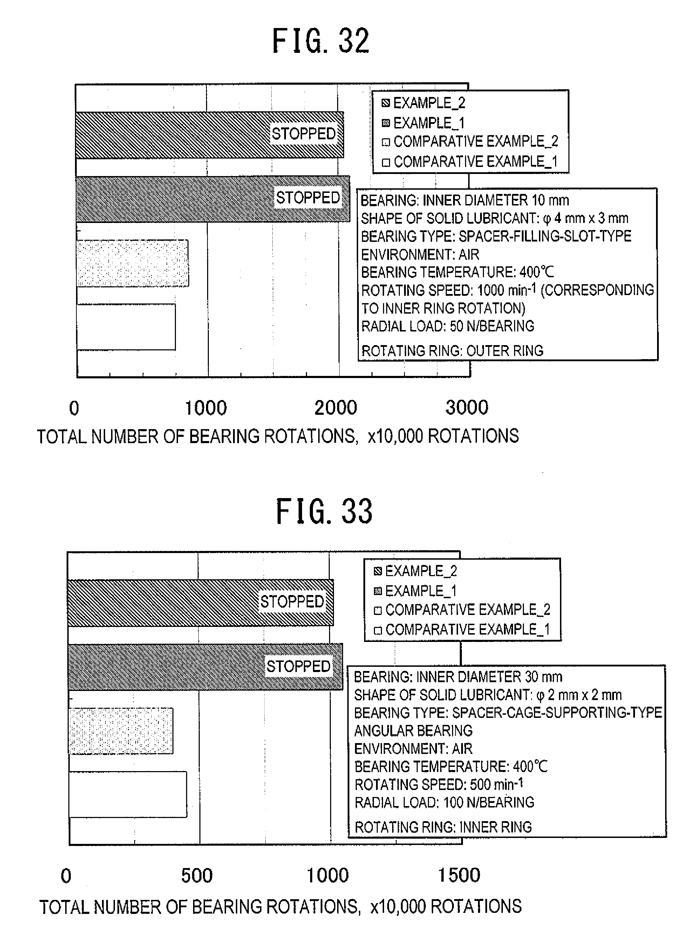

Using the high-temperature-outer-ring-rotation-bearing endurance testing device illustrated in FIG. 23, the endurance performances of spacer-filling-slot-type bearings during the outer ring rotation were compared to each other. The results are illustrated in FIG. 32. In Example_1 and Example_2, bearings using the self-lubricating composite material of Example 1 were used. In Comparative Example_1 and Comparative Example_2, bearings using the self-lubricating composite material of Comparative Example 1 were used. As a result, the tests of two Examples were stopped, and the endurance of two Comparative Examples was only about 1/2 or less of that of Examples. Specifically, the bearing service lives of two Comparative Examples were over at 9,000,000 rotations or less. Unlike the inner ring rotation under the same conditions, in the outer ring rotation, there was a large difference in endurance performance between Examples and Comparative Examples. In Examples, that is, when the filling-slot-type bearing is prepared using the spacer formed of the self-lubricating composite material having the composition according to the embodiment, during the outer ring rotation, there is a large advantageous effect compared to a bearing containing $WS_2$ as a major component of a solid lubricant. The specific gravity of $WS_2$ is about 1.5 times that of $MOS_2$. As a result, during the outer ring rotation, due to a centrifugal force, the spacer formed of the self-lubricating composite material is applied with a large radial load when coming into contact with the outer ring having a high circumferential speed. Therefore, the spacer is bounced back, the collision with the inner ring is frequently repeated inside the bearing, and the rotation becomes unstable. For the above-described reasons, it is presumed that the endurance performance is significantly decreased. That is, it was found that the self-lubricating composite material according to the embodiment exhibits high endurance performance particularly in the outer ring rotation when the cylindrical spacer formed of the self-lubricating composite material is applied to a filling-slot-type bearing.

In this measurement, test conditions (measurement conditions) were set as follows.

Bearing inner diameter: About $\phi$ 10 mm
Shape of self-lubricating composite material: Cylindrical spacer having a size of about $\phi$ 4 mm$\times$3 mm
Composition of self-lubricating composite material: 60 mass% of $MoS_2$-1.0 mass% of Cu and Ni in total (the respective contents of Cu and Ni are the same)-4 mass% of C-17.5 mass% of W-17..5 mass% of balance containing Fe
Bearing type: Spacer-filling-slot-type
Environment: Air
Bearing temperature: 400°C
Rotating speed: 1000 min$^{-1}$
Radial load: 50 N/1 bearing
Rotating ring: Outer ring

(27) Endurance Performance Comparison Using Cylindrical-Spacer-Cage-Supporting-Type Angular Bearing (Inner Ring Rotation)

Using the high-temperature-bearing endurance testing device illustrated in FIG. 4, the endurance performances of cylindrical-spacer-cage-supporting-type angular bearings during the inner ring rotation were compared to each other. The results are illustrated in FIG. 33. In Example_1 and Example_2, bearings using the self-lubricating composite material of Example 1 were used. In Comparative Example_1 and Comparative Example_2, bearings using the self-lubricating composite material having the composition disclosed in Japanese Patent No 3785283 were used. As a result, the tests of two Examples were stopped, and the bearing service lives of two Comparative Examples were over at around 4,000,000 rotations. Specifically, the bearings of two Comparative Examples were able to rotate only around 4,000,000 times. A pocket for a spacer formed in this type of angular bearing cage is small and is adjacent to a ball Therefore, during bearing rotation, the spacer frequently collides with the ball, the inner circumference of the pocket, and the outer ring (or inner ring). Therefore, irrespective of the inner and outer ring rotations, in Examples having a small specific gravity, cracking and breakage are difficult to occur as compared to Comparative Examples containing $WS_2$ having a large specific gravity. Therefore, it is presumed that the endurance performance of Examples is superior.

In this measurement, test conditions (measurement conditions) were set as follows.

Bearing inner diameter: About $\phi$ 30 mm
Shape of self-lubricating composite material: Cylindrical spacer having a size of about $\phi$ 2 mm$\times$2 mm
Bearing type: Cylindrical-spacer-cage-supporting-type angular bearing
Environment: Air
Bearing temperature: 400°C
Rotating speed: 500 min$^{-1}$
Radial load: 100 N/1 bearing
Rotating ring: Inner ring

(28) Endurance Performance Comparison Using Cylindrical-Spacer-Cage-Supporting-Type Angular Bearing (Outer Ring Rotation)

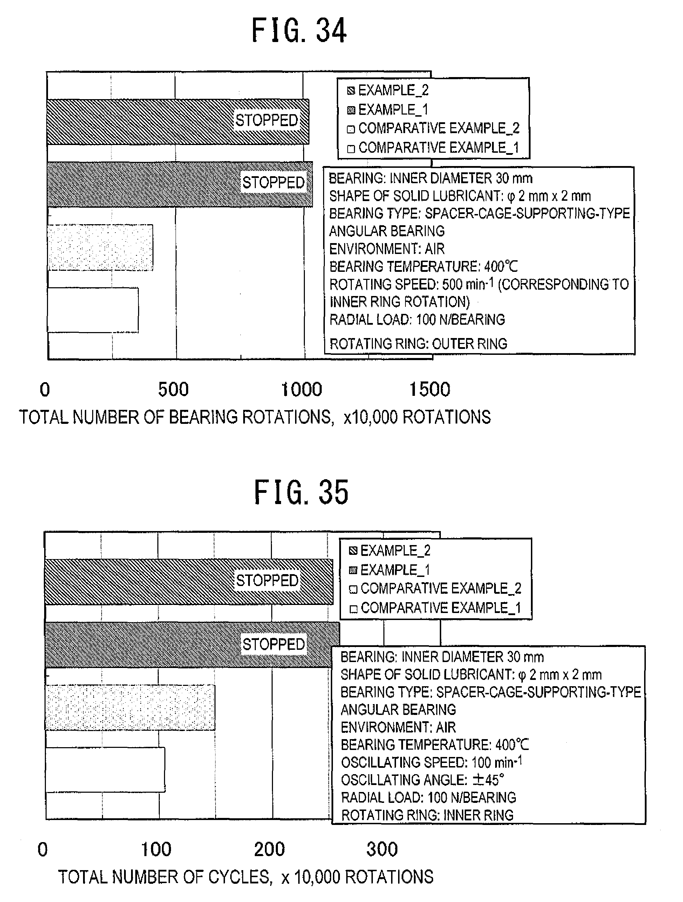

Using the high-temperature-outer-ring-rotation-bearing endurance testing device illustrated in FIG. 23, the endurance performances of cylindrical-spacer-cage-supporting-type angular bearings during the outer ring rotation were compared to each other. The results are illustrated in FIG. 34. In Example_1 and Example_2, bearings using the self-lubricating composite material of Example 1 were used In Comparative Example_1 and Comparative Example_2, bearings using the self-lubricating composite material having the composition disclosed in Japanese Patent No. 3785283 were used. As a result, the tests of two Examples were stopped, and the bearing service lives of two Comparative Examples were over at around 3,500,000 rotations. Specifically, the bearings of two Comparative Examples were able to rotate only around 3,500,000 times A pocket for a spacer of the angular bearing cylindrical spacer cage is small and is adjacent to a ball. Therefore, during bearing rotation, the spacer frequently collides with the ball, the inner circumference of the pocket, and the outer ring (or inner ring). Therefore, irrespective of the inner and outer ring rotations, in Examples having a small specific gravity, cracking and breakage are difficult to occur as compared to Comparative Examples containing $WS_2$ having a large specific gravity. Therefore, it is presumed that the endurance performance is superior.

In this measurement, test conditions (measurement conditions) were set as follows

Bearing inner diameter: About $\phi$ 30 mm
Shape of self-lubricating composite material: Cylindrical spacer having a size of about $\phi$ 2 mm$\times$2 mm
Composition of self-lubricating composite material: 60 mass% of $MoS_2$-1.0 mass% of Cu and Ni in total (the respective contents of Cu and Ni are the same) -4 mass% of C-17.5 mass% of W-17.5 mass% of balance containing Fe
Bearing type: Cylindrical-spacer-cage-supporting-type angular bearing
Environment: Air
Bearing temperature: 400°C
Rotating speed: 500 min$^{-1}$
Radial load: 100 N/1 bearing
Rotating ring: Outer ring

(29) Endurance Performance Comparison When Cylindrical-Spacer-Cage-Supporting-Type Angular Bearing Is Oscillated (Inner Ring Rotation)

When cylindrical-spacer-cage-supporting-type angular bearings were oscillated using the high-temperature-bearing endurance testing device illustrated in FIG. 4, the endurance performances of the cylindrical-spacer-cage-supporting-type angular bearings during the inner ring rotation were compared to each other. The results are illustrated in FIG. 35. In Example_1 and Example_2, bearings using the self-lubricating composite material of Example 1 were used. In Comparative Example_1 and Comparative Example_2, bearings using the self-lubricating composite material having the composition disclosed in Japanese Patent No. 3785283 were used. Due to this oscillation, during rotation reversal, a ball and a cylindrical spacer slide on inner and outer rings, and this sliding occurs frequently. Therefore, typically, the endurance performance is significantly decreased as compared to one-direction rotation. Therefore, in this test, the number of rotations at which the test was stopped was decreased to be less than 10,000,000 rotations of the case of the one-direction rotation, and was set to 2,500,000 rotations (cycles).

As a result, the tests of two Examples were stopped, and the bearing service lives of two Comparative Examples were over. Specifically, the bearings of Comparative Examples were able to rotate only around 1,500,000 times. A pocket for a spacer formed in this type of angular bearing cage is small and is adjacent to a ball. Therefore, during bearing oscillation, the spacer frequently collides with the ball, the inner circumference of the pocket, and the outer ring (or inner ring) . Therefore, irrespective of the inner and outer ring rotations, in Examples having a small specific gravity, cracking and breakage are difficult to occur as compared to Comparative Examples containing $WS_2$ having a large specific gravity. Therefore, it is presumed that the endurance performance is superior.

In this measurement, test conditions (measurement conditions) were set as follows.

Bearing inner diameter: About $\phi$ 30 mm
Shape of self-lubricating composite material: Cylindrical spacer having a size of about $\phi$ 2 mm$\times$2 mm
Composition of self-lubricating composite material: 60 mass% of $MoS_2$-1.0 mass% of Cu and Ni in total (the respective contents of Cu and Ni are the same) -4 mass% of C-17.5 mass% of W-17.5 mass% of balance containing Fe
Bearing type: Cylindrical-spacer-cage-supporting-type angular bearing
Environment: Air
Bearing temperature: 400°C
Rotating speed: 100 min$^{-1}$
Oscillating angle: $\pm$45°
Radial load: 100 N/1 bearing
Rotating ring: Inner ring

(30) Endurance Performance Comparison When Cylindrical-Spacer-Cage-Supporting-Type Angular Bearing Is Oscillated (Outer Ring Rotation)

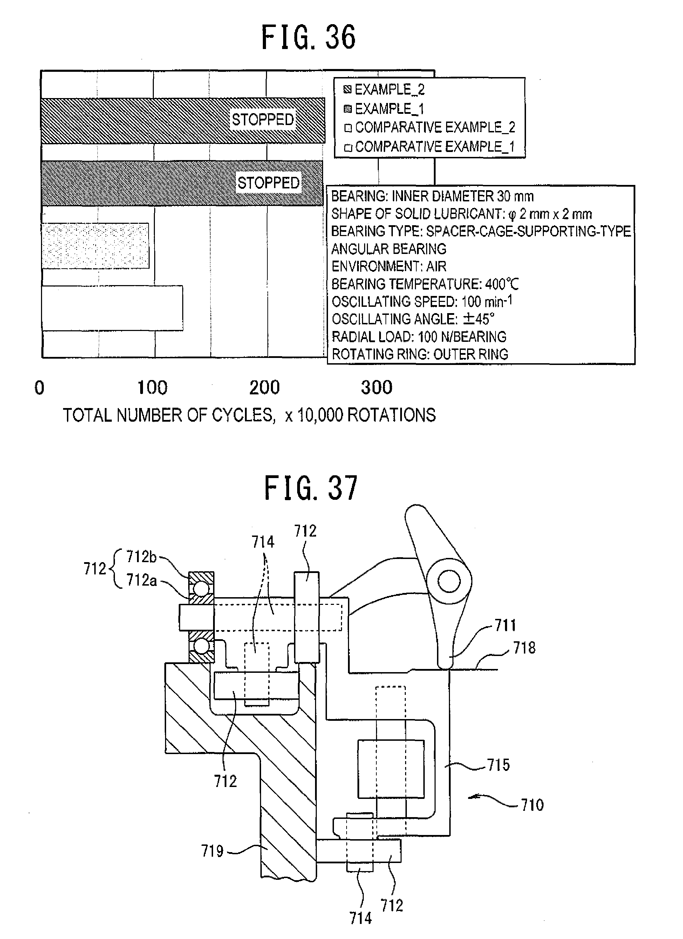

When cylindrical-spacer-cage-supporting-type angular bearings were oscillated using the high-temperature-outer-ring-rotation-bearing endurance testing device illustrated in FIG. 23, the endurance performances of the cylindrical-spacer-cage-supporting-type angular bearings during the outer ring rotation were compared to each other. The results are illustrated in FIG. 36. In Example_1 and Example_2, bearings using the self-lubricating composite material of Example 1 were used. In Comparative Example_1 and Comparative Example_2, bearings using the self-lubricating composite material having the composition disclosed in Japanese Patent No. 3785283 were used Due to this oscillation, during rotation reversal, a ball and a cylindrical spacer slide on inner and outer rings, and this sliding occurs frequently. Therefore, typically, the endurance performance is significantly decreased as compared to one-direction rotation. Therefore, in this test, the number of rotations at which the test was stopped was decreased to be less than 10,000,000 rotations of the case of the one-direction rotation, and was set to 2,500,000 rotations (cycles).

As a result, the tests of two Examples were stopped, and the bearing service lives of two Comparative Examples were over. Specifically, the bearings of Comparative Examples were able to rotate only around 1,250,000 times A pocket for a spacer formed in this type of angular bearing cage is small and is adjacent to a ball. Therefore, during bearing oscillation, the spacer frequently collides with the ball, the inner circumference of the pocket, and the outer ring (or inner ring). Therefore, irrespective of the inner and outer ring rotations, in Examples having a small specific gravity, cracking and breakage are difficult to occur as compared to Comparative Examples containing $WS_2$ having a large specific gravity. Therefore, it is presumed that the endurance performance of Examples is superior.

In this measurement, test conditions (measurement conditions) were set as follows.

Bearing inner diameter: About $\phi$ 30 mm
Shape of self-lubricating composite material: Cylindrical spacer having a size of about $\phi$ 2 mmx2 mm
Composition of self-lubricating composite material: 60 mass% of $MoS_2$-1.0 mass% of Cu and Ni in total (the respective contents of Cu and Ni are the same)-4 mass% of C-17.5 mass% of W-17 5 mass% of balance containing Fe
Bearing type: Cylindrical-spacer-cage-supporting-type angular bearing
Environment: Air
Bearing temperature: 400°C
Rotating speed: 100 min$^{-1}$
Oscillating angle: $\pm$45°
Radial load: 100 N/1 bearing
Rotating ring: Outer ring

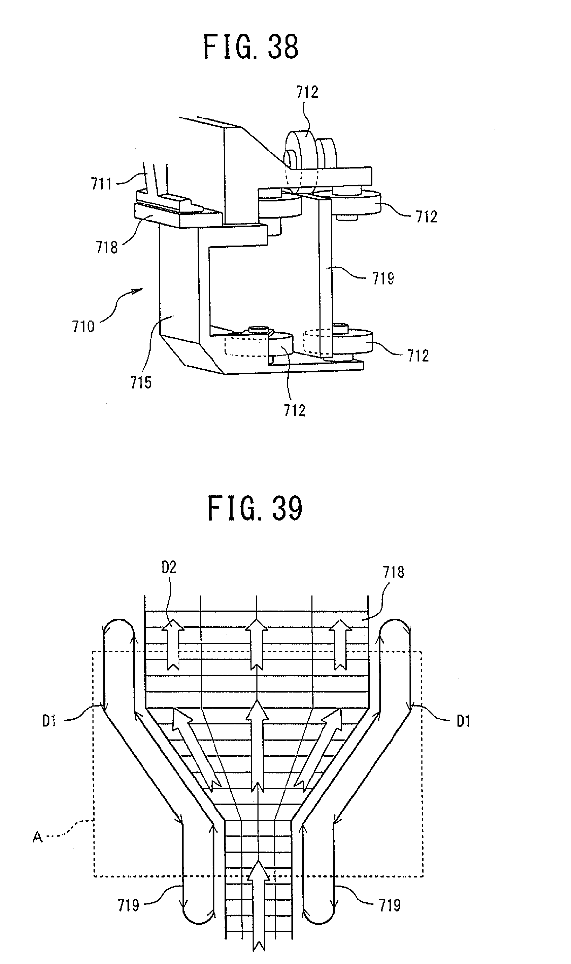

Based on the above-described evaluation results, it can be seen that a ball bearing including the self-lubricating composite material according to any one of Examples is desirably used for a tenter clip (transport device) illustrated in FIGS. 37 to 39. FIG. 37 is a front view illustrating a configuration of a tenter clip used in the rolling bearing according to any one of Examples. In addition, FIG. 38 is a perspective view illustrating the configuration of the tenter clip as a transport device used in the rolling bearing according to any one of Examples. In addition, FIG. 39 is a perspective view illustrating the summary of the operation and the heating of the tenter clip used in the rolling bearing according to any one of Examples.

As illustrated in FIGS 37 to 39, this tenter clip 710 includes a holding portion 711 that holds a film 718; plural rolling bearings 712; and a tenter clip main body 715 on which the holding portion 711 and the rolling bearings 712 are attached. In each rolling bearing 712 which is attached to the tenter clip main body 715 through a shaft 714, an inner ring 712a is set as a fixed ring, and an outer ring 712b is set as a rotating ring.

In order that an outer circumferential surface of the outer ring 712b of each rolling bearing 712 comes into contact with a guide rail 719 of a film stretching device (not illustrated), the tenter clip 710 attached on the guide rail 719 travels along the guide rail 719 through the rolling of the rolling bearing 712 (indicated by arrow D1 in FIG. 39) . In order to lubricate a contact portion between the outer circumferential surface of the outer ring 712b and the guide rail 719, a lubricating oil such as ester oil is sprayed on the contact portion during travelling.

A lot of the plural tenter clips 710 are prepared and are attached on both left and right sides of the film 718 using the holding portions 711. In this state, while being heated at a high temperature (for example, 220°C), the tenter clips 710 travel along two guide rails 719 arranged in a substantially V shape (for example, direction indicated by arrow D2; refer to FIG. 39) As a result, the distance between the tenter clips 710 on both the left and right sides of the film 718 is gradually increased along with the travelling. Therefore, since a tension is applied to the film 718 in a left-right direction, the film 718 is stretched. The above-described heating temperature (heating temperature in region A of FIG. 39) may be appropriately set depending on the material and the stretching degree of the film 718.

(31) Outgassing Property of Bearing in Vacuum Environment at High Temperature

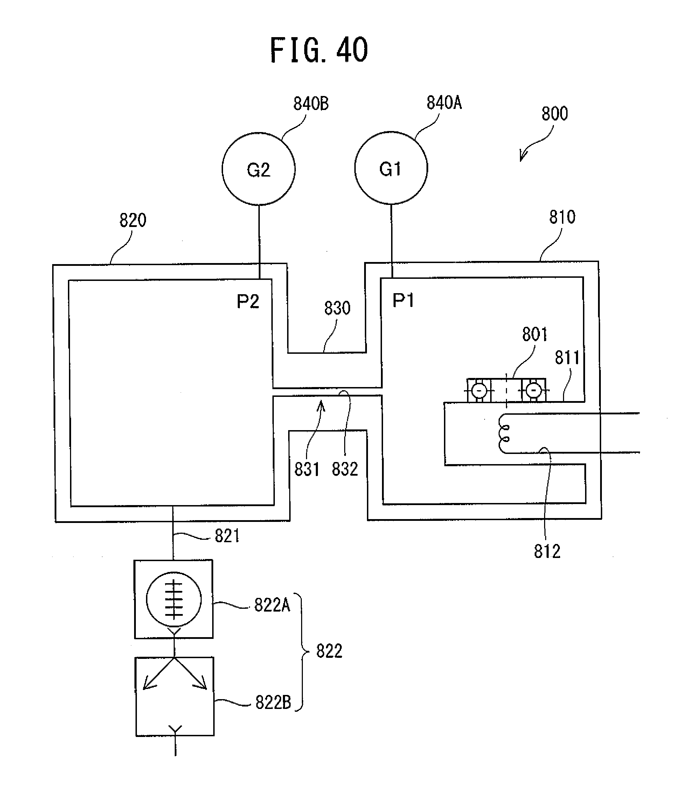

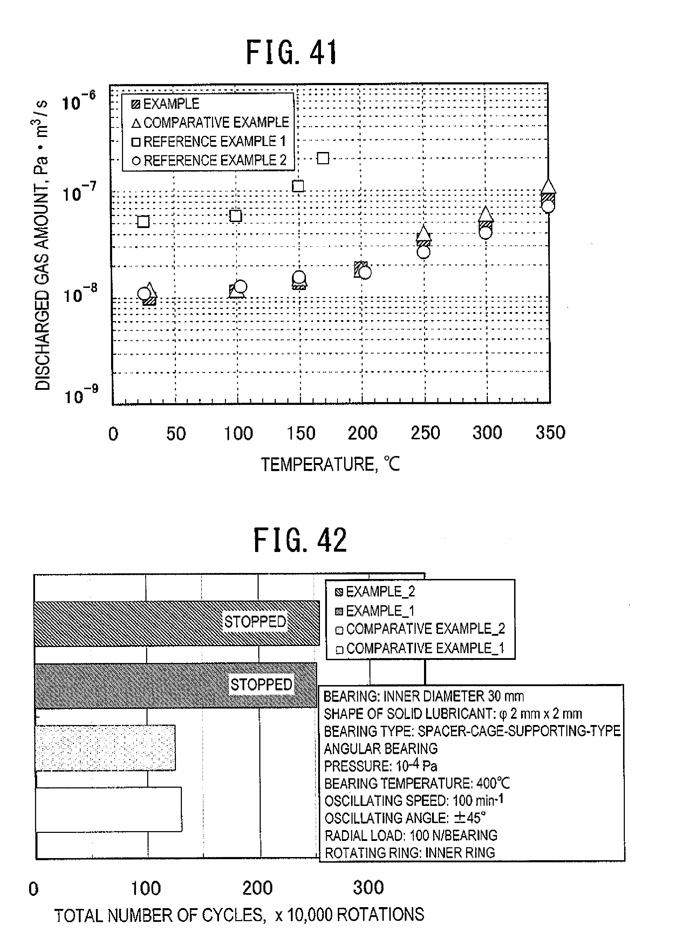

Using an outgassing testing device illustrated in FIG. 40, the outgassing property of a bearing in a vacuum environment at a high temperature was investigated in the following manner. The results are illustrated in FIG. 41. For reference values, fluorine grease-filled bearings were also tested. The test bearings were filled with fluorine grease in an amount which was 30% of a space volume of an ordinary press cage.

<Configuration>

In an outgassing testing device 800 illustrated in FIG. 40, two vacuum chambers 810 and 820 are air-tightly connected through a tube 831 of a connecting portion 830, and a part of the tube 831 forms an orifice 832. The shape (diameter and length) of the orifice 832 is defined. A sample table 811 is provided at the center of the first vacuum chamber 810 in a height direction thereof, and the sample table 811 is embedded with a heater 812. By supplying power to the heater 812, the sample table 811 can be heated, and a test bearing 801 set on the sample table 811 can be heated. In the heater 812, the temperature of the sample table 811 is measured by a thermocouple (not illustrated) embedded in the sample table 811 and can be controlled by adjusting the current amount flowing through the heater 812. When the test bearing 801 is set on the sample table 811, the temperature of the sample table 811 is the temperature of the test bearing 801. Vacuum meters 840A and 840B having the same performance are provided at positions of a leading end and a trailing end of the orifice 832, respectively, such that the pressures of the leading end and the trailing end of the orifice 832 can be measured. An exhaust tube 821 is air-tightly connected to the second vacuum chamber 820. A turbo pump 822A and an auxiliary pump 822B following the turbo pump 822A (hereinafter, collectively referred to as "vacuum pump 822") are connected in series to the exhaust tube 821. When the vacuum pump 822 operates, the second vacuum chamber 820 is evacuated through the exhaust tube 821, and the first vacuum chamber 810 is evacuated through the orifice 832.

Here, supposing that gas is discharged from the test bearing 801, all the discharged gas is exhausted through the orifice 832. Since the orifice 832 is provided in a defined shape, the conductance C of the orifice 832 is known. The gas discharged from the test bearing 801 flows from the leading end to the trailing end of the orifice 832. Therefore, when the pressure values at the ends of the orifice 832 are represented by P1 and P2, the amount Q of the gas discharged from the sample bearing 801 can be expressed by the following expression (1). In this way, by comparing different amounts of gas discharged from the test bearing 801 to each other, the outgassing property of a (test) bearing can be determined.

$$Q=C(P1-P2) \quad \cdots \quad \text{Expression (1)}$$

<Measuring Method>

A method of measuring the outgassing property using the outgassing testing device 800 illustrated in FIG. 40 will be described. First, in order to obtain a background values, the test is performed in a state where nothing is set on the sample table 811. By operating the vacuum pump 822 and baking the two vacuum chambers 810 and 820 using a baking heater (not illustrated) for a predetermined time, gas adsorbed on a wall surface of the vacuum chambers 810 and 820 and the sample table 811 is sufficiently discharged for outgassing. After confirming that there are no changes in the indicated value of the vacuum meter 840A, the baking is stopped while continuing the operation of the vacuum pump 822, and the measurement is halted until the surface temperatures of the two vacuum chambers 810 and 820 are equal to room temperature. Once the surface temperatures of the two vacuum chambers 810 and 820 reach room temperature, P1 and P2 are measured, and Q at room temperature is obtained. This value is the background value of the discharged gas amount at room temperature. Next, only the sample table 811 is set to 100°C and is held, and the same measurement is performed. Next, the sample table 811 is heated, and the discharged gas amount is measured at intervals of 50°C until 350°C. Then, by cutting the power supply to the heater 812 of the sample table 811, the sample table 811 is cooled (air-cooled by heat conduction) .. During temperature decreasing, the discharged gas amount is measured at intervals of 50°C until the temperature reached to room temperature. This process is repeated multiple times, and the values of the discharged gas amount at each temperature point of the sample table are averaged to obtain a background value of the discharged gas amount at the temperature point.

Next, the measurement of the test bearing 801 is performed. After setting the test bearing 801 on the sample table 811, with the same method as that of the background value measurement, the measurement at a specific point is repeated multiple times in a range from room temperature to 350°C. The average value at each point is the amount value of discharged gas at the temperature point. When the measurement of another test bearing 801 is performed, the remaining gas of the previous test may be adsorbed on a wall of the vacuum chamber 810.. Therefore, after sufficiently performing baking which is performed before the background value measurement, the test bearing 801 is set for the measurement.

As a result, both the outgassing amounts of the self-lubricating composite materials of Examples and the self-lubricating composite materials of Comparative Examples were extremely small, and there were no difference in superiority. Specifically, the amounts of discharged gas in a range from room temperature to 350°C in both Examples and Comparative Examples were not significantly different from the background values. At a temperature higher than 250°C, the discharged gas amount tended to be greater than the background values, but a difference therebetween was small It can be determined that the outgassing performances of Examples and Comparative Examples are extremely superior, and there is substantially no difference there between. On the other hand, in the case of the fluorine grease-filled bearing, the outgassing amount was significantly large. In the case of the fluorine grease-filled bearing, since the vacuum chambers are contaminated, the upper limit temperature of the test was set to 170°C.

In this measurement, test conditions (measurement conditions) were set as follows.
Composition of self-lubricating composite material:

Examples: 60 mass% of $MoS_2$-1.0 mass% of Cu and Ni in total (the respective contents of Cu and Ni are the same)-4 mass% of C-17.5 mass% of W-17.5 mass% of balance containing Fe
Comparative Examples: 60 mass% of $WS_2$-2.0 mass% of (Ni-20Cr-3B) -3.0 mass% of (Ni-12.7B)-35 mass% of balance containing WB
Shape of self-lubricating composite material: Cylindrical spacer having a size of about $\phi$ 4 mm$\times$3 mm
Bearing type: Bearing having a cage illustrated in FIG. 1 (bearing having a press cage in the case of the fluorine grease-filled bearing)
Bearing inner diameter: About $\phi$ 10 mm
Temperature: Room temperature, 100°C to 350°C at intervals of 50°C (100°C, 150°C, 200°C, 250°C, 300°C, 350°C)
Bearing setting state: Held in a state where an end surface faces upward, no shield plate
Pressure: About $1.0\times10^{-6}$ Pa to 1.0 10-7 Pa
Vacuum chamber volume: 1000 mm$^3$

(32) Oscillating Bearing Endurance Performance in Vacuum Environment at High Temperature

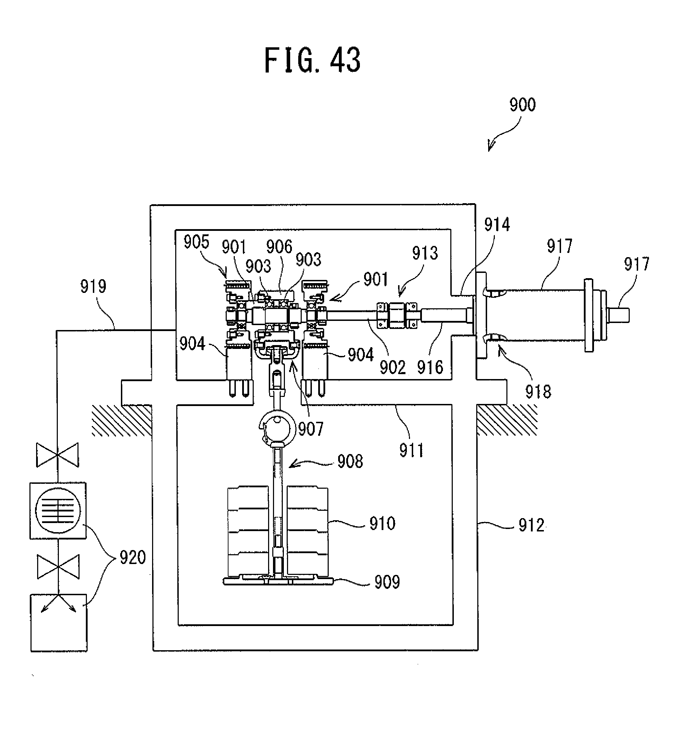

Using a vacuum-high-temperature-bearing endurance testing device illustrated in FIG. 43, the oscillating bearing endurance performance in a vacuum environment at a high temperature was measured in the following manner. The results are illustrated in FIG. 42. In Example_1 and Example_2, bearings using the self-lubricating composite material of Example 1 were used. In Comparative Example_1 and Comparative Example_2, bearings using the self-lubricating composite material having the composition disclosed in Japanese Patent No. 3785283 were used. Due to this oscillation, during rotation reversal, a ball and a cylindrical spacer slide on inner and outer rings, and this sliding occurs frequently. Therefore, typically, the endurance performance is significantly decreased as compared to one-direction rotation. Therefore, in this test, the number of rotations at which the test was stopped was decreased to be less than 10,000,000 rotations of the case of the one-direction rotation, and was set to 2,500,000 rotations (cycles).

As a result, it was found that, when Examples are compared to Comparative Examples, the oscillating bearing endurance performance in a vacuum environment at a high temperature is superior. Specifically, in the outgassing performance test, the outgassing amounts of the solid-lubricant spacers of Examples and the solid-lubricant spacers of Comparative Examples were small, and superior outgassing properties were exhibited. However, in the vacuum-high-temperature-oscillating bearing endurance test, the tests of two Examples were stopped, and the bearing service lives of two Comparative Examples were over. Specifically, the bearings of Comparative Examples were able to rotate only around 1,300,000 times. A pocket for a spacer formed in this type of angular bearing cage is small and is adjacent to a ball. Therefore, during bearing oscillation, the spacer frequently collides with the ball, the inner circumference of the pocket, and the outer ring (or inner ring). Therefore, irrespective of the inner and outer ring rotations, in Examples having a small specific gravity, cracking and breakage are difficult to occur as compared to Comparative Examples containing $WS_2$ having a large specific gravity. Therefore, it is presumed that the endurance performance is superior.

It can be said from the results of this test that Examples are superior as the vacuum-high-temperature-oscillating bearing.

There are many cases where the cylindrical-spacer-cage-supporting-type angular bearing used as the test bearing is used as a joint support bearing of a vacuum-high-temperature-transport arm robot. A high-performance vacuum robot for transporting a panel which will be separately described is a kind of the above-described robot. Since most of joint portions of the arm robots are oscillating bearings, it can be said that the bearing according to the embodiment is desirably used as an oscillating bearding. Further, it can be said that a cylindrical-spacer-cage-supporting-type angular bearing having a high volume with respect to an applied load is more preferable.

(33) Vacuum-High-Temperature-Bearing Endurance Test

Using the vacuum-high-temperature-bearing endurance testing device illustrated in FIG. 43, a vacuum-high-temperature-bearing endurance test was performed in the following manner.

<Configuration>

As illustrated in FIG. 43, in the vacuum-high-temperature-bearing endurance testing device 900, a pair of test bearings 901 are inserted into end surfaces of a shaft, respectively, and are arranged to be distant from each other. A pair of support bearings 903 and 903 are arranged between the two test bearings 901 and 901 to be adjacent to each other. As the support bearings 903, bearings having a higher load capacity and a larger diameter than those of the test bearings 901 are selected. The support bearings 903 are filled with fluorine grease for a vacuum environment for lubrication. The test bearings 901 are separately supported by test bearing housings 904 having gate shapes which are symmetrically identical to each other in the drawing. Heaters 905 are embedded in the test bearing housings 904 so as to surround the outer diameter surfaces of the test bearings 901. By supplying power to the heaters 905, the test bearings 901 of the respective test bearing housings 904 can be heated to and held at a predetermined temperature When the temperatures of the test bearings 901 increase, the temperatures of the support bearings 903 which are attached on the same axis also increase due to heat conduction. However, since the support bearings 903 are set to have a large diameter than that of the test bearings 901, peripheral components thereof are also relatively large. Therefore, even when the test bearings 901 are heated to a temperature of about 400°C, the support bearings 903 are only at around 200°C. Therefore, in order to lubricate the support bearings 903, fluorine grease (upper limit of use temperature: about 230°C) can be used. The test bearing housings 904 are provided so as to be vertically erect on a smooth base plate 911, and a shaft 902 is arranged parallel to the base plate 911. A support bearing housing 906 is arranged such that the center on the axis between the two support bearings 903 and 903 matches with the center on the axis between the two test bearings 901 and 901. A weight suspending rod 908 passes through a hole formed through the base plate 911 and is suspended below the center of the support bearings 903 through a spherical seat. A weight plate 909 is horizontally attached on a lower tip end of the weight suspending rod 908 to load a weight 910 thereon. A combination of the weight 910 is adjusted so as to generate a radial load under test conditions. Due to an effect of the spherical seat, the radial load is applied to the center on the axis of the support bearings 903. Therefore, the same radial load can be applied to the two test bearings 901. The base plate 911 is horizontally provided in a vacuum chamber 912, the test bearing housings 904 are arranged in an upper surface thereof, and the weight 910 is suspended in the air in a lower surface thereof. A rotation introducing hole 914 is provided on a vertical plane of the vacuum chamber 912, and a magnetic seal unit 915 is air-tightly attached therethrough. Due to a seal function of the magnetic seal 915, the inside of the vacuum chamber 912 can hold air-tightness even in a vacuum environment. When an input shaft 917 positioned on a normal pressure environment side of the magnetic seal 915 rotates, a rotation introducing shaft 916 at the opposite end rotates together with the input shaft 917. For example, a servo motor etc. (not illustrated) are connected to the input shaft 917 through a coupling (not illustrated). When the input shaft 917 rotates, the rotation introducing shaft 916 positioned in the vacuum chamber 912 rotates. In the magnetic seal unit 915, one or more pairs of water cooling ports 918 are provided. By circulating cooling water through a tube from a water circulating device (not illustrated), the magnetic seal unit 915 can be water-cooled. Even if the rotation introducing shaft 916 is heated by heat conduction, the magnetic seal 915 can introduce rotation without losing air-tight performance due to the water-cooling function. The shaft extends to further right side from the test bearings 901 on the right side of the drawing, and a shaft end thereof and the rotation introducing shaft 916 can coaxially bind to each other through a coupling 913. By rotating the input shaft 917 on the normal pressure environment side, the test bearings 901 in the vacuum chamber 912 are rotated at a rotating speed equal to that of the input shaft 917. After supplying power to the heaters 905, the temperatures of the outer diameter surfaces of the outer rings of the test bearings 901 are measured and controlled by temperature sensors (not illustrated) such as thermocouples. As a result, the temperatures of the test bearings 901 can be held at a predetermined test temperature. The coupling 913 is formed of a metal having a thermal expansion coefficient close to that of the shaft, or is provided with a key (not illustrated) such that the coupling 913 does not slide on the shaft or the rotation introducing shaft even if heat is conducted thereto from the test bearings 901 through the shaft. An exhaust tube 919 is attached on the vacuum chamber 912 on the normal pressure environment side. A vacuum pump 920, in an example of the drawing, a roughing vacuum pump and a turbo pump are serially and air-tightly connected to a trailing end of the exhaust tube 919 such that the inside of the vacuum chamber 912 can be made to be in a vacuum environment due to the evacuation function of the vacuum pump 920. The weight 910 having a predetermined size for generating a predetermined radial load is suspended from the support bearings 903, and then the inside of the vacuum chamber 912 is made to be air-tight. Next, the inside of the vacuum chamber 912 is made to be in a vacuum environment by operating the vacuum pump 920, and the test bearings 901 are held at a predetermined test temperature by supplying power to the heaters 905. Next, when the input shaft 917 of the magnetic seal 915 is rotated by the servo motor (not illustrated) at a predetermined rotating speed, the endurance test of the test bearings 901 can be performed in a vacuum environment.

While monitoring a monitor voltage of the servo motor, a voltage value may be four or more times a normal voltage value, an abnormal noise which cannot be heard in the normal state may be heard from the bearings, or the bearings may be locked. Since this phenomenon is proof that the bearing reaches its endurance service life, the endurance test is stopped at that time, and the total number of rotations until that time was evaluated as the endurance performance of the test bearings.

In this measurement, test conditions (measurement conditions) were set as follows.
Composition of self-lubricating composite material:

Examples: 60 mass% of $MoS_2$-1.0 mass% of Cu and Ni in total (the respective contents of Cu and Ni are the same) -4 mass% of C-17.5 mass% of W-17.5 mass% of balance containing Fe
Comparative Examples: 60 mass% of $WS_2$-2.0 mass% of (Ni-20Cr-3B)-3.0 mass% of (Ni-12.7B)-35 mass% of balance containing WB
Shape of self-lubricating composite material: Cylindrical spacer having a size of about $\phi$ 4 mm×3 mm
Bearing type: Bearing having a cage illustrated in FIG. 1
Bearing inner diameter: About $\phi$ 10 mm
Radial load: 50 N/1 bearing
Rotating ring: Inner ring
Rotating speed: 1000 $min^{-1}$
Bearing temperature: 400°C
Pressure: About $10^{-4}$ Pa

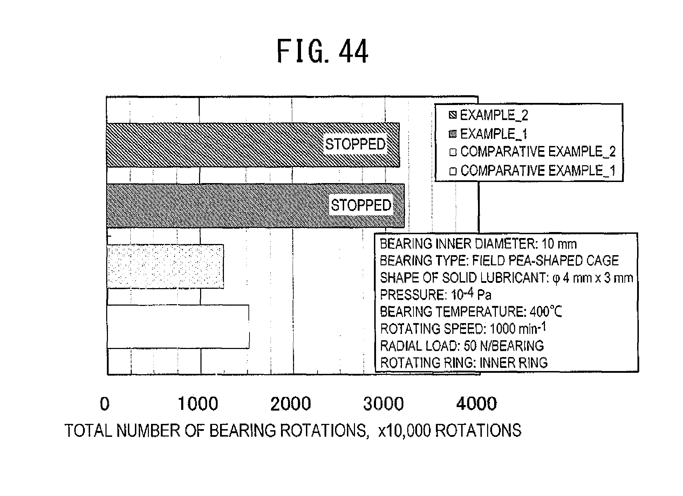

As a result, as illustrated in FIG. 44, it was found that, when Examples are compared to Comparative Examples, the bearing endurance performance in a vacuum environment at a high temperature is superior.

Specifically, in the outgassing performance test, the outgassing amounts of the solid-lubricant spacers of Examples and the solid-lubricant spacers of Comparative Examples were small, and superior outgassing properties were exhibited. However, in the vacuum-high-temperature bearing endurance test (this test), the tests of two Examples were stopped at more than 30,000,000 rotations, and the bearing service lives of Comparative Examples were over at 15,000,000 rotations.

It is presumed that the solid lubricant materials of both Examples and Comparative Examples are suitable for a high temperature and a vacuum environment in terms of the outgassing performance In a vacuum environment, unless the self-lubricating composite material requires air for exhibiting lubricating performance, the oxidation degradation of the self-lubricating composite material is small in a vacuum environment under the same test conditions where, for example, there is no mechanism designed for preventing lubricating performance from being inhibited, for example, when the surface of wear debris is immediately oxidized, the shape of the wear debris is likely to be fine, and the wear debris is transferred again on a lubricating surface. Therefore, there are many cases where the bearing endurance performance is higher in a vacuum environment rather than in the air. Accordingly, the stop condition of this test is set to more than 30,000,000 rotations as compared to more than 20,000,000 rotations in the case of the air.

It can be said from the results of this test that Examples are superior as the vacuum-high-temperature bearding.

It can be said from the results of the above-described endurance tests that the rolling bearing according to the embodiment is desirable for the following uses of (a) and (b)

(a) High-temperature bearing used in the air: particularly in a temperature range (the upper limit of use temperature of fluorine grease is only around 230°C) where grease lubrication is impossible at 200°C or higher
Device examples: Tenter clip (described above), high-temperature film transport device, intra-furnace conveyor, kiln car
(b) High-temperature bearing used in a vacuum environment, particularly in a high-vacuum region (about $10^{-4}$ Pa to $10^{-6}$ Pa) : particularly in a temperature range (the upper limit of use temperature of fluorine grease is only around 230°C) where grease lubrication is impossible at 200°C or higher

This is because the rolling bearing according to the embodiment has not only superior endurance performance in a vacuum environment at a high temperature but also significantly satisfactory outgassing property.

Device examples: Vacuum deposition device, continuous sputtering furnace, vacuum robot for transporting a panel

<High-Temperature Film Transport Device>

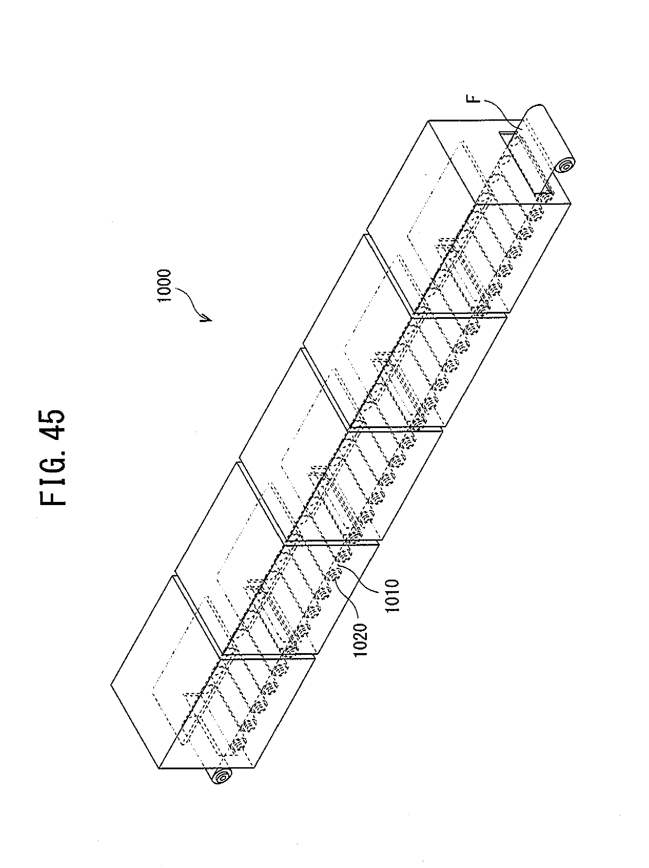

Hereinafter, referring to FIG. 45, a high-temperature film transport device will be described as an application example of the high-temperature bearing used in the air to which the rolling bearing according to the embodiment seems to be desirably applied.

The high-temperature film transport device transports a film to the inside of a high-temperature baking furnace for a high-function film (a film, such as a phase difference film, formed of a liquid crystal display, a secondary battery, an organic EL, or the like).

<Configuration>

A high-temperature film transport device 1000 transports a film F to the inside of a furnace held at a high temperature (100°C to 400°C). By being exposed to a high temperature, the film F is subjected to a heat treatment to make the film F exhibit functionality.

The film F is transported on a number of rollers 1010. The rollers 1010 may be arranged at the same height to transport the film F thereon as illustrated in FIG. 45. However, the rollers 1010 may also be arranged at different heights, respectively. In this case, due to the positional relationship, the film F may be wound around a part of outer circumferences of the rollers 1010 such that the film F is applied with a tension from the rollers 1010. A part of the rollers 1010 are driving rollers, and most of the rollers 1010 are driven rollers.

There are many cases where bearings 1020 are arranged adjacent to both ends of the respective rollers 1010 and support the rollers 1010. At this time, the bearings 1020 are an inner ring rotation type. Alternatively, there are cases where the bearings 1020 are embedded at end surfaces of the rollers 1010, and the inner rings of the bearings 1020 are attached to fixing shafts In such cases, the rollers 1010 rotate relative to the fixing shafts. At this time, the bearings 1020 are an outer ring rotation type. The bearings 1020 according to the embodiment exhibit high endurance performance at a high temperature during both the outer ring rotation and the inner ring rotation and thus can be desirably used in any type (either inner ring rotation or outer ring rotation) of high-temperature film transport device 1000. In particular, the bearings 1020 according to the embodiment can be more desirably used in a temperature range of higher than 200°C where grease lubrication is difficult.

<Intra-Furnace Conveyor>

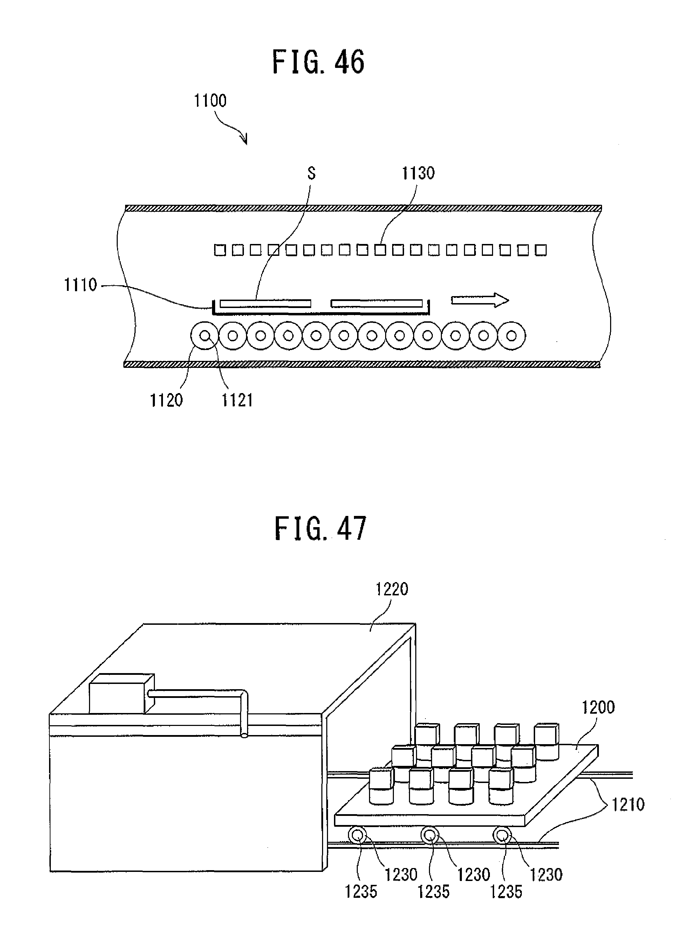

Hereinafter, referring to FIG. 46, an intra-furnace conveyor will be described as an application example of the high-temperature bearing used in the air to which the rolling bearing according to the embodiment seems to be desirably applied. The intra-furnace conveyor performs a heat treatment on a glass substrate of a plasma display or a ceramic electronic device.

<Configuration>

In an intra-furnace conveyor 1100, a transport target S (glass substrate or a ceramic component) is loaded on a tray 1110 and transported in a furnace held at a high temperature (100°C to 400°C). By being exposed to a high temperature, a glass substrate or a ceramic is subjected to a heat treatment. The tray 1110 is transported on a number of rollers 1120. As illustrated in the drawing, the rollers 1120 are arranged at the same height to transport the tray thereon.. In the rollers 1120, driving rollers and driven rollers are mixed and, in many cases, are alternately arranged.

There are many cases where bearings 1121 are arranged adjacent to both ends of the respective rollers 1120 and support the rollers 1120. At this time, the bearings 1121 are an inner ring rotations type. Alternatively, there are cases where the bearings 1121 are embedded at end surfaces of the rollers 1120, and the inner rings of the bearings 1121 are attached to fixing shafts. In such cases, the rollers 1120 rotate relative to the fixing shafts. At this time, the bearings 1121 are an outer ring rotation type. The bearings 1121 according to the embodiment exhibit high endurance performance at a high temperature during both the outer ring rotation and the inner ring rotation and thus can be desirably used in any type (either inner ring rotation or outer ring rotation) of intra-furnace conveyor. In particular, the bearings 1121 according to the embodiment can be more desirably used in a temperature range of higher than 200°C where grease lubrication is difficult.

<Kiln Car>

Hereinafter, referring to FIG. 47, a kiln car will be described as an application example of the high-temperature bearing used in the air to which the rolling bearing according to the embodiment seems to be desirably applied.. A kiln car 1200 is a kind of a carriage, travels on a rail 1210 while loading brick materials thereon, is carried in a baking furnace 1220, and is subjected to a heat treatment. That is, the kiln car 1200 is a device for baking bricks.

<Configuration>

The carriage (kiln car) is carried on the rail 1210 in the baking furnace 1220 in which the rail 1210 is constructed from an entrance to the inside of the furnace, slowly travels in the furnace for a long time (about 12 hrs), and is carried out to an exit of the furnace on the opposite side. The internal temperature of the furnace is held at a high temperature (1200°C, however the bearing temperature is about 400°C), and bricks (along with the kiln car) are baked during the travelling in the furnace.
Several axles 1230 are arranged below the kiln car 1200, and wheels travelling on the rail 1210 are attached to the axles.. Bearings 1235 are used for supporting the wheels 1230.
The bearings 1235 are arranged adjacent to the wheels. The bearings 1235 are exposed to a high temperature and support the load of the kiln car 1200 on which bricks as heavy goods are loaded. Therefore, the bearings 1235 require endurance performance at a high temperature. The bearings 1235 according to the embodiment exhibit high endurance performance at a high temperature and thus can be desirably used as the kiln car 1200. In particular, the bearings 1235 according to the embodiment can be more desirably used in a temperature range of higher than 200°C where grease lubrication is difficult.

<Vacuum Deposition Device>

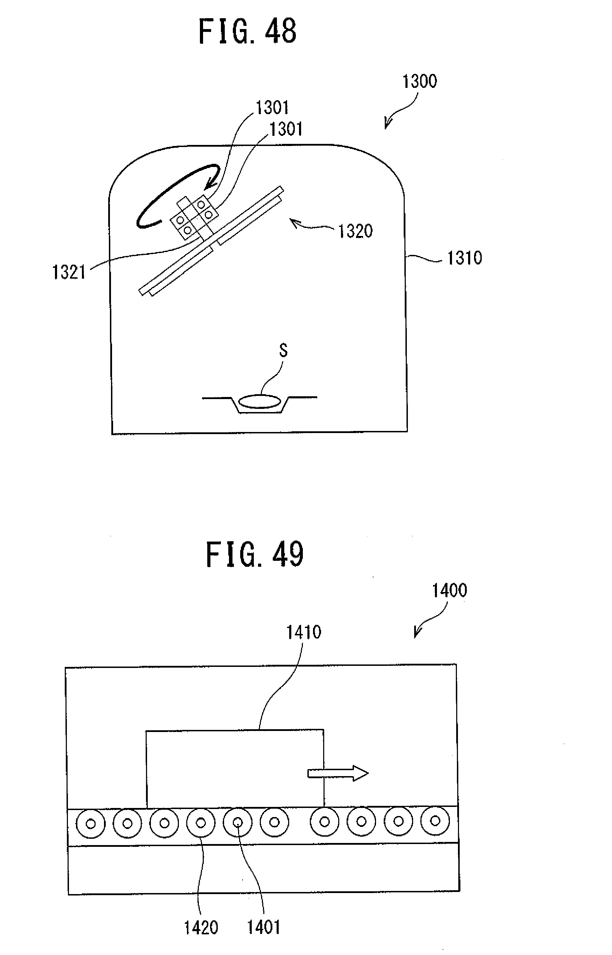

Hereinafter, referring to FIG. 48, a vacuum deposition device will be described as an application example of the high-temperature bearing used in a vacuum environment to which the rolling bearing according to the embodiment seems to be desirably applied. The vacuum deposition device is used for imparting a function of filtering specific wavelength light rays to a lens or glass to prevent ultraviolet rays, reflection, or the like or for preparing a functional mirror, in which one or a combination of materials such as Al, Au, Pt, Cr, Ti, Ni, Mo, Cu, Ag, inconel, or a transparent conductive film is coated on a surface of a lens, glass, or the like by vacuum deposition in a vacuum environment.

<Configuration>

In a vacuum furnace heated to a high temperature (200°C to 400°C), holders 1320 holding a lens or glass are arranged on an inner surface of a dome 1310 where a deposition material S is positioned on the center of a spherical shell. Each holder 1320 has a central shaft 1321.. The central shaft 1321 is supported by bearings 1301 and is rotatably fixed to the inner surface of the dome 1310. The dome 1310 is driven by an external motor and rotates around a deposition material position as an axis. Along with the rotation of the dome 1310, each lens or glass fixed to the dome 1310 revolves around the axis of the deposition material. At this time, rollers arranged on the same axis as that of the bearings 1301 travel on a ring-shaped rail (not illustrated) arranged adjacent to the dome 1310. As a result, the bearings 1301 and the rollers rotate, and the lens or the glass coaxially integrated with the rollers rotates.. The deposition material is disposed on the center of the spherical shell of the dome 1310 such that the entire inner surface of the dome 1310 is equally distant from the deposition material. Further since lenses or glass rotate and revolve during a deposition treatment, and all the surfaces of lenses or glasses are coated at a uniform thickness.
Regarding the bearings 1301, inner rings may be supported by the central shaft of the holder, or outer rings may be fitted to a housing of the holder. In addition, depending on devices, the bearings 1301 may be an inner ring rotation type or an outer ring rotation type . The bearings 1301 according to the embodiment exhibit high endurance performance at a high temperature and high outgassing property at a high temperature during both the outer ring rotation and the inner ring rotation and thus can be desirably used as any type (either inner ring rotation or outer ring rotation) of vacuum deposition device including a vacuum deposition device in which the infiltration of impurities at a molecular level is not preferable. In particular, the bearings 1301 according to the embodiment can be more desirably used in a temperature range of higher than 200°C where grease lubrication is difficult.

<Continuous Sputtering Furnace>

Hereinafter, referring to FIG 49, a continuous sputtering furnace will be described as an application example of the high-temperature bearing used in a vacuum environment to which the rolling bearing according to the embodiment seems to be desirably applied. The continuous sputtering furnace is a device for manufacturing a magnetic disc medium, in which a magnetic material for magnetic recording is coated on a surface of an aluminium alloy disc, a glass disc, or the like by sputtering in a vacuum environment. Examples of the magnetic material for magnetic recording include iron oxide, chromium iron oxide, cobalt iron oxide, magnetic metal materials, and barium ferrite magnetic materials.

<Configuration>

In a continuous sputtering furnace 1400, a substrate carrier 1410 called a carrier is continuously transported in a continuous vacuum furnace heated to a high temperature (100°C to 400°C). Sputtering is performed in one direction on a disc formed of a medium raw material which is fixed to the carrier standing in a vacuum furnace, and thus a single surface of the disc is coated. Only an outer circumference of the disc is supported and is fixed to the middle of a hole which is provided in the carrier and has substantially the same size as that of the outer diameter of the disc. Therefore, by performing sputtering from the opposite surface of the carrier in the next vacuum furnace, both surfaces of the disc can be coated. About 10 to 20 vacuum furnaces are continuously arranged, and each vacuum furnace is air-tightly separated. Therefore, by opening and closing front and back chambers provided together with the vacuum furnace, the carry-in, sputtering, and carry-out processes of the carrier are repeated in a relaying manner while maintaining the pressure in the vacuum furnaces to be high and maintaining the separated state of the processes. As a result, plural coating layers are laminated. The carrier has a plate shape and has plural holes, and the outer diameter surface of the disc is held in the holes. By performing sputtering alternately on front and back surfaces of the disc, finally, the same coating layers are laminated on both surfaces. The carrier is transported not in a horizontal posture but in a vertical posture (standing posture). In the bottom (thick surface) of the carrier, a V-shaped groove is formed over the entire width in a longitudinal direction thereof, and the V-shaped groove rides on tire-shaped outer diameter surfaces of guide rollers The carrier linearly moves by a linear motion power (not illustrated). At this time, the carrier linearly moves in a relaying manner along the tire-shaped outer diameter surfaces of the guide rollers 1420, which are fixed to shafts of a wall surface of a carrier carrying path. Then, the carrier is transported to the next sputtering furnace.

Outer diameter surfaces of bearings 1401 are coaxially fitted to the guide roller 1420 and are embedded in the guide rollers 1420. Inner rings of the bearings 1401 are fitted to the shafts fixed to the wall surface of the carrier carrying path. By rotating the outer rings of the bearings 1401, the guide rollers coaxially rotate together The guide rollers 1420.may not be embedded with the bearings 1401. At this time, the shafts coaxially integrated with the guide rollers 1420 are fitted to the inner rings of the bearings 1401, the outer rings of the bearings 1401 are fitted to and supported by the wall surface of the carrier carrying path, and the guide rollers 1420 are rotatably supported All the guide rollers 1420 are driven rollers, and support and linearly guide the carried. The bearings 1401 according to the embodiment exhibit high endurance performance in a vacuum environment at a high temperature and high outgassing property at a high temperature during both the outer ring rotation and the inner ring rotation and thus can be desirably used as any type (either inner ring rotation or outer ring rotation) of continuous sputtering furnace including a continuous sputtering furnace in which the infiltration of impurities at a molecular level is not preferable. In particular, the bearings 1401 according to the embodiment can be more desirably used in a temperature range of higher than 200°C where grease lubrication is difficult.

<Vacuum Robot for Transporting Panel>

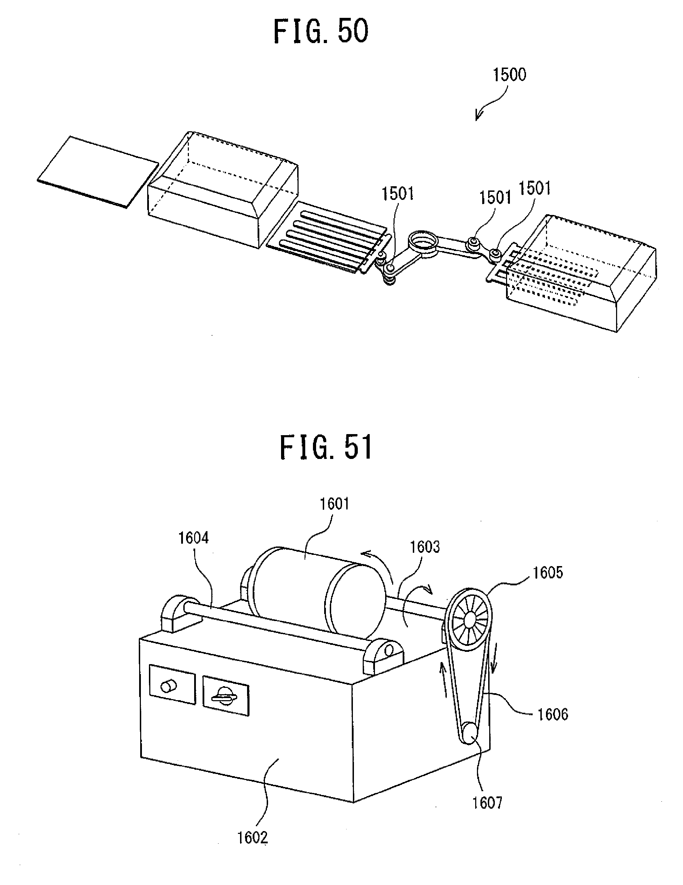

Hereinafter, referring to FIG. 50, a vacuum robot for transporting a panel will be described as an application example of the high-temperatuxe bearing used in a vacuum environment to which the rolling bearing according to the embodiment seems to be desirably applied. A vacuum robot for transporting a panel is an arm robot for transporting a large glass substrate, which is a material of a solar cell or an FPD (flat panel display), in a vacuum environment. The vacuum robot for transporting a panel is arranged between one sputtering furnace and another sputtering furnace and performs the carrying-out of the glass substrate from the previous furnace and the carrying-in thereof to the next sputtering furnace.

<Configuration>

Using a vacuum robot 1500 for transporting a panel, sputtering is performed on a glass substrate in a vacuum furnace heated to a high temperature (100°C to 400°C), and additional sputtering is performed in the next vacuum furnace. By repeating the above-described process, sputtering layers are laminated to form a high-function film on the glass substrate. In such a continuous sputtering furnace, the vacuum robot 1500 for transporting a panel is a transport robot. Unlike the above-described continuous sputtering furnace of a magnetic medium, a substrate is large-sized (for example, a large substrate having a size of one length of 2.5 m or greater, a thickness of 0.7 mm, and a weight of 10 kg), thin, and delicate. Therefore, a large arm robot having a horizontal tray may be used. By using the arm robot as a transport device, a panel can be transported in a narrow space or between sputtering furnaces arranged with an inclination. A robot main body is positioned in a vacuum environment. However, only a tray portion enters the inside of a sputtering furnace, and the robot itself does not enter the inside of the sputtering furnace. However, in order not to decrease the temperature of a glass substrate due to the requirement of tact time, an environment where the robot is disposed may be heated, or heat may be conducted from the glass substrate. As a result, there are many cases where a part or the entire portion of the robot is at a high temperature (200°C to 300°C). One robot arm may operate, or two arms having the same shape may operate as illustrated in the drawing at the same time to shorten the transport time. By using at least two arms and folding and expanding the arms, a large panel can be transported in a narrow area.

A linking portion between one arm and another arm or a linking portion between an arm and a body is referred to as "joint". For this joint, a bearing 1501 is necessarily used. In particular, there are many cases where "wrist" and "elbow" joints, which approach a glass substrate, approach a sputtering furnace. Therefore, the bearings 1501 having a small outgassing amount and high endurance performance in a vacuum environment at a high temperature are necessary. Further, since it is necessary that the weight of a glass substrate and a tray be momentarily supported, the angular bearings 1501 having a high load capacity may be necessary. In particular, there are many cases where an angular bearing is used in a "body" joint which supports the base of an arm in a body portion. Depending on the methods of driving the arm, the bearings 1501 for "joint" may be an inner ring rotation type or an outer ring rotation type. In addition, there are few cases where the bearings 1501 continuously rotate in one direction, and there are many more cases where the bearings 1501 oscillate.

The bearings 1501 according to the embodiment exhibit high endurance performance in a vacuum environment at a high temperature and high outgassing property at a high temperature during any of the outer ring rotation, the inner ring rotation, and oscillating and thus can be desirably used as any type (inner ring rotation, outer ring rotation, or oscillating) of vacuum robot for transporting a panel including a vacuum robot for transporting a panel in which the infiltration of impurities at a molecular level is not preferable. In particular, the bearings 1501 according to the embodiment can be more desirably used in a temperature range of higher than 200°C where grease lubrication is difficult. Further, it can be said that, when an angular bearing is required for realizing a high load capacity, the solid-lubricant-spacer-cage-supporting-type angular bearing according to the embodiment is a particularly preferable bearing which satisfies all the conditions of vacuum environment, high temperature, oscillating, high capacity, and low outgassing amount.


(Third Embodiment)

Hereinafter, a third embodiment of the self-lubricating composite material according to the present invention will be described in detail. This embodiment relates to a rolling bearing in which a coating film of the above-described self-lubricating composite material is formed on surfaces of rolling elements (balls).

In the embodiment, as a method of forming a coating film of the above-described self-lubricating composite material on the surfaces of the rolling elements (balls) in the rolling bearing, for example, "spray method", "micro-shot method", or "ball mill method" is used.

In the spray method, a coating film of a self-lubricating composite material or a solid lubricant is formed on ball surfaces by preparing a mixed solution of a solvent such as trichloroethylene and self-lubricating composite material particles or granulated powder of a solid lubricant (for example, $MoS_2$ or $WS_2$), spraying the mixed solution on balls accommodated in a metal pod using a spray gun to coat the mixed solution on all the ball surfaces, taking the balls out from the pod, and evaporating the solvent in a drying furnace at about 150°C to 300°C. There is an advantageous effect in that the thickness of the coating film is relatively large, but it is necessary that a solvent be used and spraying be performed by a manual operation to prevent an uncoated area from being formed.

On the other hand, in the micro-shot method, self-lubricating composite material particles having a particle size within a predetermined width or granulated powder of a solid lubricant (for example, $MoS_2$ or $WS_2$) and the like are mixed with each other using compressed air, and the mixture is vigorously sprayed from a spray gun to collide with ball surfaces accommodated in a metal pod. Using kinetic energy at this time, a coating film of the self-lubricating composite material or the solid lubricant is formed on the ball surfaces at a molecular layer level. The pod can rotate around multiple axes by automatic rotation such that all the balls are uniformly sprayed with the particles. Spraying is performed in a dry environment where a solvent is not used and microparticles are sprayed in the air.

In addition, it is necessary that raw materials having a uniform particle size be prepared and a huge compressor and a spraying device be prepared in order to secure kinetic energy Spraying is also performed by a manual operation to prevent an uncoated area from being formed. However, there are advantageous effects in that a drying process is unnecessary and a coating film having a uniform thickness is likely to be obtained.

The ball mill method is a coating method using a ball mill. A ball mill is a device for rotating a cylindrical pod 1601, for example, a self-lubricating composite material coating film device illustrated in FIG. 51. Specifically, the pod 1601 is positioned such that an axis of the pod 1601 is horizontal to the center of an upper surface of the device.. The pod 1601 is supported by rotating shafts 1603 and 1604 having a significantly smaller outer diameter than a shell diameter of the pod 1601. The two rotating shafts 1603 and 1604 are arranged parallel to each other with a smaller distance than the shell diameter of the pod 1601 therebetween. When the pod 1601 is arranged between the rotating shaft 1603 and the rotating shaft 1604 such the cylindrical axis of the pod 1601 is parallel thereto, the two rotating shafts 1603 and 1604 are adjacent to each other with a smaller distance than the pod shell diameter therebetween.. Therefore, the pod 1601 does not fall down, and the cylindrical surface thereof is in contact with and supported by the two rotating shafts 1603 and 1604. The two rotating shafts 1603 and 1604 can rotate in the same direction using a motor (not illustrated) embedded in a device 1602 (in an example of the drawing, one rotating shaft 1607 is a driving shaft, and another rotating shaft is a driven shaft 1605), in which a rotating speed thereof can be set to a predetermined value. When the rotating shaft 1603 is rotated, the pod 1601 supported by the rotating shaft 1603 rotates due to a friction force with the rotating shaft 1603. By serially arranging plural pods 1601 on the rotating shaft 1603 if they can be within the length of the rotating shaft 1603, the plural pods 1601 can be rotated at the same time . The pod 1601 is an air-tight container and can accommodate powder or a solid material which is smaller than an inner diameter of a material charging hole formed through an end surface of the pod 1601. Before rotating, materials thrown in the pod 1601 are accumulated near the lowest point of an inner wall of the pod 1601. However, once the pod 1601 rotates, the materials rotate together with the pod 1601 due to a friction force with the pod inner wall and a centrifugal force. However, a part of the materials is separated and falls off from the pod inner wall during the rotation and returns to the lowest point of the inner wall of the pod 1601. At this time, the material falling off from the above collides with another material initially present at the lowest point of the pod inner wall. Using this kinetic energy, coating film raw materials which are mixed in the pod 1601 are made to collide with a coating film target component, thereby forming a coating film on a surface of the coating film target component. This treatment method is the ball mill method.

Since the pod 1601 is an air-tight container, there is very little environmental contamination, and the size of the device can be made to be table-sized. Therefore, there is an advantageous effect in that the coating operation can be relatively easily performed. However, since the kinetic energy used for forming the coating film is not large, it is difficult to form a strong coating film, and the amount of a coating film target which can be treated at a time is limited . Therefore, the treatment time is necessarily longer than those of the above-described two methods. However, if the treatment time can be secured, the ball mill method is an effective coating film forming method because the device can be operated in an unmanned manner.

In order to form a coating film of a self-lubricating composite material or a solid lubricant on balls, balls as coating film targets are mixed with the self-lubricating material or the solid lubricant as the coating film raw material, and the mixture is thrown in the pod 1601. At this time, a coating film can be formed of any one of the following forms of the self-lubricating composite material or the solid lubricant.

(A) Particle powder or granulated powder
(B) Sintered compact
(C) Mixture of (A) particle powder or granulated powder and (B) sintered compact

In the case of (A), a coating film is not formed on a ball surface with a method in which powder separated and falling from the pod inner surface collides with a ball at a falling point. Instead, powder is interposed between a falling ball and another ball at a falling point to form a coating film on surfaces of both balls. Alternatively, powder may be interposed between a falling ball and a pod inner wall colliding with the ball to form a coating film.

Since (B) and (C) basically have a smaller specific gravity than that of balls which are coating film targets, it is presumed that the formation principle of a coating film is the same as that of (A).

In the case of (A), coating film raw materials are prepared by mixing raw material powders with each other at a predetermined composition ratio to prepare mixed powder, or by granulating the mixed powder and optionally classifying the granulated powder to obtain granulated powder having a uniform particle size width. Coating film raw materials are relatively easily obtained from raw material powders, but it is necessary that powder be created.

(B) is obtained by putting the mixed powder or granulated powder of (A) into a mold and performing a heat treatment thereon in a sintering furnace to be sintered in a predetermined shape. As compared to (A), the number of treatment processes for obtaining coating film raw materials is increased. However, for example, cracked products of a spacer which are produced due to yield problems during the preparation of a lubricant spacer to be embedded in a rolling bearing, unnecessary spare products, or overproduced products can be used for coating film raw materials regardless of the size. Further, (B) is a solid material, and thus, as compared to the powder of (A), there is advantageous effect that (B) is easily handled and easily operated.

(C) is the mixture of (A) and (B) and thus has the advantageous and disadvantageous effects of both, but (A) and (B) can be used without any waste in a high yield.

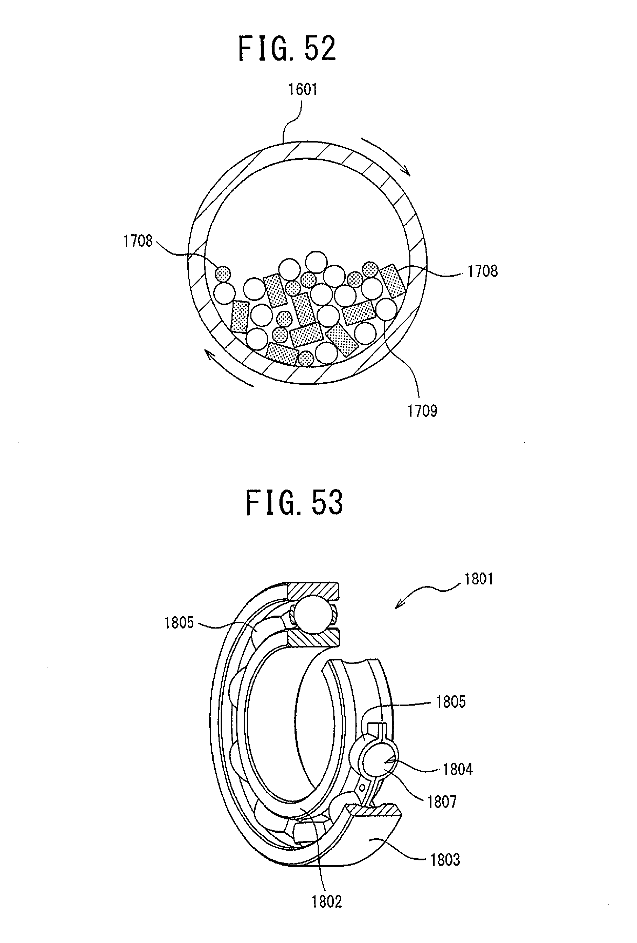

Next, a cross-sectional view of the pod 1601 is illustrated in FIG. 52. Reference numeral 1601 represents a cross-section of the pod, reference numeral 1708 represents (A), (B), or (C), and reference numeral 1709 represents balls.

The balls may be formed of a metal such as SUJ2, SUS440C, or SUS304, or may be formed of a ceramic such as silicon nitride, zirconium dioxide, or silicon carbonate.

When the self-lubricating composite material having the above-described composition is used, a coating film can be formed on a coating film target using any type of method, that is, using the ball mill method, the spray method, or the micro-shot method,

This embodiment relates to a rolling member in which a self-lubricating coating film having the above-described composition is formed on ball surfaces in a rolling bearing, a ball screw device, or a linear motion device of a linear motion guide device (linear guide). Depending on whether other lubricating methods than the ball coating film of the embodiment is provided or not, embodiments of the rolling element can be roughly classified into the following four embodiments.

(Embodiment 3-1) A rolling member is lubricated only by performing the ball coating..

(Embodiment 3-2) A rolling member is lubricated by performing the ball coating and using another self-lubricating composite material or by using only another self-lubricating composite material.

(Embodiment 3-3) A rolling member is lubricated by performing either or both methods: the ball coating; and the coating of another rolling component.

(Embodiment 3-4) A rolling member is lubricated by performing plural methods: the ball coating; the coating of another rolling component; and still another wet lubrication (grease lubrication or oil lubrication).

<Embodiment (3-1)>

The coating film according to the embodiment is formed on balls to obtain rolling elements of the rolling member. FIG. 53 is a cross-sectional view illustrating a part of a configuration of a rolling bearing in which a coating film according to the embodiment is formed on balls. The bearing illustrated in FIG 53 is a deep groove ball bearing having a press cage, but any type of rolling bearing can be applied to the embodiment regardless of whether or not there is a cage. In the embodiment, the coating film forming method is not particularly limited, but one of the above-described methods may be used.

In order to lubricate the rolling bearing according to the embodiment, as illustrated in FIG. 53, by rotating an inner ring 1802 and an outer ring 1803 relative to each other through balls 1804, a coating film 1806 is interposed between surfaces of the balls 1804 and rolling surfaces of the inner ring 1802 and the outer ring 1803 which are in contact with the balls 1804. Since the coating film 1806 is formed of the self-lubricating composite material, the coating film 1806 lubricates both the surfaces of the balls 1804 and the rolling surfaces. While the rotation continues, contact positions between the surfaces of the balls 1804 and the rolling surfaces continuously change. However, since the coating film 1806 is constantly interposed on the contact surfaces, the lubrication is continued.

A part of the coating film 1806 may be transferred from the surfaces of the balls 1804 to the rolling surfaces in contact therewith. The rolling surfaces to which the part of the coating film 1806 is transferred are imparted with lubricating performance such that, when being brought into contact with the surfaces of the balls 1804, both surfaces are lubricated. The above-described transfer of the coating film 1806 and the lubrication are continuously performed, and thus the rolling bearing 1801 can continuously rotate. When the coating film 1806 is repeatedly used for the lubrication by further continuing the rotation of the rolling bearing 1801, the coating film 1806 gradually deteriorates and loses the lubricating performance little by little. When the coating film 1806 having the lubricating performance is completely used up, the rolling bearing 1801 loses the lubricating performance and reaches the bearing service life (lubrication service life).

In all the environments of a high-temperature environment, a vacuum environment, and a vacuum high-temperature environment, the self-lubricating composite material of the coating film according to the embodiment has high lubricating performance and a low outgassing property in which the outgassing amount is small Therefore, it can be said that the self-lubricating composite material according to the embodiment is preferable for rolling bearings used in the above-described environments.

In addition, the embodiment can be applied to not only a rolling bearing but also all the rolling members including a linear motion device.

In addition, the rolling member according to the embodiment can be desirably used for a high-temperature transport device such as a tenter clip or for a vacuum-high-temperature transport device such as a vacuum deposition device or a continuous sputtering furnace.

In addition, as a material of a ball or a bearing ring of a rolling bearing, SUJ2 or SUS440C is used, or a ceramic such as silicon nitride, silicon carbonate, or zirconium dioxide is used for rust prevention. The coating film is also formed of a ceramic using the above-described coating film forming method.

<Embodiment (3-2)>

A rolling member is lubricated by performing the ball coating according to the embodiment and using another self-lubricating composite material or by using only another self-lubricating composite material

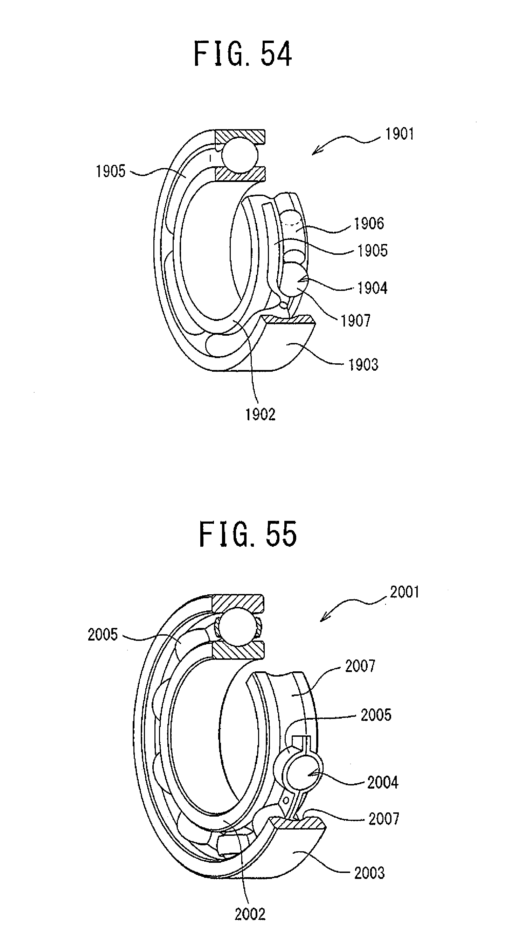

Embodiment (3-2) is identical to Embodiment (3-1), in that the coating film according to the embodiment is formed on balls to obtain rolling elements of the rolling member. FIG. 54 is a cross-sectional view illustrating a part of a configuration of a rolling bearing in which a coating film according to the embodiment is formed on balls. A bearing 1901 illustrated in FIG. 54 is a deep groove ball bearing having a press cage 1905, and two balls 1904 are filled in one ball pocket of the cage 1905. A solid-lubricant spacer having a cylindrical shape (hereinafter, referred to as "cylindrical spacer" or "spacer") 1906 is arranged between one ball 1904 and another ball 1904 in the pocket such that end surfaces of the spacer 1906 face the balls adjacent to the spacer 1906. The ball pocket has a field pea shape and accommodates two balls 1904 and the cylindrical spacer 1906. Plural pockets are arranged in a circumferential direction at regular intervals. The method of forming the coating film 1907 on the balls 1904 is not particularly limited, but one of the above-described methods may be used.

The rolling bearing according to the embodiment is lubricated in two stages. The first stage is called the initial lubrication and has the same lubrication mechanism as that of Embodiment (3-1). That is, along with the rotation of the rolling bearing, the coating film is interposed between ball surfaces and rolling surfaces of bearing rings in contact with balls. Since the coating film is formed of the self-lubricating composite material, the coating film lubricates both the ball surfaces and the rolling surfaces. By continuing this process, the lubrication of the rolling bearing is continued.

At the same time, the second stage of lubrication is started. When the rolling bearing rotates, the balls slide on end surfaces of the spacer adjacent thereto. The spacer is formed of the self-lubricating composite material according to the embodiment. Due to the sliding with the balls, a part of the self-lubricating composite material is transferred to the ball surfaces to form a solid lubricating coating film. When the balls continuously rotate, the solid lubricating coating film reaches the rolling surfaces of the bearing rings to lubricate the ball surfaces and the rolling surfaces. At this time, a part of the solid lubricating coating film is transferred to the rolling surfaces, and is used for lubrication when the rolling surfaces come into contact with the balls. This mechanism is the same as the lubrication mechanism of Embodiment (3-1) between the balls and the rolling surfaces.

Initially, the spacer has a significantly larger weight than the total weight of the self-lubricating composite material of the coating film formed on the balls. Therefore, even if the spacer is gradually decreased by wear and transfer, the spacer is not easily used up. By continuing the transfer of the coating film, the rolling bearing is continuously lubricated. Therefore, in the rolling bearing according to Embodiment (3-1), when the entire coating film of the balls is used up for lubrication, the bearing reaches its lubrication service life. However, the rolling bearing according to Embodiment (3-2) can exhibit significantly higher endurance performance than that of the rolling bearing according to Embodiment (3-1) in which the coating film is formed on only the balls.

However, the self-lubricating composite material of the spacer is transferred to the balls to form a solid lubricating coating film, and the solid lubricating coating film reaches the rolling surfaces of the bearing rings to exhibit lubricating performance. Therefore, since the lubricating function does not work at the start of rotation of the rolling bearing, lubrication failure may occur in the rolling bearing. Therefore, there are many cases where the ball coating is performed together as the initial lubrication. When a cycle of transferring the self-lubricating composite material from the spacer to the balls and using the self-lubricating composite material for lubricating the balls and the rolling surfaces of the bearing rings is established, the ball coating as the initial lubrication is unnecessary. Even when the coating film initially formed on the ball surfaces is used up, the transfer of the self-lubricating composite material from the spacer continues, and the solid lubricating coating film is continuously formed on the balls. Therefore, the rolling bearing can continuously rotate without lubrication failure.

In all the environments of a high-temperature environment, a vacuum environment, and a vacuum high-temperature environment, the self-lubricating composite material of the coating film according to the embodiment has high lubricating performance and a low outgassing property in which the outgassing amount is small. Therefore, it can be said that the self-lubricating composite material according to the embodiment is preferable for rolling bearings used in the above-described environments.

In addition, the embodiment can be applied to not only a rolling bearing but also all the rolling members including a linear motion member.

In addition, the rolling member according to the embodiment can be desirably used for a high-temperature transport device such as a tenter clip or for a vacuum-high-temperature transport device such as a vacuum deposition device or a continuous sputtering furnace.

In addition, as a material of a ball or a bearing ring of a rolling bearing, SUJ2 or SUS440C is used, or a ceramic such as silicon nitride, silicon carbonate, or zirconium dioxide is used for rust prevention. The coating film is also formed of a ceramic using the above-described coating film forming method.

Here, the rolling bearing according to Embodiment (3-2) may be a rolling bearing according to any one of the following embodiments

 (1) Machined-cage-type
 (2) Cylindrical-spacer-filling-slot-type
 (3) Cylindrical-spacer-cage-supporting-type angular bearing

In addition, the summary of the above-described "bearing types" (1) to (3) is as follows.

The machined-cage-type bearing (1) is a bearing having a machined cage illustrated in FIGS. 24A and 24B.

In the machined cage type bearing, as illustrated in FIGS. 24A and 24B, straight round holes as ball pockets are formed on a ring formed of a self-lubricating composite material to penetrate from the outer diameter surface to the inner diameter surface

In addition, the cylindrical-spacer-filling-slot-type bearing (2) has a structure illustrated in FIGS. 25A and 25B and is, for example, a bearing having a structure disclosed in Japanese Patent No. 3608064 or an equivalent structure thexeof.

In FIGS. 25A and 25B, reference numeral 601 represents an inner ring, reference numeral 602 represents an outer ring, reference numeral 603 represents a rolling element, reference numeral 604 represents a spacer, reference numeral 641 represents a clearance of the spacer 604, and reference numeral 642 represents an axial center of the spacer 604. An inner ring notch 613 and an outer ring notch 623 are provided at a shoulder portion 612 of the inner ring 601 and at a shoulder portion 622 of the outer ring 602, respectively. These notches are combined opposite to each other to form an insertion opening.

The spacer 604 is cylindrical, and a projection plane thereof when seen from an axis direction of a bearing has a shape in which the clearance 641 is provided at a portion of the outer circumference as illustrated in FIG. 25B. This shape is similar to and slightly smaller than the shape of a side surface of the insertion opening when seen from the same direction. In addition, in the spacer 604, with the axial center 642 of the projection plane seen from the axis direction of the bearing as a boundary, two corner portions at positions on a diagonal line of the projection plane are linearly cut out at an angle of 45°, to thereby provide the clearances 641. The spacer 604 has a configuration in which both sides of the inner ring notch 613 and the outer ring notch 623 are asymmetrical to each other with the axial center 642 of the spacer 604 as a boundary. In a filling-slot-type bearing, the above-described asymmetric portion is not necessarily provided on the outer and inner ring notches. As a simple rectangular filling slot, a cylindrical spacer to be loaded may have a simple cylindrical shape having no asymmetric portion. As a cylindrical spacer used for the test according to the embodiment, a spacer having a simple cylindrical shape was used.

Since both a machined cage type rolling bearing and a cylindrical-spacer-filling-slot type rolling bearing can be prepared without using a cage-forming press die, there is no limitation for the bearing size and the model number. Therefore, by using these structure types, a wide variety of bearings can be prepared.

Further, the cylindrical-spacer-cage-supporting-type angular bearing (3) is, for example, a solid-lubricant-spacer-cage-supporting-type angular bearing disclosed in JP 2009-236314 A. In this angular bearing, a tapered portion, called a counterbore, for loading balls is formed on a single end surface of an outer ring (or an inner ring), and an opening is formed toward the end surfaces. Therefore, even when a solid-lubricant spacer is loaded between the balls, the spacer falls off from the bearding. Further, the angular bearing is designed such that, in order to increase load capacity, the number of balls to be loaded is filled in a pitch circle. Therefore, it is originally difficult to load a cylindrical spacer between balls. Even if it is attempted to load a cylindrical spacer between balls, inevitably, a thin shape such as a coin is formed Therefore, to deal with this problem, a cage for supporting a cylindrical spacer is introduced as in the embodiment. Regarding this angular bearing, an endurance test was performed.

Here, using an angular bearing disclosed in JP 2009-236314 A as an example, the cylindrical-spacer-cage-supporting-type angular bearing (3) will be described.

As an embodiment of the cylindrical-spacer-cage-supporting-type angular bearing, as illustrated in FIG. 26A, cylindrical spacers 651 and 652 are arranged in contact angle positions. The diameters of the spacers 651 and 652 are smaller than the radius of the balls 603, and the spacers 651 and 652 are arranged at positions distant from a ball equator where one ball 603 and another ball 603 are closest to each other. Therefore, the longitudinal size of the cylindrical spacers can be secured (a coin shape is not formed). Further, since the spacers 651 and 652 are arranged in the contact angle positions, the spacers 651 and 652 slides on lines where the balls 603 travel on the respective races of the outer ring 602 and the inner ring 601 such that the bearing is lubricated.. Therefore, the lubricating performance is increased.

Example of a cage used for the cylindrical-spacer-cage-supporting-type angular bearing

Examples of a cage used for the cylindrical-spacer-cage-supporting-type angular bearing include a cage 604 illustrated in FIG. 26B. In this cage 604, machined holes 641 penetrating from the outer diameter surface to the inner diameter surface of the cage 604 are provided on the circumference to form ball pockets. Circumferential grooves 643 are formed in the outer diameter surface and the inner diameter surface, respectively, so as to bridge over gaps between ball pockets The circumferential grooves 643 are arranged at the contact angle positions of the bearding. The circumferential grooves 643 formed between the ball pockets function as pockets for solid-lubricant spacers. As the material of the cage 604, for example, brass, mild steel such as S45C, stainless steel such as SUS304, or untempered steel is used.

As another embodiment of the cylindrical-spacer-cage-supporting-type angular bearing, as illustrated in FIGS. 27A and 27B, a type in which the diameter of a cylindrical spacer is close to or greater than the radius of balls may be adopted. A cylindrical-spacer-cage-supporting-type angular bearing 600 of FIG. 27A has a configuration in which the lubricating component 651 on the inner ring 601 side reaches further outside of the bearing 600 in the radial direction than the pitch circle of the ball 603. On the other hand, a cylindrical-spacer-cage-supporting-type angular bearing 600 of FIG. 27B has a configuration in which the cylindrical spacer 652 on the outer ring 602 side reaches further inside of the bearing 600 in the radial direction than the pitch circle of the ball 603. By adopting these structures, end surfaces of cylindrical bodies forming the cylindrical spacers 651 and 652 reliably come into contact with the balls 603. Therefore, the solid lubricant composite material forming the cylindrical spacers 651 and 652 is reliably transferred to the ball 603.

In the embodiment, the cylindrical spacer 652 has a coin shape but is supported by the cage 604. Therefore, the cylindrical spacer 652 does not fall down in the bearing 600. In addition, the diameter of the spacer 652 is large, and the spacer 652 slides on the ball 603 such that an end surface thereof is parallel to a tangent line of a ball surface. Therefore, the solid lubricant composite material is easily transferred from the spacer 652 to the ball 603, and the lubricating performance is easily secured.

<Embodiment (3-3)>

A rolling member is lubricated by performing both methods: the ball coating according to the embodiment; and the coating of another rolling component according to the embodiment.

Embodiment (3-3) is identical to Embodiments (3-1) and (3-2), in that the coating film according to the embodiment is formed on balls to obtain rolling elements of the rolling member.

FIG. 55 is a cross-sectional view illustrating a part of a configuration of a rolling bearing in which a coating film according to the embodiment is formed on balls. A bearing 2001 illustrated in FIG. 55 is a deep groove ball bearing having the same press cage as that of Embodiment (3-1), but the coating film 2007 according to the embodiment is also formed on components other than balls 2004, for example, a rolling surface of an outer ring 2003 or an inner ring 2002. The coating film 2007 is not particularly limited as long as it is formed on a rolling surface. However, even if the coating film 2007 is formed on a surface which does not rotate or slide along the rotation of the rolling bearing 2001, there is no effect on the lubricating performance of the rolling bearing 2001. Therefore, there are no problems even if the coating film is formed on non-rolling surfaces for convenience of the coating film forming operation. For example, a case where the coating film is formed using the ball mill method will be described. When the coating film is formed using the above-described method in which balls, an outer ring (or an inner ring), and the self-lubricating composite material as a coating film raw material are thrown in a pod, the coating film is formed not only on ball surfaces and rolling surfaces of bearing rings but also on non-rolling surfaces of the bearing rings However, this coating film does not inhibit the lubricating performance of the rolling bearing, and it is not necessary that the coating film be peeled off.

Components of the rolling bearing, other than balls, on which the coating film is formed may be only one of inner and outer rings including a rolling surface, may be only a cage including a pocket surface, or may be a combination of the above-described components.

The coating film forming method is not particularly limited, but one of the above-described methods may be used.

The rolling bearing according to the embodiment basically has the same lubricating mechanism as that of Embodiment (3-1)". That is, along with the rotation of the rolling bearing, the coating film is interposed between ball surfaces and rolling surfaces of bearing rings in contact with balls.

Since the coating film is formed of the self-lubricating composite material, the coating film lubricates both the ball surfaces and the rolling surfaces. By continuing this process, the lubrication of the rolling bearing is continued.

The coating film is also present in the rolling surfaces in addition to the balls and is used for lubrication. Therefore, the total weight of the coating film according to Embodiment (3-3) is greater than the total weight of the coating film according to Embodiment (3-1) in which the coating film is formed on only the balls. Correspondingly, the rolling bearing according to Embodiment (3-3) can rotate more than the rolling bearing according to Embodiment (3-1) until the entire coating film is used up for lubrication. It can be said that the rolling bearing according to Embodiment (3-3) is superior to the rolling bearing according to Embodiment (3-1) in endurance performance.

When the coating film is formed on a cage pocket, the coating film is transferred from a pocket surface to a ball by the ball and the pocket surface sliding on each other, and the transferred coating film is used for lubricating the ball and rolling surfaces of bearing rings.

The coating film formed on non-rolling surfaces of bearing rings is not used for lubrication during the rotation of the rolling bearing but can be used for lubricating, for example, a fitting surface to a housing or a shaft Therefore, an effect of preventing the rolling bearing from being stuck with a counter member, to which the rolling bearing is fitted, by fretting is obtained.

In all the environments of a high-temperature environment, a vacuum environment, and a vacuum high-temperature environment, the self-lubricating composite material of the coating film according to the embodiment has high lubricating performance and a low outgassing property in which the outgassing amount is small. Therefore, it can be said that the self-lubricating composite material according to the embodiment is preferable rolling bearings used in the above-described environments.

In addition, the embodiment can be applied to not only a rolling bearing but also all the rolling members including a linear motion member.

In addition, the rolling member according to the embodiment can be desirably used for a high-temperature transport device such as a tenter clip or for a vacuum-high-temperature transport device such as a vacuum deposition device or a continuous sputtering furnace. In addition, regarding the weight of the rolling bearing according to Embodiment (3-3), since only the weight of the coating film is increased, there is a characteristic in that a rolling bearing having a small weight can be prepared. Further, when the coating film is formed on rolling surfaces of bearing rings, the coating film is present in both the balls and the rolling surfaces. Therefore, there is a characteristic in that the lubricating performance is extremely high. Accordingly, the rolling bearing according to Embodiment (3-3) can be more preferably used for a rolling bearing which rotates at a high rotation speed and is applied with a high load at the same time, such as a touchdown bearing of a turbo pump.. In the case of a touchdown bearing, as a material of a ball or a bearing ring of a rolling bearing, SUJ2 or SUS440C is used, or a ceramic such as silicon nitride, silicon carbonate, or zirconium dioxide is used for weight saving. The coating film is also formed of a ceramic using the above-described coating film forming method.

<Embodiment (3-4)>

A rolling member is lubricated by performing plural methods: the ball coating according to the embodiment; the coating of another rolling component according to the embodiment; and still another wet lubrication (grease lubrication or oil lubrication).

Embodiment (3-4) is identical to Embodiments (3-1) to (3-3), in that the coating film according to the embodiment is formed on balls to obtain rolling elements of the rolling member.

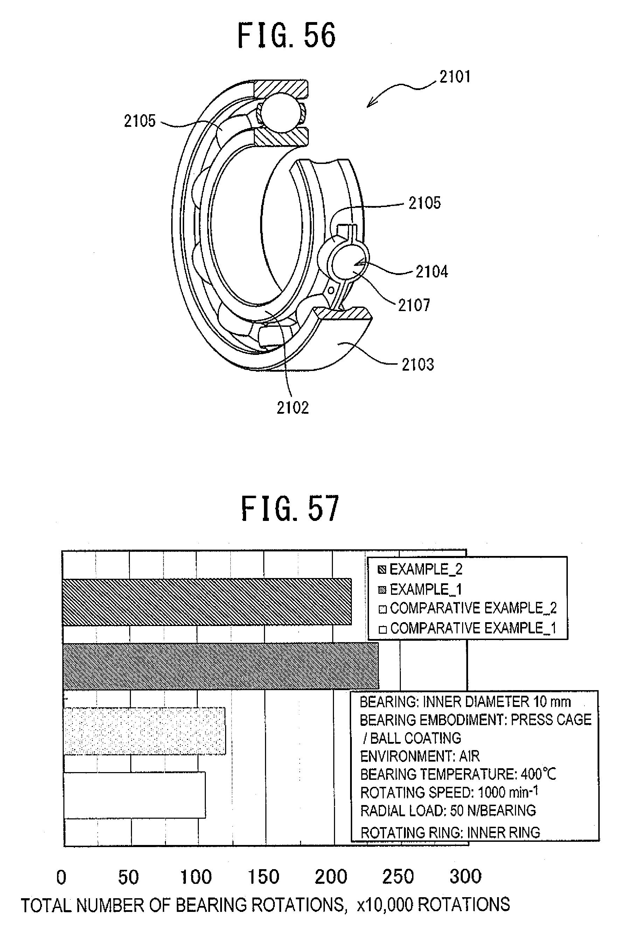

FIG. 56 is a cross-sectional view illustrating a part of a configuration of a rolling bearing in which a coating film according to the embodiment is formed on balls. A bearing 2101 illustrated in FIG. 56 is a deep groove ball bearing having the same press cage as that of Embodiment (3-1), but the internal space of the rolling bearing 2101 is filled or coated with a wet lubricant such as grease or oil. Further, the coating film according to the embodiment is also formed on components other than balls 2104, for example, a rolling surface of an outer ring 2103 or an inner ring 2102. It is preferable that the coating film be formed on the rolling surface, but there is no problem even if being formed on a non-rolling surface. This point is the same as Embodiment (3-3) above. Components of the rolling bearing 2101, other than the balls 2103, on which a coating film is formed may be only one of an outer ring 2103 and an inner ring 2102 including a rolling surface, may be only a cage 2105 including a pocket surface, or may be a combination of the above-described components.

The coating film forming method is not particularly limited, but one of the above-described methods may be used.

Unlike Embodiments (3-1) to (3-3), the rolling bearing according to the embodiment is lubricated, basically, by filling or coating the inside of the rolling bearing with a wet lubricant (hereinafter, referred to as "grease") such as grease.

Here, depending on the kind of the grease, another special function may be imparted in addition to the lubricating performance which is the original function.

For example, fluorine grease or silicon grease exhibits lubricating performance as grease due to the lubricating performance of base oil. However, the grease may function as a heat-resistant grease or a low vapor pressure grease due to a heat resistance or low vapor pressure effect of base oil. Other functions than the lubricating performance may be used according to the required use. For example, for use in a high-temperature device or a vacuum high-temperature device, grease dedicated to the environment is selected and used. A food-grade grease is produced from a synthetic hydrocarbon-based base oil, and the base oil is selected such that, even if the food-grade grease erroneously enters a human mouth, there is no harm.

Since the base oil of such a functional grease has other functions than lubricating performance, there are many cases where the lubricating performance is significantly poor as compared to a commonly-used lubricating grease such as a urethane-based grease or a lithium soap-based grease.

Accordingly, there are many cases where the endurance performance (lubrication service life) of a rolling bearing filled with a functional grease is significantly poor as compared to a rolling bearing filled with a commonly-used lubricating grease.

In addition, the damage pattern of the lubrication service life of a rolling bearing filled with grease is slightly different from that of the coating film formed of the self-lubricating composite material which reaches its lubrication service life when being used up. Once the grease of the grease-filled bearing starts deteriorating through operating history, even if the grease as a whole has sufficient lubricating performance, lubrication failure occurs in a local area of lubricating surfaces, which is a part of balls and rolling surfaces or a part of sliding surfaces between balls and a cage. When lubrication failure occurs in such a part of lubricant surfaces, a state where metals come into direct contact with each other without a lubricating coating film interposed therebetween occurs, and the temperature of the local area is suddenly increased, which causes sticking. When this sticking occurs in an area larger than a predetermined area, seizing occurs, and the rolling bearing is locked. The lubrication failure occurring in the local area does not continue constantly. If base oil is supplied from adjacent grease having lubricating performance, the lubricating performance of the local area is recovered. Since this process is stochastically repeated in all the lubricating surfaces of the rolling bearing, the lubrication service life of the grease-filled rolling bearing varies depending on the individual rolling bearing. However, the mechanism in which the rolling bearing is likely to reach its lubrication service life along with an increase in the frequency and area of local lubrication failure is the same. Due to local lubrication failure, the lubrication service life is unexpectedly over. However, when the coating film according to the embodiment is present in a local area where lubrication failure occurs due to grease deterioration, even if the lubrication failure of grease locally occurs, the sticking of metals can be prevented due to the effect of the coating film. When instant sticking is prevented, the local area can be recovered from lubrication failure by the supply of base oil from the vicinity.

That is, in the rolling bearing according to Embodiment (3-4), the function of the coating film according to the embodiment is temporary relief for lubrication by grease. Accordingly, an effect of increasing the lubrication service life is obtained as compared to a case where the rolling bearing according to Embodiment (3-4) is filled with grease alone. Even in a case where the rolling bearing is filled with a commonly-used lubricating grease, the lubrication service life increasing effect is obtained by this mechanism However, it can be said that the coating film according to the embodiment is particularly preferable in the case of a functional grease which is likely to cause lubrication failure in a local area due to its poor lubricating performance.

Since local lubrication failure may occur in all the rolling surfaces and sliding surfaces of the rolling bearing, it is preferable that the coating film be formed on components including ball surfaces, rolling surfaces of bearing rings, and cage pocket suxfaces.

In addition, the coating film formed on non-rolling surfaces of bearing rings is not used for lubrication during the rotation of the rolling bearing but can be used for lubricating, for example, a fitting surface to a housing or a shaft Therefore, an effect of preventing the rolling bearing from being stuck with a counter member, to which the rolling bearing is fitted, by fretting is obtained.

In all the environments of a high-temperature environment, a vacuum environment, and a vacuum high-temperature environment, the self-lubricating composite material of the coating film according to the embodiment has high lubricating performance and a low outgassing property in which the outgassing amount is small. Therefore, it can be said that use of the self-lubricating composite material according to the embodiment is preferable for a rolling bearing which is filled or coated with grease or oil dedicated to the above-described environments.

In addition, the embodiment can be applied to not only a rolling bearing but also all the rolling members including a linear motion member.

In addition, the rolling member according to the embodiment can be desirably used for a high-temperature transport device such as a tenter clip, for a vacuum-high-temperature transport device such as a vacuum deposition device or a continuous sputtering furnace, or for a food machine in which a food-grade grease is increased.

In addition, as a material of a ball or a bearing ring of a rolling bearing, SUJ2 or SUS440C is used, or a ceramic such as silicon nitride, silicon carbonate, or zirconium dioxide is used for rust prevention. The coating film is also formed of a ceramic using the above-described coating film forming method.

(34) Endurance Performance of Rolling Bearing, which is Subjected to Coating Film Treatment, at High Temperature

Using the high-temperature-bearing endurance testing device illustrated in FIG. 4, the endurance performances of rolling bearings, which were subjected to the coating film treatment according to the third embodiment, at a high temperature, were compared to each other. The results are illustrated in FIG. 57.

In this measurement, in the case of a cylindrical spacer, self-lubricating composite materials of Examples and Comparative Examples did not exhibit different friction coefficient in the air and exhibited superior sliding properties. Using the materials of Examples and Comparative Examples, rolling bearings according to the embodiment (Embodiment (3-1)) in which the coating film of the lubricant was formed on only balls were prepared, and the endurance performances thereof were compared to each other. Examples including the coated balls according to the embodiment exhibited lubricating performance in which the total number of rotations was more than 2,000,000 rotations, but Comparative Examples exhibited lubricating performance in which the total number of rotations was less than or equal to 1,200,000 rotations.

The reason why the endurance performance of the materials of Examples was superior is presumed to be as follows. Although the sliding performance of the original materials of the cylindrical spacers of both Examples and Comparative Examples are not different, the materials of Examples are superior in transfer performance, and the transferred coating film can be easily formed on rolling surfaces of bearing rings. The reason why the endurance performance of the materials of Comparative Examples was poor is presumed to be as follows. Since the materials of Comparative Examples are poor in transfer performance, the coating films fall off without being transferred to rolling surfaces, and thus the endurance performance is poor.

It can be said from the results of this test that Examples are superior, more than double, as a high-temperature rolling bearing.

In this measurement, test conditions (measurement conditions) were set as follows.

Bearing type: Deep groove ball bearing having a press cage (Embodiment 3-1), coating film forming using a ball mill Environment: Air
Bearing temperature: 400°C
Rotating speed: 1000 min$^{-1}$
Radial load: 50 N /1 bearing

Using the outgassing testing device illustrated in FIG. 40, "the outgassing property of a bearing in a vacuum environment at a high temperature" of the rolling bearing subjected to the coating film treatment according to the third embodiment can be investigated using the same method as that of the above-described "outgassing property of a bearing in a vacuum environment at a high temperature". At this time, "bearing type" is a deep groove ball bearing having a press cage (Embodiment 3-1) in which a coating film is formed using a ball mill.

Using the vacuum-high-temperature-bearing endurance testing device illustrated in FIG. 43, "the oscillating bearing endurance performance in a vacuum environment at a high temperature" of the rolling bearing subjected to the coating film treatment according to the third embodiment can be investigated using the same method as that of the above-described "oscillating bearing endurance performance in a vacuum environment at a high temperature". At this time, "bearing type" is a deep groove ball bearing having a press cage (Embodiment 3-1) in which a coating film is formed using a ball mill.

(Fourth Embodiment)

Hereinafter, a fourth embodiment of the self-lubricating composite material according to the present invention will be described in detail. This embodiment relates to a ball screw device using the above-described self-lubricating composite material.

As illustrated in FIG.. 58, a ball screw device 2201 according to the embodiment includes a screw shaft 2210; a nut 2220 that penetrates the screw shaft 2210 and is screwed into the screw shaft 2210 through rolling elements (not illustrated) so as to be movable in an axis direction of the screw shaft 2210. The ball screw device according to the embodiment is adopted as an example of an end deflector type ball screw.

In addition, the above-described self-lubricating composite material 2250 having a ring shape is attached on an end portion of the nut 2220. For example, the above-described self-lubricating composite material 2250 having a ring shape is accommodated in a fixing member 2240 provided on the end surface 2220a of the nut 2220. An inner circumferential surface of the self-lubricating composite material 2250 is slidably attached on the screw shaft 2210.

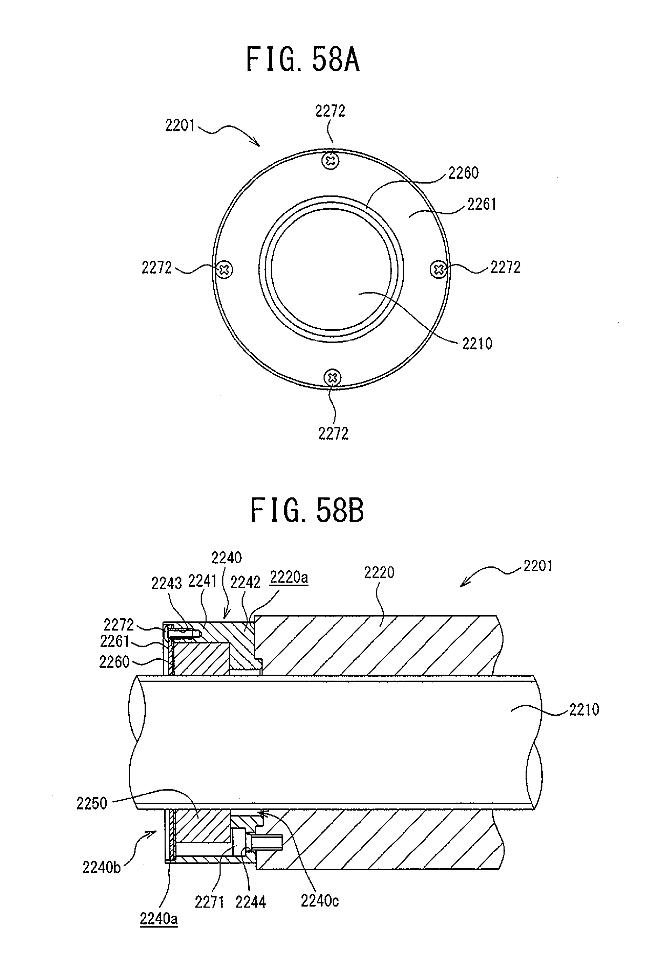

In this way, the ball screw device 2201 according to the embodiment is not limited as long as the screw shaft 2210 penetrates at least one end surface of the nut 2220, and the self-lubricating composite material 2250 is provided on the same axis as that of the screw shaft 2210 such that the inner circumferential surface thereof slides on the screw shaft 2210. Particularly, as illustrated in FIG. 58, it is preferable that the ring-shaped self-lubricating composite material 2250 is arranged in the fixing member 2240, which is arranged on the same axis as that of the end surface 2220a of the nut 2220, in a state where the screw shaft 2210 penetrates the self-lubricating composite material 2250.

In addition, it is preferable that the ball screw device 2201 according to the embodiment include a binding member (not illustrated) for allowing the self-lubricating composite material 2250 and the fixing member 2240 to rotate together. As such a binding member, for example, a detent such as a key is used. In addition, the self-lubricating composite material 2250 may be divided into plural pieces in a circumferential direction.

(35) Endurance Performance of Ball Screw Device at High Temperature

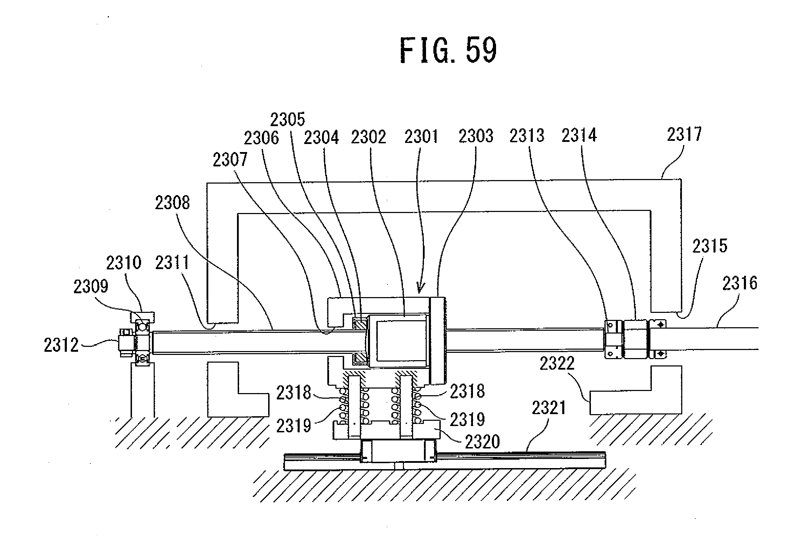

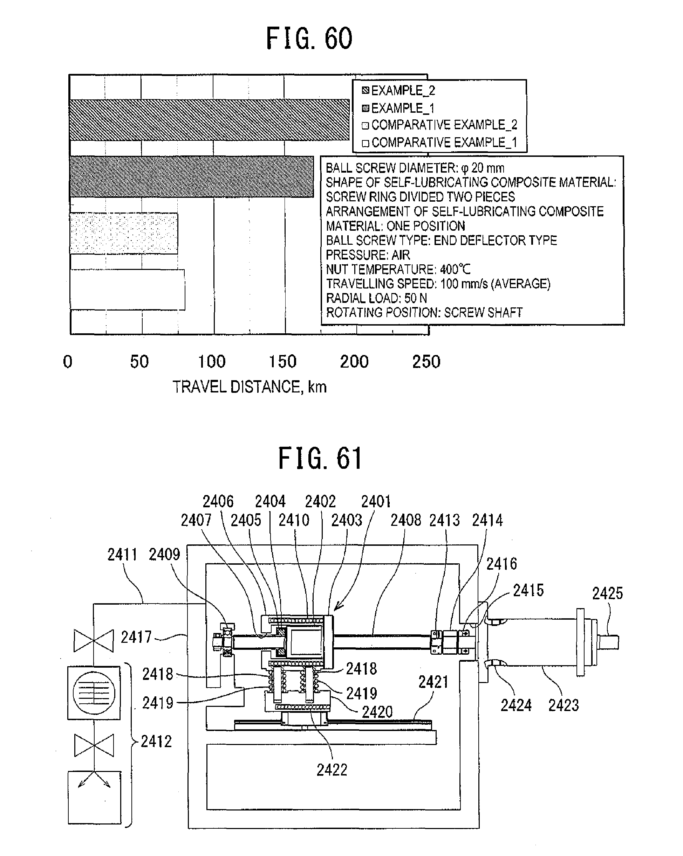

Using a high-temperature-ball-screw-device-endurance testing device illustrated in FIG. 59, the endurance performance of the ball screw device according to the fourth embodiment at a high temperature was measured. The results are illustrated in FIG. 60

<Configuration of

High-Temperature-Ball-Screw-Device-Endurance Testing Device>

As illustrated in FIG. 59, in a high-temperature-ball-screw-device-endurance testing device, a ball screw device 2301 as a measurement target is put into a thermostatic chamber 2317, and an end 2312 of a screw shaft 2308 extends from a screw shaft exit hole 2311, which forms on a side surface of the thermostatic chamber 2317, to the outside of the thermostatic chamber 2317. A support bearing 2309 is arranged on the screw shaft end 2312 extending to the outside.. An outer ring of the support bearing 2309 is fitted to a support bearing housing 2310 so as to support the screw shaft 2308 and to be rotated. The other end 2313 of the screw shaft 2308 is coaxially connected to a coupling 2314, and the coupling 2314 is coaxially connected to a driving shaft 2316 which is introduced from the outside through a driving shaft introducing hole 2315 formed on a side surface of the thermostatic chamber 2317. Once the driving shaft 2316 is rotated by a rotation driving device (not illustrated; for example a servo motor), the screw shaft 2308 of the ball screw device 2301 in the thermostatic chamber 2317 can be rotated.

A fixing member 2305 is attached on an end portion of a nut 2302 of the ball screw device 2301 on the same axis as that of the nut 2302. A space is formed in the fixing member 2305 such that a ring-shaped self-lubricating composite material (hereinafter, also referred to as "ring") 2304 can be accommodated therein.. The screw shaft 2308 penetrates the ring 2304, and the inner diameter of the ring 2304 is set to be greater than the outer diameter of the screw shaft 2308. Therefore, when the screw shaft 2308 is stationary, the ring 2304 is suspended from the screw shaft 2308 due to its own weight, and a horizontal uppermost portion on the outer diameter surface of the screw shaft 2308 is in contact with a horizontal uppermost portion on the inner diameter surface of the ring 2304.

A nut housing 2306 is coaxially fitted to an outer circumferential surface of the nut 2302 of the ball screw device 2301 and is integrated with the nut 2302 by fastening means. When the nut 2302 includes a flange 2303, the flange 2303 may be fastened with an end surface of the nut housing 2306 (FIG. 59 illustrates an example in which the nut 2302 includes the flange 2303). In the nut housing 2306, plural (two in FIG. 59) detent shafts 2318 which vertically protrude downward are arranged in parallel to be fixed, and spiral springs 2319 are fitted to the detent shafts 2318. The detent shafts 2318 penetrate the spiral springs 2319, and ends of the detent shafts 2318 are fitted to a back plate 2320 of a linear motion guide device 2321. The detent shafts 2318 and the back plate 2320 are loosely fitted to each other at a dimensional tolerance of about g7 to f7, and sliding can occur therebetween along the detent shafts 2318. When the back plate 2320 is vertically pushed up to approach the nut 2302, the spiral springs 2319 are compressed, and a reaction force to push the back plate 2320 back down is generated.

In the bottom of the thermostatic chamber 2317, a long hole 2322 parallel to the screw shaft 2308 is provided. In addition, through the long hole 2322, similarly, a linear motion guide device 2321 in which a rail is provided parallel to the screw shaft 2308 is provided outside the thermostatic chamber 2317. An upper surface of a slider of the linear motion guide device 2321 is fastened with the back plate 2320 to be fixed. As a result, the nut 2302 and the slider are integrally connected to each other, and the screw shaft 2308 and the rail are parallel to each other. Therefore, either the nut 2302 or the slider linearly moves, the other one also linearly moves By setting a distance between the nut housing 2306 and the back plate 2320, the spiral springs 2319 interposed therebetween are compressed, and a predetermined radial load can be applied to both the nut 2302 and the slider. That is, the same size of radial load is applied to the nut 2302 in a vertically upward direction and to the slider in a vertically downward direction, respectively.

In this state, when the driving shaft rotates, the screw shaft 2308 rotates. Since the nut 2302 is fitted to the back plate 2320 in which ends of the detent shafts 2318 are fastened with the slider, the nut 2302 linearly moves along the screw shaft 2308 without rotating together with the screw shaft 2308. At the same time, the slider also linearly moves on the rail. When the rotating direction of the driving shaft 2316 is reversed, the nut 2302 and the slider reverse their linear motion direction and return to where they have come from. One-direction rotation is performed at a preset total number of rotations, and then one-direction rotation in the opposite direction is performed at the same total number of rotations as above. By repeating this process, the nut 2302 and the slider can be made to reciprocate at a predetermined stroke. The longitudinal length of the long hole 2322 provided in the bottom of the thermostatic chamber 2317 is set in consideration of the above-described stroke. Therefore, before the linear motion direction is reversed, the detent shafts (to be exact, the spiral springs 2319 which are fixed to the detent shafts) do not collide with a trailing end of the long hole 2322.

The ring 2304 accommodated in the fixing member 2305 is suspended from the screw shaft 2308 when the screw shaft 2308 is stationary. Once the nut 2302 starts linearly moving by the rotation of the screw shaft 2308, the ring 2304 is pressed from the end surface of the nut 2302 to the linear motion direction, and at the same time the outer circumferential surface of the screw shaft 2308 and the inner circumferential surface of the ring 2304 slide on each other. Therefore, the ring 2304 rotates around the screw shaft 2308 while oscillating. At this time, the ring 2304 slide on and collide with the entire outer diameter surface of the screw shaft 2308, and particles of the self-lubricating composite material are transferred from the inner circumferential surface of the ring 2304 to the outer circumferential surface of the screw shaft 2308. At the same time, a part of the particles are transferred to a valley (screw groove) of the screw shaft 2308, and the screw shaft 2308 is lubricated. When balls pass through the particles transferred to the valley, the particles are transferred to the balls, and the balls are lubricated.

Even when a straight hole is formed on the inner diameter surface of the ring 2304, the ring 2304 can lubricate the valley of the screw shaft 2308 and the balls with the above-described mechanism. However, when a female screw having substantially the same but slightly loose shape as that of a female screw which is screwed with the screw shaft 2308, is formed on the inner diameter surface of the ring 2304, the ring 2304 directly slides on the valley of the screw shaft 2308, and thus the lubricating performance can be further increased.. In this case, it is preferable that the ring 2304 and the nut 2302 be made to rotate together by setting a key or the like for preventing the rotation of the ring 2304 in the fixing member 2305 such that the ring 2304 more smoothly rotates around the screw shaft 2308 relative to the screw shaft 2308. In addition, by dividing the ring 2304 into two pieces in a horseshoe shape (the circular ring 2304 is divided into two semi-circular divided shapes) and interposing the above-described key or the like between the two semi-circular divided shapes, the nut 2302 and the two divided shapes (ring 2304) may be made to rotate together. The ring 2304 is gently restricted in an axis direction by an inner end surface of the fixing member 2305 and an end surface of the nut 2302. Therefore, in the case of a semi-circular shape, there are no cases where the ring 2304 falls down in the fixing member 2305 in the screw shaft 2308 direction and functions as a bridge between the screw shaft 2308 and the fixing member 2304 to lock the ball screw device 2301.

Regarding the arrangement of the self-lubricating composite material 2304, it is preferable that the self-lubricating composite material 2304 be accommodated in the fixing member 2305 which is provided on the end surface of the nut 2302 on the same axis as that of the self-lubricating composite material 2304. The arrangement position may be one end surface or both end surfaces of the nut 2302. When the self-lubricating composite material 2304 is arranged on both end surfaces, the supply opportunity of the solid lubricant is doubled. Therefore, the endurance performance of the ball screw device 2301 can be further increased.

In addition, by setting the temperature of the thermostatic chamber 2317, the nut 2302 can be held at a predetermined temperature. By making the nut 2302 to reciprocate while maintaining the temperature, the endurance test of the ball screw device 2301 can be performed at a predetermined temperature.

In this case, all of the support bearing 2309 of the screw shaft 2308, a support bearing (not illustrated) of the driving shaft 2316, and the slider integrally connected to the nut 2302 are heated by heat conduction from the ball screw device 2301. Therefore, by cooling the above-described components using cooling means such as a fan (not illustrated), each of the above-described components can be used at a use limit temperature of a lubricating grease for filling the component, or less. However, since the upper limit temperature of fluorine grease is about 230°, cooling may be unnecessary depending on the test temperature. In this way, the lubricating performance of the support bearing 2309 and the linear motion guide device 2321 does not deteriorate before deterioration of the ball screw device 2301 which is a test target.

It is preferable that the ball screw device 2301 which is a test target and the fixing member 2305 be formed of SUJ2, SUS440C, chromium steel, or high-speed steel. It is preferable that the spiral springs 2319 be formed of INCONEL (registered trade name) in order to maintain spring stiffness at a high temperature.

During the test, a torque value of a motor is monitored in terms of voltage or current. When this value is four or more times a stable torque value after starting the test or when the ball screw device 2301 is damaged and locked, the total travel distance until that time is evaluated as the endurance performance of the ball screw device 2301.

<Measurement Result>

Using the high-temperature-ball-screw-device-endurance testing device illustrated in FIG. 59, the high-temperature endurance performance of the ball screw device at a high temperature was measured in the following manner. The results are illustrated in FIG. 60.

As illustrated in FIG. 60, when the high-temperature endurance performances of ball screw devices of Examples and Comparative Examples configured as below were compared to each other, the endurance performance of Examples was two times that of Comparative Examples in the air at a high temperature.

Specifically, in Comparative Examples, the travel distances were only about 80 km. On the other hand, in Examples, the travel distances were 170 km or greater, and the endurance performance thereof was two or more times that of Comparative Examples. The self-lubricating composite material (hereinafter, "divided ring") is adjacent to the inner wall of the fixing member, where the divided ring is accommodated, and the screw shaft. Therefore, during the rotation of the screw shaft, the divided ring frequently collides with the fixing member and the screw shaft. Therefore, in Examples having a small specific gravity, cracking and breakage are difficult to occur as compared to Comparative Examples containing $WS_2$ having a large specific gravity. Therefore, it is presumed that the endurance performance is superior.

In this test (measurement), test conditions (measurement conditions) were set as follows.

Shape of self-lubricating composite material: Type in which a ring shape is divided into two pieces
Composition of self-lubricating composite material:

Examples: 60 mass% of $MoS_2$-1.0 mass% of Cu and Ni in total (the respective contents of Cu and Ni are the same) -4 mass% of C-17.5 mass% of W-17.5 mass% of balance containing Fe

Comparative Examples: 60 mass% of $WS_2$-2.0 mass% of (Ni-20Cr-3B)-3.0 mass% of (Ni-12.7B)-35 mass% of balance containing WB (in a range defined in Japanese Patent No. 3785283)

Screw shaft diameter: $\phi$ 20 mm

Ball screw device type: End deflector type

Arrangement of self-lubricating composite material: One position at an end surface of the nut

Radial load: 50 N

Travelling speed: 100 mm/s (average)

Nut temperature: 400°C

(36) Endurance Performance of Ball Screw Device in Vacuum Environment at High Temperature

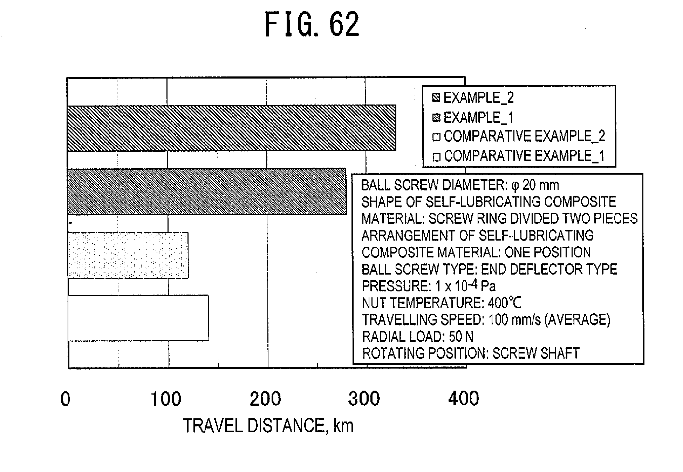

Using a vacuum-high-temperature-ball-screw-device-endurance testing device illustrated in FIG. 61, the endurance performance of the ball screw device according to the fourth embodiment in a vacuum environment at a high temperature was measured. The results are illustrated in FIG. 62.

<Configuration of

Vacuum-High-Temperature-Ball-Screw-Device-Endurance Testing Device>

As illustrated in FIG. 61, in the vacuum-high-temperature-ball-screw-device-endurance testing device, a ball screw device 2401 which is a test target is put into a vacuum chamber 2417. A support bearing 2409 is arranged on an end of a screw shaft 2408 of the ball screw device 2401. An outer ring of the support bearing 2409 is fitted to a support bearing housing so as to support the screw shaft 2408 and to be rotated. The other end of the screw shaft 2408 is coaxially connected to a coupling 2414, and the coupling 2414 is coaxially connected to a magnetic seal vacuum-side shaft 2416 which is air-tightly introduced from the outside through a magnetic seal shaft introducing hole 2415 formed on a side surface of the vacuum chamber 2417. Once a magnetic seal air-side shaft 2425 is rotated by a rotation driving device (not illustrated; for example a servo motor), the screw shaft 2408 of the ball screw device 2401 in the vacuum chamber 2417 can be rotated.

A fixing member 2405 is attached on an end portion of a nut 2402 of the ball screw device 2401 on the same axis as that of the nut 2402. A space is formed in the fixing member 2405 such that a ring-shaped self-lubricating composite material (hereinafter, also referred to as "ruing") 2404 can be accommodated therein. The screw shaft 2408 penetrates the ring 2404, and the inner diameter of the ring 2404 is set to be greater than the outer diameter of the screw shaft 2408. Therefore, when the screw shaft 2408 is stationary, the ring 2404 is suspended from the screw shaft 2408 due to its own weight, and a horizontal uppermost portion on the outer diameter surface of the screw shaft 2408 is in contact with a horizontal uppermost portion on the inner diameter surface of the ring 2404.

A nut housing 2306 is coaxially fitted to an outer circumferential surface of the nut 2402 of the ball screw device 2401 and is integrated with the nut 2402 by fastening means. When the nut 2402 includes a flange 2403, the flange 2403 is fastened with an end surface of the nut housing 2406 (FIG. 61 illustrates an example in which the nut 2402 includes the flange 2403). In the nut housing 2406, plural (two in FIG. 61) detent shafts 2418 which vertically protrude are arranged in parallel to be fixed, and spiral springs 2419 are fitted to the detent shafts 2418. The detent shafts 2418 penetrate the spiral springs 2419, and ends of the detent shafts 2418 are fitted to a back plate 2420 of a linear motion guide device 2421. The detent shafts 2418 and the back plate 2420 are loosely fitted to each other at a dimensional tolerance of about g7 to f7, and sliding can occur therebetween along the detent shafts 2418. When the back plate 2420 is vertically pushed up to approach the nut 2402, the spiral springs 2419 are compressed, and a reaction force to push the back plate 2420 back down is generated.

An upper surface of a slider of the linear motion guide device 2421 in which a rail is provided parallel to the screw shaft 2408 is fastened with the back plate 2420 to be fixed. As a result, the nut 2402 and the slider are integrally connected to each other, and the screw shaft 2408 and the rail are parallel to each other. Therefore, either the nut 2402 or the slider linearly moves, the other one also linearly moves. By setting a distance between the nut housing 2406 and the back plate 2420, the spiral springs 2419 interposed therebetween are compressed, and a predetermined radial load can be applied to both the nut 2402 and the slider. That is, the same size of radial load is applied to the nut 2402 in a vertically upward direction and to the slider in a vertically downward direction, respectively.

In this state, when the magnetic seal air-side shaft 2425 rotates, the screw shaft 2408 rotates. Since the nut 2402 is fitted to the back plate 2420 in which ends of the detent shafts 2418 are fastened with the slider, the nut 2402 linearly moves along the screw shaft 2308 without rotating together with the screw shaft 2308. At the same time, the slider also linearly moves on the rail. When the rotating direction of the magnetic seal air-side shaft 2425 is reversed, the nut 2402 and the slider reverse their linear motion direction and return to where they have come from. One-direction rotation is performed at a preset total number of rotations, and then one-direction rotation in the opposite direction is performed at the same total number of rotations as above. By repeating this process, the nut and the slider can be made to reciprocate at a predetermined stroke. The lengths of the ball screw device 2401 and the linear motion guide device 2421 are set in consideration of the above-described stroke. Therefore, before the linear motion direction is reversed, the nut 2402 and the slider do not reach the screw shaft 2408 and a trailing end of the rail and do not fall off therefrom.

The ring 2404 accommodated in the fixing member 2405 is suspended from the screw shaft 2408 when the screw shaft 2408 is stationary. Once the nut 2402 starts linearly moving by the rotation of the screw shaft 2408, the ring 2304 is pressed from the end surface of the nut 2402 to the linear motion direction, and at the same time the outer circumferential surface of the screw shaft 2408 and the inner circumferential surface of the ring 2404 slide on each other. Therefore, the ring 2404 rotates around the screw shaft 2408 while oscillating. At this time, the ring 2404 slides on and collides with the entire outer diameter surface of the screw shaft 2408, and particles of the self-lubricating composite material are transferred from the inner circumferential surface of the ring 2404 to the outer circumferential surface of the screw shaft 2408. At the same time, a part of the particles are transferred to a valley (screw groove) of the screw shaft 2408, and the screw shaft 2408 is lubricated When balls pass through the particles transferred to the valley, the particles are transferred to the balls, and the balls are lubricated.

Even when a straight hole is formed on the inner diameter surface of the ring 2408, the ring 2408 can lubricate the valley of the screw shaft 2408 and the balls with the above-described mechanism. However, when a female screw having substantially the same but slightly loose shape as that of a female screw which is screwed with the screw shaft 2408, is formed on the inner diameter surface of the ring 2404, the ring 2404 directly slides on the valley of the screw shaft 2408, and thus the lubricating performance can be further increased.. In this case, it is preferable that the ring 2404 and the nut 2402 be made to rotate together by setting a key or the like for preventing the rotation of the ring 2404 in the fixing member 2405 such that the ring 2404 more smoothly rotates around the screw shaft 2408 relative to the screw shaft 2408. In addition, by dividing the ring 2404 into two pieces in a horseshoe shape (the circular ring 2404 is divided into two semi-circular divided shapes) and interposing the above-described key or the like between the two semi-circular divided shapes, the nut 2402 and the two divided shapes (ring 2404) may be made to rotate together. The ring 2404 is gently restricted in an axis direction by an inner end surface of the fixing member 2405 and an end surface of the nut 2402. Therefore, in the case of a semi-circular shape, there are no cases where the ring 2404 falls down in the fixing member 2405 in the screw shaft 2408 direction and functions as a bridge between the screw shaft 2408 and the fixing member 2405 to lock the ball screw device 2401.

Regarding the arrangement of the self-lubricating composite material 2404, it is preferable that the self-lubricating composite material 2404 be accommodated in the fixing member 2405 which is provided on the end surface of the nut 2402 on the same axis as that of the self-lubricating composite material 2404. The arrangement position may be one end surface or both end surfaces of the nut 2402. When the self-lubricating composite material 2404 is arranged on both end surfaces, the supply opportunity of the solid lubricant is doubled. Therefore, the endurance performance of the ball screw device 2401 can be further increased.

In addition, by setting the temperature of a nut-heating heater 2410 illustrated in FIG. 61, the nut 2402 can be held at a predetermined temperature. By making the nut 2402 to reciprocate while maintaining the temperature, the endurance test of the ball screw device 2401 can be performed at a predetermined temperature.

In this case, both the support bearing 2409 of the screw shaft 2408 and the slider integrally connected to the nut 2402 are heated by heat conduction from the ball screw device 2401. However, since the nut-heating heater 2410 is arranged near the nut 2402 and heats only the nut 2402, the temperatures of the support bearing 2409 and the slider do not exceed about 230°C which is the upper limit temperature of fluorine grease filling the support bearing 2409 and the slider. In this way, the lubricating performance of the support bearing 2409 and the linear motion guide device 2421 does not deteriorate before deterioration of the ball screw device 2401 which is a test target.

In addition, as illustrated in FIG. 61, a magnetic seal unit 2423 includes water cooling ports 2424. By circulating cooling water through the inside of the magnetic seal unit 2423, the magnetic seal can be cooled. There are no cases where sealing performance cannot be maintained due to heat conduction from the screw shaft 2408. Accordingly, by activating a vacuum pump 2412 while maintaining the temperature of the nut 2402, the inside of the vacuum chamber 2417 can be made to be in a vacuum environment, and thus the high-temperature test in a vacuum environment can be performed.

It is preferable that the ball screw device 2401 which is a test target and the fixing member 2405 be formed of SUJ2, SUS440C, chromium steel, or high-speed steel. It is preferable that the spiral springs 2419 be formed of INCONEL (registered trade name) in order to maintain spring stiffness at a high temperature.

During the test, a torque value of a motor is monitored in terms of voltage or current.. When this value is four or more times a stable torque value after starting the test or when the ball screw device 2401 is damaged and locked, the total travel distance until that time is evaluated as the endurance performance of the ball screw device 2401.

<Measurement Result>

Using the vacuum-high-temperature-ball-screw-device-endurance testing device illustrated in FIG.. 61, the high-temperature endurance performance of the ball screw device at a high temperature was measured in the following manner The results are illustrated in FIG. 62. As illustrated in FIG.. 62, when the high-temperature endurance performances of ball screw devices of Examples and Comparative Examples configured as below were compared to each other, the endurance performance of Examples was two times that of Comparative Examples in the vacuum-high-temperature-ball-screw-device endurance test (this test). The major component of the self-lubricating composite material according to the present invention used in the ball screw devices of Examples is $MoS_2$, whereas the major component of the self-lubricating composite material of Comparative Examples is $WS_2$ of which the specific gravity is 1.5 times that of $MoS_2$. Therefore, the ring is likely to be cracked or broken due to the collision of the ring with the surface of the screw shaft or the inner wall surface of the fixing member, which is caused along with the rotation of the screw shaft. Further, it is presumed that the results of this test were obtained because the self-lubricating composite material according to the present invention exhibited superior lubricating performance in a vacuum-high temperature environment and superior transfer performance to a counter rolling member. Using the outgassing testing device illustrated in FIG. 40, the outgassing performance test of Examples and Comparative Examples configured as below was separately performed. The outgassing amounts of Examples and Comparative Examples were small, and superior outgassing properties were exhibited (refer to the test results of FIG. 41).

Based on the results illustrated in FIG. 41, it is presumed that the self-lubricating composite materials of Examples and Comparative Examples configured as below are suitable for a high temperature and a vacuum environment in terms of outgassing performance.

On the other hand, based on the results illustrated in FIG. 62, it is presumed that the ball screw devices of Examples using the self-lubricating composite material according to the present invention are superior to the ball screw devices of Comparative Examples in the endurance performance for a high temperature and a vacuum environment.

Accordingly, it can be said from the test results of FIG. 41 and FIG. 62 that the ball screw devices of Examples are suitable as a ball screw device for a vacuum environment and a high temperature.

In a vacuum environment, unless the self-lubricating composite material requires air for exhibiting lubricating performance, the oxidation degradation of the solid lubricant is small in a vacuum environment under the same test conditions, for example, as long as there is no mechanism for preventing lubricating performance from being inhibited, for example, when the surface of wear debris is immediately oxidized, the shape of the wear debris is likely to be fine, and the wear debris is transferred again on a lubricating surface. Therefore, there are many cases where the endurance performance is higher in a vacuum environment rather than in the air. In this test in which the other conditions were the same except for a pressure value, the travel distance was increased in Examples and Comparative Examples.

In this test (measurement), test conditions (measurement conditions) were set as follows.

Shape of self-lubricating composite material: Type in which a ring shape is divided into two pieces
Composition of self-lubricating composite material:

Examples: 60 mass% of $MoS_2$-1.0 mass% of Cu and Ni in total (the respective contents of Cu and Ni are the same) -4 mass% of C-17.5 mass% of W-17.5 mass% of balance containing Fe

Comparative Examples: 60 mass% of $WS_2$-2.0 mass% of (Ni-20Cr-3B)-3.0 mass% of (Ni-12.7B)-35 mass% of balance containing WB (in a range defined in Japanese Patent No. 3785283)
Screw shaft diameter: $\phi$ 20 mm
Ball screw device type: End deflector type
Arrangement of self-lubricating composite material: One position at an end surface of the nut
Radial load: 50 N
Travelling speed: 100 mm/s (average)
Nut temperature: 400°C
Pressure: About $1 \times 10^{-4}$ Pa

As described above, the self-lubricating composite material according to the embodiment exhibits the effects of "low friction coefficient in a high-temperature environment" and "low outgassing amount in a vacuum high-temperature environment". In addition, the ball screw device according to the embodiment exhibits the effects of "high endurance performance in a high-temperature environment" and "high endurance performance in a vacuum high-temperature environment". Accordingly, the self-lubricating composite material and the ball screw device according to the embodiments are desirably used for "a high-temperature transport device", "a vacuum-high-temperature transport device", and "a high-vacuum-high-temperature transport device (for example, a continuous sputtering furnace)".

(Fifth Embodiment)

Hereinafter, a fifth embodiment of the self-lubricating composite material according to the present invention will be described in detail.. This embodiment relates to a linear motion guide device using the above-described self-lubricating composite material. Examples of specific embodiments of the linear motion guide device according to the embodiment include "(Embodiment 5-1" to "Embodiment 5-4" described below.

<Embodiment 5-1>

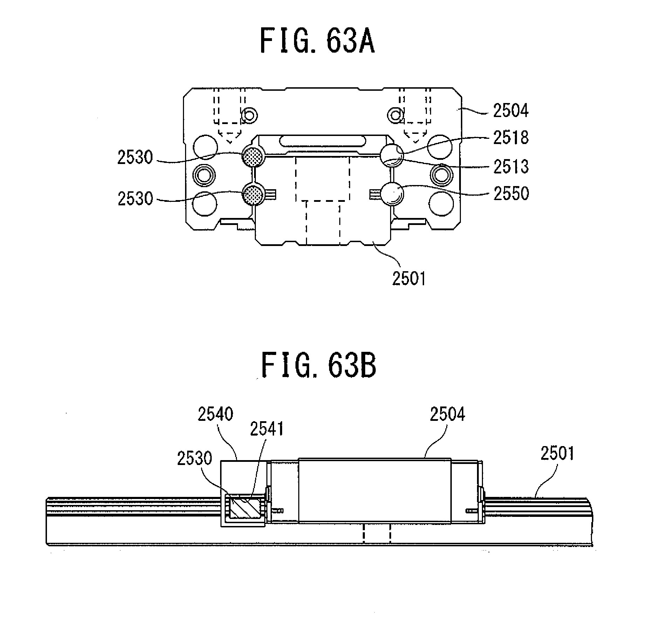

As illustrated in FIGS. 63A and 63B, the linear motion guide device according to the embodiment includes: a guide rail 2501 that includes a rail-side rolling element rolling surface 2513, which extends in an axis direction, as an outer surface; a slider 2504 that is mounted along the guide rail 2501 so as to be movable relative to the guide rail 2501; and a spacer 2530 that is arranged on at least one end side in a moving direction of the slider 2504 and slidably comes into contact with the rail-side rolling element rolling surface 2513. This spacer 2530 is formed of the above-described self-lubricating composite material.

Here, in the linear motion guide device according to the embodiment, it is preferable that the cylindrical spacer (self-lubricating composite material) 2530 be held (accommodated) and arranged in a spacer holder 2540 which is arranged on an end surface of the slider 2504 on at least one end portion side in a moving direction (axis direction) of the guide rail 2501. A body portion of the spacer 2530 slides on the rail-side rolling element rolling surface 2513 to transfer particles of the self-lubricating composite material from the spacer 2530 to the rail-side rolling element rolling surface 2513, and balls (rolling elements) 2550 are lubricated by passing through the particles.

Specifically, as illustrated in FIGS. 63A and 63B, the cylindrical spacer 2530 formed of the self-lubricating composite material is mounted on the rail-side rolling element rolling surface 2513 of the guide rail 2501 of the linear motion guide device such that an axis thereof is parallel to the rail-side rolling element rolling surface 2513 The spacer 2530 is accommodated in a pocket 2541 which is formed in an inner wall of the spacer holder 2540 provided on the end surface of the slider 2504 of the linear motion guide device. A portion of the spacer 2530 is accommodated inside the rail-side rolling element rolling surface 2513, and the remaining portion is accommodated in the spacer holder

2540 Accordingly, even when the slider 2504 travels on the guide rail 2501, the slider 2504 does not fall off from the rail-side rolling element rolling surface 2513 and the spacer holder 2540.

The outer diameter of the spacer 2530 is set to be less than the diameters of the balls 2550. The pocket 2541 has a semi-cylindrical hole shape obtained by dividing a cylindrical hole, of which an axis is parallel to the slider 2504, in the axis direction. The inner diameter of the pocket 2541 is set to be slightly greater than or equal to the diameters of the balls 2550.

Here, the rail-side rolling element rolling surface 2513 and an inner surface of the pocket 2541 form a substantially cylindrical space. A portion of the spacer 2530 is accommodated inside the rail-side rolling element rolling surface 2513, and the remaining portion is accommodated in the pocket 2541. The pocket 2541 is provided with end surfaces corresponding to the bottom and a cover of the semi-cylindrical hole, and these end surfaces are opposite to an end surface of the spacer 2530. Due to these end surfaces (bottom and cover) of the pocket 2541, the spacer 2530 does not fly in the axis direction and fall off from the pocket 2541. That is, when the slider 2504 linearly moves, an end surface of the pocket 2541 opposite to a moving direction of the slider 2504 presses an end surface of the spacer 2530. Therefore, the spacer 2530 linearly moves together with the slider 2504 while being accommodated in the pocket 2541.

In addition, the outer diameter of the spacer 2530 is set to be less than the diameters of the balls 2550, and the inner diameter of the pocket 2541 is set to be slightly greater than or equal to the diameters of the balls 2550. Therefore, the spacer 2530 is accomodated in the substantially cylindrical space, which is formed by the rail-side rolling element rolling surface 2513 and the pocket 2541, without any restriction. Since a clearance between the inner circumferential surface of the substantially cylindrical space and the outer circumferential surface of the spacer 2530 is set to about 0.1 mm to 2 mm, the spacer 2530 can relatively freely move in the substantially cylindrical space. However, the spacer 2530 cannot freely move to the extent that an end surface of the spacer 2530 faces the opposite direction by the spacer 2530 moving in the substantially cylindrical space, and there are no cases where the rail-side rolling element rolling surface 2513 and the inner diameter surface of the pocket 2541 are bridged to lock the slider 2504 by an end surface of the spacer 2530 facing a diameter direction of the substantially cylindrical space.

When the slider 2504 linearly moves, the spacer 2530 also linearly moves together. The spacer 2530 linearly moves when an end surface thereof is pressed by an end surface of the pocket 2541. At this time, the spacer 2530 and the rail-side rolling element rolling surface 2513 slide on each other. As a result, particles of the self-lubricating composite material are transferred from the surface of the spacer 2530 to the rail-side rolling element rolling surface 2513. As long as the spacer 2530 slides on the rail-side rolling element rolling surface 2513, this transfer occurs. When the balls 2550 pass through the self-lubricating composite material transferred to the rail-side rolling element rolling surface 2513, the self-lubricating composite material is interposed between the balls 2550 and the rail-side rolling element rolling surface 2513 to lubricate surfaces of the balls 2550 and the rail-side rolling element rolling surface 2513 Further, the self-lubricating composite material is transferred from the rail-side rolling element rolling surface 2513 to the balls 2550 and is further transferred to a rolling surface 2518 of the slider 2504, thereby constructing a chain of transfer. When the slider 2504 linearly moves, the transfer of the self-lubricating composite material to the rolling surfaces 2513 and 2518 occurs, and the balls 2550 are lubricated by passing through the self-lubricating composite material. By repeating this mechanism, the linear motion guide device can continuously travel without lubrication failure.

Since the self-lubricating composite material having the composition according to the embodiment is superior in the lubricating performance in a high-temperature range, the linear motion guide device according to the embodiment is desirably used in a high-temperature range.

Since the linear motion guide device is used in a high-temperature environment, it is preferable that the linear motion guide device be formed of SUS440C or SUS304 or be formed of SUJ2, chromium steel, untempered steel, or high-speed steel which is subjected to a rust prevention treatment such as plating or black chromium oxide coating. Likewise, since a load is not applied thereto, it is preferable that the spacer holder 2540 be formed of SUS304 or be formed of mild steel such as S45C or SS400 or untempered steel which is subjected to a rust prevention treatment such as plating or black chromium oxide coating.

<Embodiment 5-2>

In this embodiment, in addition to the configuration of Embodiment 5-1, the coating film of the self-lubricating composite material according to the third embodiment is formed on the surfaces of the balls 2550. Hereinafter, ball coating will be described. A method of forming the coating film on the balls 2550 is not particularly limited, but a method according to any one of the above-described

Embodiments (3-1) to (3-4) may be used.

The rolling bearing according to the embodiment is lubricated in two stages. The first stage is called the initial lubrication. Along with the linear motion of the slider 2504, the coating film is interposed between the surfaces of the balls 2550 and the rail-side rolling element rolling surface 2513. Since the coating film is formed of the self-lubricating composite material, the coating film lubricates the surfaces of the balls 2550 and the rail-side rolling element rolling surface 2513. Further, through the transfer to the balls 2550, the self-lubricating composite material is transferred to the rail-side rolling element rolling surface 2513 on the slider 2504 side. By continuing this process, the lubrication of the linear motion guide device is continued.

At the same time, the lubrication of the second stage is started. This stage has the same mechanism as that of Embodiment 5-1. When the slider 2504 linearly moves, an end surface of the spacer 2530 is pressed from behind, and the surface of the spacer 2530 and the rail-side rolling element rolling surface 2513 slide on each other. The spacer 2530 is formed of the self-lubricating composite material according to the embodiment, and, due to the sliding with the rail-side rolling element rolling surface 2513, a part of the self-lubricating composite material is transferred to the rail-side rolling element rolling surface 2513 to form a solid lubricating coating film.

When the balls 2550 pass through the solid lubricating coating film, the self-lubricating composite material lubricates the ball surfaces and the rail-side rolling element rolling surface 2513. The self-lubricating composite material is transferred to the surfaces of the balls 2550 and is further transferred to the slider-side rolling element rolling surface 2518 to be used for lubrication when the balls 2550 pass through the slider-side rolling element rolling surface 2518.

The spacer 2530 originally has a significantly larger weight than the total weight of the self-lubricating composite material of the coating film formed on the balls 2550. Therefore, even if the spacer 2530 is gradually decreased by wear and transfer, the spacer is not easily used up. By continuing the transfer of the self-lubricating composite material, the linear motion guide device is continuously lubricated.

However, the self-lubricating composite material of the spacer 2530 is first transferred to the rail-side rolling element rolling surface 2513 to form a solid lubricating coating film and then reaches the slider-side rolling element rolling surface 2518 through the transfer to the surfaces of the balls 2550 to thereby exhibit lubricating performance on the slider-side rolling element rolling surface 2518 first. Therefore, since there is no lubricating performance on the slider-side rolling element rolling surface 2518 at the start of the linear motion of the linear motion guide device, lubrication failure may occur on the slider-side rolling element rolling surface 2518. Therefore, there are many cases where the coating of the balls 2550 is adopted together as the initial lubrication When a cycle of transferring the self-lubricating composite material from the spacer 2530 to the balls 2550 and using the self-lubricating composite material for lubricating the balls 2550 and the slider-side rolling element rolling surface 2518 is established, the coating of the balls 2550 as the initial lubrication is unnecessary. Accordingly, even when the coating film initially formed on the surfaces of the ball 2550 is used up, the transfer of the self-lubricating composite material from the spacer 2530 continues, and the solid lubricating coating film is continuously formed on the balls 2550. Therefore, the linear motion guide device can linearly move without lubrication failure.

In all the environments of a high-temperature environment, a vacuum environment, and a vacuum high-temperature environment, the self-lubricating composite material of the coating film according to the embodiment has high lubricating performance and a low outgassing property in which the outgassing amount is small. Therefore, it can be said that the self-lubricating composite material according to the embodiment is preferable for linear motion guide devices used in the above-described

environments.

In addition, the linear motion guide device according to the embodiment can be desirably used for a high-temperature transport device such as a tenter clip or for a vacuum-high-temperature transport device such as a vacuum deposition device or a continuous spluttering furnace.

Since the linear motion guide device is used in a high-temperature environment, it is preferable that the linear motion guide device be formed of SUS440C or SUS304 or be formed of SUJ2, chromium steel, untempered steel, or high-speed steel which is subjected to a rust prevention treatment such as plating or black chromium oxide coasting. Likewise, since a load is not applied thereto, it is preferable that the spacer holder be formed of SUS304 or be formed of mild steel such as S45C or SS400 or untempered steel which is subjected to a rust prevention treatment such as plating or black chromium oxide coating. In addition, as a material of the balls, a ceramic such as silicon nitride, silicon carbonate, or zirconium dioxide is used. The ceramic is also coated using a coating film forming method described below.

<Embodiment 5-3>

In this embodiment, in addition to the configurations of Embodiments 5-1 and 5-2, plural spacers 2530 are arranged in the single pocket 2541 in series in the axis direction.

The plural spacers 2530 are cylindrical, but the outer diameters and the lengths thereof are not necessarily the same. However, a clearance between the substantially cylindrical space and the outer circumferential surface of each of the spacers 2530 is set to about 0.1 mm to 2 mm on a single side Each of the spacers 2530 has a high degree of freedom and can move in the substantially cylindrical space. However, the degree of freedom is not high to the extent that the rail-side rolling element rolling surface 2513 and the inner diameter surface of the pocket 2541 are bridged to lock the slider 2504 when an end surface of each of the spacers 2530 changes its posture by 90° to face the rail-side rolling element rolling surface 2513.

The spacer 2530 linearly moves and slide on the rail-side rolling element rolling surface 2513 along with the linear motion of the slider 2504. As a result, the self-lubricating composite material is transferred to the rail-side rolling element rolling surface 2513. By continuing this process, the linear motion guide device is continuously lubricated. This mechanism is the same as described above.

In this embodiment, by providing the plural spacers 2530, each of the plural spacers 2530 freely moves in the substantially cylindrical space and slides on the rail-side rolling element rolling surface 2513. Therefore, as compared to a case where one spacer 2530 is provided in the pocket 2541, sliding opportunity is high, transfer frequency is increased, and lubricating performance is increased. As compared to a case where a large spacer 2530 having a length corresponding to the total length of the plural spacers 2530 is arranged, the number of sliding points or the area of sliding surfaces is increased in a case where each of the plural spacers 2530 can freely move in the pocket 2541. Therefore, it is preferable that the plural spacers 2530 be dividedly arranged in the pocket 2541.

However, when the length of the spacer 2530 is too short, the posture of the spacer 2530 may be rotated by 90° such that an end surface of the spacer 2530 faces the rail-side rolling element rolling surface 2513 and the inner diameter surface of the pocket 2541. Therefore, it is preferable that the length of the spacer 2530 be at least 1/2 or more of the outer diameter of the spacer 2530.

In this embodiment, it is more preferable that the balls 2550 on which the coating film of the self-lubricating composite material described in Embodiment 5-2 is formed be arranged as the initial lubrication.

In all the environments of a high-temperature environment, a vacuum environment, and a vacuum high-temperature environment, the self-lubricating composite material according to the embodiment has high lubricating performance and a low outgassing property in which the outgassing amount is small. Therefore, it can be said that the self-lubricating composite material according to the embodiment is preferable for linear motion guide devices used in the above-described environments.

In addition, the linear motion guide device according to the embodiment can be desirably used for a high-temperature transport device such as a tenter clip or for a vacuum-high-temperature transport device such as a vacuum deposition device or a continuous sputtering furnace.

Since the linear motion guide device is used in a high-temperature environment, it is preferable that the linear motion guide device be formed of SUS440C or SUS304 or be formed of SUJ2, chromium steel, untempered steel, or high-speed steel which is subjected to a rust prevention treatment such as plating or black chromium oxide coating. Likewise, since a load is not applied thereto, it is preferable that the spacer holder be formed of SUS304 or be formed of mild steel such as S45C or SS400 or untempered steel which is subjected to a rust prevention treatment such as plating or black chromium oxide coating. In addition, as a material of the balls, a ceramic such as silicon nitride, silicon carbonate, or zirconium dioxide is used. The ceramic is also coated using a coating film forming method described below.

<Embodiment 5-4>

As illustrated in FIG.. 64, in a linear motion guide device according to this embodiment, rollers are used as rolling elements instead of balls. By using rollers as rolling elements, a radial load capacity can be increased as compared to the same size (rail width dimension) of a linear motion guide device in which rolling elements are balls. As a result, it is possible to provide a linear motion guide device which is suitable for supporting and linearly moving heavy goods.

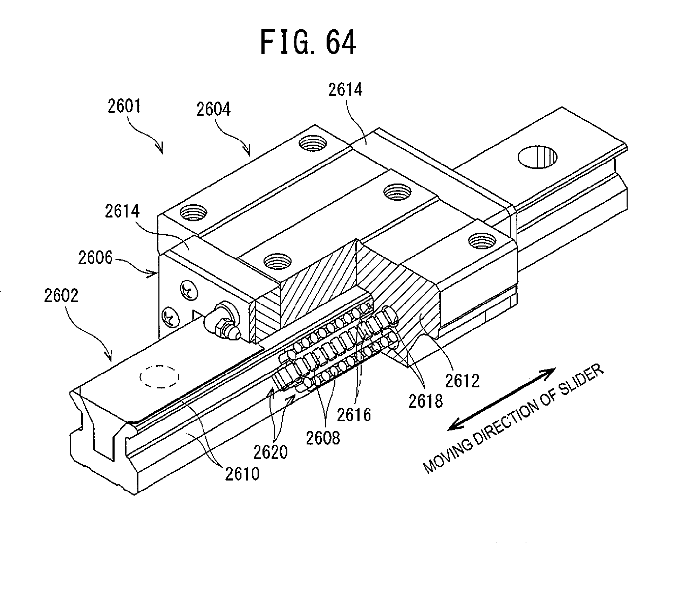

As illustrated in FIG. 64, a rail-side rolling element rolling surface of a guide rail is cut out in a shape in which, in a cross-sectional view of the rail, an upper base of a trapezoid is recessed from both sides of a rail-side surface toward the inside of the rail. A ridge portion corresponding to a diagonal side of the trapezoid is a roller rolling surface.

As in the above-described linear motion guide device in which the rolling elements are balls, a spacer holder is arranged on an end surface of a slider, a spacer pocket is provided inside the spacer holder, a self-lubricating composite material (trapezoidal spacer), which has a part of a cross-section fitted to the rail-side rolling element rolling surface and has a trapezoidal shape slightly smaller than the trapezoid of the rail-side rolling element rolling surface, is embedded in the spacer pocket, and the self-lubricating composite material slides on the rail-side rolling element rolling surface. As a result, the self-lubricating composite material can lubricate the rail-side rolling element rolling surface. As in the above-described cylindrical spacer, the trapezoidal spacer has a cross-section having the same shape in an axis direction. A portion substantially fitted to the rail has a substantially trapezoidal portion following the cross-sectional shape of the rail-side rolling element rolling surface. A cross-section of a portion protruding from the rail-side surface to the outside may be rectangular or semi-circular and can be freely selected. An inner diameter surface of the spacer holder has a shape (not illustrated) following a shape of the remaining portion of the trapezoidal spacer.

When an end surface of the pocket presses an end surface of the trapezoidal spacer, the trapezoidal spacer linearly moves along with the slider. At this time, by the trapezoidal spacer sliding on the rail-side rolling element rolling surface, particles of the self-lubricating composite material are transferred to the rail-side rolling element rolling surface to lubricate the rail-side rolling element rolling surface. This mechanism is the same as that of the cylindrical spacer. The trapezoidal spacer is also the same as the cylindrical shape, in that plural trapezoidal spacers may be accommodated in the spacer pocket; and the lengths thereof in the axis direction may be different from each other.

(37) Endurance Performance of Linear Motion Guide Device at High Temperature

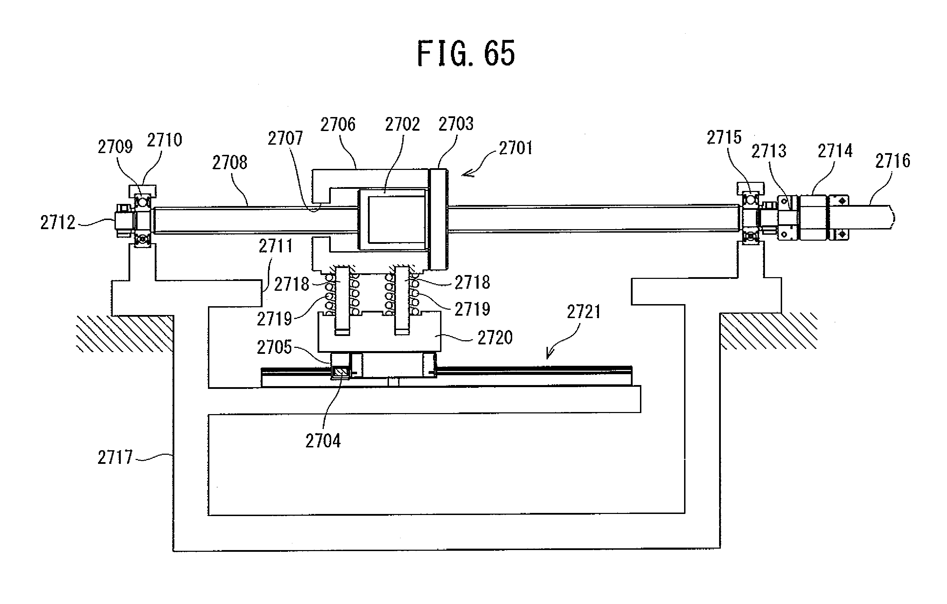

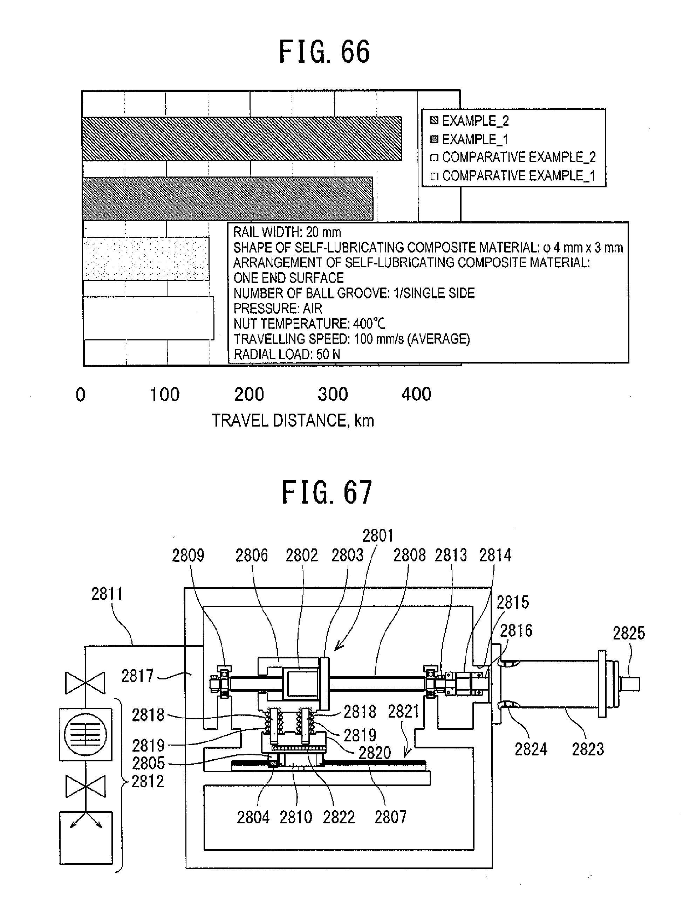

Using a high-temperature-linear-motion-guide-device-endurance testing device illustrated in FIG. 65, the endurance performance of the linear motion guide device according to the fifth embodiment at a high temperature was measured. The results are illustrated in FIG. 66.

<Configuration of

High-Temperature-Linear-Motion-Guide-Device-Endurance Testing Device>

As illustrated in FIG. 59, in the high-temperature-linear-motion-guide-device-endurance testing device, a ball screw device 2701 is arranged outside a thermostatic chamber 2717. Support bearings 2715 are arranged on both ends of a screw shaft 2708, respectively. Outer rings of the support bearings 2715 are fitted to support bearing housings 2710, respectively, so as to support the screw shaft 2708 and to be rotated. An end 2712 of the screw shaft 2708 is coaxially connected to a coupling 2714, and the coupling 2714 is coaxially connected to a driving shaft 2716. Once the driving shaft 2716 is rotated by a rotation driving device (not illustrated; for example a servo motor), the screw shaft 2708 of the ball screw device 2701 can be rotated.

A nut housing 2706 is coaxially fitted to an outer circumferential surface of a nut 2702 of the ball screw device 2701 and is integrated with the nut 2702 by fastening means. When the nut 2 702 includes a flange 2 703, the flange 2703 may be fastened with an end surface of the nut housing 2706 (FIG. 65 illustrates an example in which the nut 2702 includes the flange 2703). In the nut housing 2706, plural (two in FIG. 65) detent shafts 2718 which vertically protrude are arranged in parallel to be fixed, and spiral springs 2719 are fitted to the detent shafts 2718. The detent shafts 2718 penetrate the spiral springs 2719, and ends of the detent shafts 2718 are fitted to a back plate 2720 of a linear motion guide device 2721 arranged inside the thermostatic chamber 2717. The detent shafts 2718 and the back plate 2720 are loosely fitted at a dimensional tolerance of about g7 to f 7, and sliding can occur therebetween along the detent shafts 2718. When the back plate 2720 is vertically pushed up to approach the nut 2702, the spiral springs 2719 are compressed, and a reaction force to push the back plate 2720 back down is generated.

On an upper surface of the thermostatic chamber 2717, a long hole 2711 parallel to the screw shaft 2708 is provided. In addition, through the long hole 2711, a linear motion guide device 2721 in which a rail is provided parallel to the screw shaft 2708 is provided outside the thermostatic chamber 2717. An upper surface of a slider of the linear motion guide device 2721 is fastened with the back plate 2720 to be fixed. As a result, the nut 2702 and the slider are integrally connected to each other, and the screw shaft 2708 and the rail are parallel to each other. Therefore, either the nut 2702 or the slider linearly moves, the other one also linearly moves. By setting a distance between the nut housing 2706 and the back plate 2720, the spiral springs 2719 interposed therebetween are compressed, and a predetermined radial load can be applied to both the nut 2702 and the slider. That is, the same size of radial load is applied to the nut 2702 in a vertically upward direction and to the slider in a vertically downward direction, respectively.

In this state, when the driving shaft 2716 rotates, the screw shaft 2708 rotates. Since the nut 2702 is fitted to the back plate 2720 in which ends of the detent shafts 2718 are fastened with the slider, the nut 2702 linearly moves along the screw shaft 2708 without rotating together with the screw shaft 2708. At the same time, the slider also linearly moves on the rail When the rotating direction of the driving shaft 2716 is reversed, the nut 2702 and the slider reverse their linear motion direction and return to where they have come from.. One-direction rotation is performed at a preset total number of rotations, and then one-direction rotation in the opposite direction is performed at the same total number of rotations as above, By repeating this process, the nut 2702 and the slider can be made to reciprocate at a predetermined stroke, The longitudinal length of the long hole 2711 provided in the bottom of the thermostatic chamber 2717 is set in consideration of the above-described stroke. Therefore, before the linear motion direction is reversed, the detent shafts (to be exact, the spiral springs 2719 which are fixed to the detent shafts) do not collide with a trailing end of the long hole 2711.

A spacer holder 2705 is arranged on an end surface of the slider. A spacer 2704 is accommodated in a pocket which is provided on a surface of the spacer holder 2705 opposite to a rail-side rolling element rolling surface The spacer 2704 has a cylindrical shape. When the slider linearly moves, an end surface of the spacer 2704 is pressed by an end surface of a pocket corresponding to a bottom (or a cover) of a cylindrical hole. As a result, the spacer 2704 also lineally moves together with the slider. At this time, since the rail-side rolling element rolling surface and the surface of the spacer 2704 slide on each other, particles of the self-lubricating composite material which is a part of the surface of the spacer 2704 are transferred to the rail-side rolling element rolling surface. By balls passing through the particles, the ball surfaces and the rail-side rolling element rolling surface are lubricated Further, similarly, the self-lubricating composite material is transferred to a slider-side rolling element rolling surface through the balls to lubricate the slider-side rolling element rolling surface.

Regarding the arrangement of the self-lubricating composite material, the self-lubricating composite material is accommodated in the spacer holder 2705 arranged on the end of the slider, and at least one spacer 2704 is arranged on the single rail-side rolling element rolling surface 2513. The arrangement position may be one end surface or both end surfaces of the slider. When the self-lubricating composite material is arranged on both end surfaces, the supply opportunity of the solid lubricant is doubled Therefore, the endurance performance of the linear motion guide device can be further increased.

In addition, by setting the temperature of the thermostatic chamber 2717, the linear motion guide device 2721 can be held at a predetermined temperature. By making the slider to reciprocate while maintaining the temperature, the endurance test of the linear motion guide device 2717 can be performed at a predetermined temperature.. All of the support bearings 2709 and 2715 of the screw shaft 2308, a support bearing (not illustrated) of the driving shaft 2716, and the nut 2702 integrally connected to the slider are heated by heat conduction from the slider. Therefore, by cooling the above-described components using cooling means such as a fan (not illustrated), each of the above-described components can be used at a use limit temperature of a lubricating grease for filling the component. However, since the upper limit temperature of fluorine grease is about 230°, cooling may be unnecessary depending on the test temperature. In this way, the lubricating performance of the support bearings 2709 and 2715 and the ball screw device 2701 does not deteriorate before deterioration of the linear motion guide device 2721 which is a test target.

It is preferable that the linear motion guide device 2721 which is a test target be formed of SUJ2, SUS440C, chromium steel, or high-speed steel. It is preferable that the spacer holder be formed of SUS304 or mild steel which is plated for rust prevention. It is preferable that the spiral springs 2719 be formed of INCONEL (registered trade name) in order to maintain spring stiffness at a high temperature.

During the test, a torque value of a motor is monitored in terms of voltage or current. When this value is four or more times a stable torque value after starting the test or when the linear motion guide device 2721 is damaged and locked, the total travel distance until that time is evaluated as the endurance performance of the linear motion guide device 2721.

measurement Result>

Using the high-temperature-linear-motion-guide-device-endurance testing device illustrated in FIG. 65, the high-temperature endurance performance of the linear motion guide device at a high temperature was measured in the following manner. The results are illustrated in FIG. 66.

As illustrated in FIG. 66, when the high-temperature endurance performances of linear motion guide devices of Examples and Comparative Examples configured as above were compared to each other , the endurance performance of Examples was two times that of Comparative Examples in the air at a high temperature.

Specifically, in Comparative Examples, the travel distances were only about 150 km. On the other hand, in Examples, the travel distances were 340 km or greater, and the endurance performance thereof was two or more times that of Comparative Examples The self-lubricating composite material (hereinafter, "spacer") is adjacent to the inner wall of the spacer holder, where the spacer is accommodated, and the rail-side rolling element rolling surface. Therefore, during the linear motion of the slider, the spacer frequently collides with the spacer holder and the rail-side rolling element rolling surface. Therefore, in Examples having a small specific gravity, cracking and breakage are difficult to occur as compared to Comparative Examples containing $WS_2$ having a large specific gravity, Therefore, it is presumed that the endurance performance of Examples is superior.

In this test (measurement), test conditions (measurement conditions) were set as follows..

Shape of self-lubricating composite material: Cylindrical spacer having a size of $\phi$ 4mm$\times$3 mm
Composition of self-lubricating composite material:

Examples: 60 mass% of $MoS_2$-1.0 mass% of Cu and Ni in total (the respective contents of Cu and Ni are the same)-4 mass% of C-17,5 mass% of W-17 5 mass% of balance containing Fe

Comparative Examples: 60 mass% of $WS_2$-2.0 mass% of (Ni-20Cr-3B)-3.0 mass% of (Ni-12.7B)-35 mass% of balance containing WB (in a range defined in Japanese Patent No. 3785283)

Guide rail width dimension: 20 mm
Number of rail-side rolling element rolling surface: One on a single side
Arrangement of self-lubricating composite material: One position at an end surface of the linear motion guide device
Radial load: 50 N
Travelling speed: 100 mm/s (average)
Nut temperature: 400°C

(38) Endurance Performance of Linear Motion Guide Device in Vacuum Environment at High Temperature

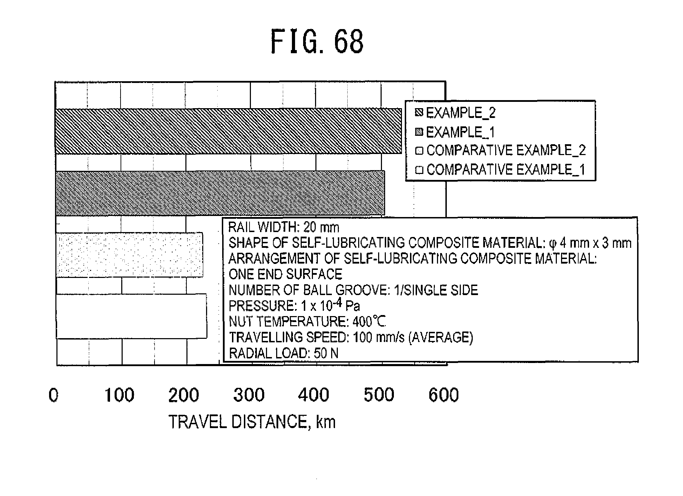

Using a vacuum-high-temperature-linear-motion-guide-device-endura nce testing device illustrated in FIG. 67, the endurance performance of the linear motion guide device according to the fifth embodiment in a vacuum environment at a high temperature was measured.. The results are illustrated in FIG. 68.

<Configuration of

Vacuum-High-Temperature-Linear-Motion-Guide-Device-Endura nce Testing Device>

As illustrated in FIG. 67, in the vacuum-high-temperature-linear-motion-guide-device-endura nce testing device, a ball screw device 2801 is put into a vacuum chamber 2817. A support bearing 2809 is arranged on an end of a screw shaft 2808. An outer ring of the support bearing 2809 is fitted to a support bearing housing so as to support the screw shaft 2808 and to be rotated. The other end of the screw shaft 2808 is coaxially connected to a coupling 2814, and the coupling 2814 is coaxially connected to a magnetic seal vacuum-side shaft 2816 which is air-tighty introduced from the outside through a magnetic seal shaft introducing hole 2815 formed on a side surface of the vacuum chamber 2817. Once a magnetic seal air-side shaft 2825 is rotated by a rotation driving device (not illustrated; for example a servo motor), the screw shaft 2808 of the ball screw device 2801 in the vacuum chamber 2817 can be rotated.

A nut housing 2806 is coaxially fitted to an outer circumferential surface of the nut 2802 of the ball screw device 2801 and is integrated with the nut 2802 by fastening means. When the nut 2802 includes a flange 2803, the flange 2803 is fastened with an end surface of the nut housing 2806 (FIG. 67 illustrates an example in which the nut 2802 includes the flange 2803). In the nut housing 2806, plural (two in FIG. 67) detent shafts 2818 which vertically protrude are arranged in parallel to be fixed, and spiral springs 2819 are fitted to the detent shafts 2818. The detent shafts 2818 penetrate the spiral springs 2819, and ends of the detent shafts 2818 are fitted to a back plate 2820 of a linear motion guide device 2821. The detent shafts 2818 and the back plate 2820 are loosely fitted to each other at a dimensional tolerance of about g7 to f7, and sliding can occur therebetween along the detent shafts 2818. When the back plate 2820 is vertically pushed up to approach the nut 2802, the spiral springs 2819 are compressed, and a reaction force to push the back plate 2820 back down is generated.

An upper surface of a slider of the linear motion guide device 2821 in which a rail is provided parallel to the screw shaft 2808 is fastened with the back plate 2820 to be fixed, As a result, the nut 2802 and the slider are integrally connected to each other, and the screw shaft 2808 and the rail are parallel to each other. Therefore, either the nut 2802 or the slider linearly moves, the other one also linearly moves. By setting a distance between the nut housing 2806 and the back plate 2820, the spiral springs 2819 interposed therebetween are compressed, and a predetermined radial load can be applied to both the nut 2802 and the slider. That is, the same size of radial load is applied to the nut 2802 in a vertically upward direction and to the slider in a vertically downward direction, respectively.

In this state, when the magnetic seal air-side shaft 2825 rotates, the screw shaft 2808 rotates Since the nut 2802 is fitted to the back plate 2820 in which ends of the detent shafts 2818 are fastened with the slider, the nut 2802 linearly moves along the screw shaft 2808 without rotating together with the screw shaft 2808. At the same time, the slider also linearly moves on the rail. When the rotating direction of the magnetic seal air-side shaft 2825 is reversed, the nut 2802 and the slider reverse their linear motion direction and return to where they have come from One-direction rotation is performed at a preset total number of rotations, and then one-direction rotation in the opposite direction is performed at the same total number of rotations as above. By repeating this process, the nut 2802 and the slider can be made to reciprocate at a predetermined stroke. The lengths of the ball screw device 2801 and the linear motion guide device 2820 are set in consideration of the above-described stroke. Therefore, before the linear motion direction is reversed, the nut 2802 and the slider do not reach the screw shaft 2808 and a trailing end of the rail and do not fall off therefrom

A spacer holder is arranged on an end surface of the slider, A spacer 2804 is accommodated in a pocket which is provided on a surface of the spacer holder opposite to a rail-side rolling element rolling surface (refer to FIG. 63) The spacer 2804 has a cylindrical shape. When the slider linearly moves, an end surface of the spacer 2804 is pressed by an end surface of a pocket corresponding to a bottom (or a cover) of a cylindrical hole. As a result, the spacer 2804 also linearly moves together with the slider. At this time, since the rail-side rolling element rolling surface and the surface of the spacer 2804 slide on each other, particles of the self-lubricating composite material which is a part of the surface of the spacer 2804 are transferred to the rail-side rolling element rolling surface. By balls passing through the particles, the ball surfaces and the rail-side rolling element rolling surface are lubricated. Further, similarly, the self-lubricating composite material is transferred to a slider-side rolling element rolling surface through the balls to lubricate the slider-side rolling element rolling surface. Regarding the arrangement of the self-lubricating composite material, the self-lubricating composite material is accommodated in the spacer holder arranged on the end of the slider, and at least one spacer 2804 is arranged on the single rail-side rolling element rolling surface. The arrangement position may be one end surface or both end surfaces of the slider When the self-lubricating composite material is arranged on both end surfaces, the supply opportunity of the solid lubricant is doubled. Therefore, the endurance performance of the linear motion guide device 2820 can be further increased.

In addition, by setting the temperature of a slider-heating heater 2822, the slider can be held at a predetermined temperature. By making the slider to reciprocate while maintaining the temperature, the endurance test of the linear motion guide device 2820 can be performed at a predetermined temperature Both the support bearing 2809 of the screw shaft 2808 and the nut 2802 integrally connected to the slider are heated by heat conduction from the slider. However, since the slider-heating heater 2822 is arranged near the slider and heats only the slider, the temperatures of the support bearing 2809 and the nut 2802 do not exceed about 230°C which is the upper limit temperature of fluorine grease filling the support bearing 2809 and the nut 2802. In this way, the lubricating performance of the support bearing 2809 and the ball screw device 2801 does not deteriorate before deterioration of the linear motion guide device 2820 which is a test target.

In addition, a magnetic seal unit 2823 includes water cooling ports 2824. By circulating cooling water through the inside of the magnetic seal unit 2823, the magnetic seal can be cooled. There are no cases where sealing performance cannot be maintained due to heat conduction from the screw shaft 2808. Accordingly, by activating a vacuum pump 2812 while maintaining the temperature of the slider, the inside of the vacuum chamber 2817 can be made to be in a vacuum environment, and thus the high-temperature test in a vacuum environment can be performed.

It is preferable that the linear motion guide device 2820 which is a test target be formed of SUJ2, SUS440C, chromium steel, or high-speed steel. It is preferable that the spacer holder be formed of SUS304 or mild steel which is plated for rust prevention. It is preferable that the spiral springs 2819 be formed of INCONEL (registered trade name) in order to maintain spring stiffness at a high temperature.

During the test, a torque value of a motor is monitored in terms of voltage or current. When this value is four or more times a stable torque value after starting the test or when the ball screw device 2801 is damaged and locked, the total travel distance until that time is evaluated as the endurance performance of the linear motion guide device 2820.

<Measurement Result>

Using the vacuum-high-temperature-linear-motion-guide-device-endura nce testing device illustrated in FIG. 67, the high-temperature endurance performance of the linear motion guide device in a vacuum at a high temperature was measured in the following manner. The results are illustrated in FIG. 68.

As illustrated in FIG.. 67, when the high-temperature endurance performances of linear motion guide devices of Examples and Comparative Examples configured as below were compared to each other, the endurance performance of Examples was two times that of Comparative Examples in the vacuum-high-temperature-linear-motion-guide-device endurance test (this test). The major component of the self-lubricating composite material according to the present invention used in the linear motion guide devices of Examples is $MoS_2$, whereas the major component of the self-lubricating composite material of Comparative Examples is $WS_2$ of which the specific gravity is 1.5 times that of $MoS_2$, Therefore, the cylindrical spacer is likely to be cracked or broken due to the collision of the cylindrical spacer with the rail-side rolling element rolling surface or the inner wall surface of the spacer holder which is caused along with the linear motion of the slider. Further, it is presumed that the results of this test were obtained because the self-lubricating composite material according to the present invention exhibited superior lubricating performance in a vacuum-high temperature environment and superior transfer performance to a counter rolling member. Using the outgassing testing device illustrated in FIG. 40, the outgassing performance test of Examples and Comparative Examples configured as below was separately performed. The outgassing amounts of Examples and Comparative Examples were small, and superior outgassing properties were exhibited (refer to the test results of FIG. 41).

Based on the results illustrated in FIG. 41, it is presumed that the self-lubricating composite materials of Examples and Comparative Examples configured as below are suitable for a high temperature and a vacuum environment in terms of outgassing performance.

On the other hand, based on the results illustrated in FIG. 68, it is presumed that the linear motion guide devices of Examples using the self-lubricating composite material according to the present invention are superior to the linear motion guide devices of Comparative Examples in the lubricating performance for a high temperature and a vacuum environment.

Accordingly, it can be said from the test results of FIG. 41 and FIG.. 68 that the ball screw devices of Examples are suitable as a linear motion guide device for a vacuum environment and a high temperature.

In a vacuum environment, unless the self-lubricating composite material requires air for exhibiting lubricating performance, the oxidation degradation of the solid lubricant is small in a vacuum environment under the same test conditions, for example, as long as there is no mechanism for not preventing lubricating performance, for example, when the surface of wear debris is immediately oxidized, the shape of the wear debris is likely to be fine, and the wear debris is transferred again on a lubricating surface. Therefore, there are many cases where the endurance performance is higher in a vacuum environment rather than in the air. In this test in which the other conditions were the same except for a pressure value, the travel distance was increased in Examples and Comparative Examples

In this test (measurement), test conditions (measurement conditions) were set as follows.

Shape of self-lubricating composite material: Cylindrical spacer having a size of $\phi$ 4mm$\times$3 mm
Composition of self-lubricating composite material:

Examples: 60 mass% of $MoS_2$-1.0 mass% of Cu and Ni in total (the respective contents of Cu and Ni are the same) -4 mass% of C-17.5 mass% of W-17.5 mass% of balance containing Fe

Comparative Examples: 60 mass% of $WS_2$-2.0 mass% of (Ni-20Cr-3B)-3.0 mass% of (Ni-12.7B)-35 mass% of balance containing WB (in a range defined in Japanese Patent No. 3785283)

Guide rail width dimension: 20 mm
Number of rail-side rolling element rolling surface: One on a single side
Arrangement of self-lubricating composite material: One position at an end surface of the linear motion guide device
Radial load: 50 N
Travelling speed: 100 mm/s (average)
Nut temperature: 400°C
Pressure: About $1\times10^{-4}$ Pa

As described above, the self-lubricating composite material according to the embodiment exhibits the effects of "low friction coefficient in a high-temperature environment" and "low outgassing amount in a vacuum high-temperature environment". In addition, the linear motion guide device according to the embodiment exhibits the effects of "high endurance performance in a high-temperature environment" and "high endurance performance in a vacuum high-temperature environment". Accordingly, the self-lubricating composite material and the linear motion guide device according to the embodiments are desirably used for "a high-temperature transport device", "a vacuum-high-temperature transport device", and "a high-vacuum-high-temperature transport device (for example, a continuous sputtering furnace)",

Hereinabove, the embodiments of the present invention have been described. However, the present invention is not limited to the embodiments, and various modifications and improvements can be made.

Reference Signs List

1    ROLLING BEARING
2    INNER RING
3    OUTER RING
4    ROLLING ELEMENT
5    CAGE
6    SOLID-LUBRICANT SPACER

**Claims**

1.  A self-lubricating composite material comprising:

    60 mass% to 80 mass% of molybdenum disulfide ($MoS_2$);
    0.1 mass% to 2 mass% of at least one of copper (Cu) and nickel (Ni) ; and
    a balance comprising iron (Fe).

2.  The self-lubricating composite material according to claim 1, comprising
    0.1 mass% to 1.8 mass% of at least one of copper (Cu) and nickel (Ni).

3.  The self-lubricating composite material according to claim 1 or 2, wherein
    the balance comprises 2 mass% to 7 mass% of graphite, 2 mass% to 20 mass% of tungsten (W), and 5 mass% to 20 mass% of iron (Fe).

4.  The self-lubricating composite material according to any one of claims 1 to 3, comprising
    a lubricant phase comprising lubricating particles containing molybdenum disulfide ($MoS_2$) and iron (Fe) as a major component; and
    a binder phase comprising at least one of copper (Cu) and nickel (Ni).

5.  The self-lubricating composite material according to claim 4, wherein
    a particle size of the lubricating particles is 30 $\mu$m to 500 $\mu$m.

6.  The self-lubricating composite material according to claim 4, wherein
    the binder phase comprises at least one of carbon (C) and tungsten (W).

7.  The self-lubricating composite material according to claim 4 or 5, wherein
    an area ratio of the lubricant phase to the binder phase is 98:2 to 80:20.

8.  The self-lubricating composite material according to any one of claims 1 to 7, wherein
    a compound of iron (Fe) and nickel (Ni) is formed.

9.  The self-lubricating composite material according to any one of claims 1 to 8, wherein
    a compound of nickel (Ni) and molybdenum disulfide ($MoS_2$) is formed.

10. The self-lubricating composite material according to claim 8 or 9, wherein
    a particle size of the compound is 1 $\mu$m to 1mm.

11. A self-lubricating composite material which is formed by sintering
    60 mass% to 80 mass% of powdered molybdenum disulfide ($MoS_2$) ;

EP 2 759 589 A1

0.1 mass% to 2 mass% of at least one of powdered copper (Cu) and powdered nickel (Ni); and
a balance comprising at least powdered iron (Fe),

**12.** The self-lubricating composite material according to claim 11, wherein
a compressive strength after sintering is higher than or equal to 40 MPa..

**13.** The self-lubricating composite material according to any one of claims 1 to 12, wherein
a shape of the self-lubricating composite material is cylindrical.

**14.** A rolling bearing wherein
the self-lubricating composite material according to any one of claims 1 to 13 as a spacer is arranged between rolling elements.

**15.** A rolling bearing wherein
the self-lubricating composite material according to any one of claims 1 to 13 is able to be loaded from a filling slot provided on either or both of an outer ring side and an inner ring side.

**16.** A rolling bearing being an angular contact ball bearing, wherein
the angular contact ball bearing comprises a cage provided with a pocket accommodating the self-lubricating composite material according to any one of claims 1 to 13.

**17.** A rolling bearing comprising a machined cage formed of the self-lubricating composite material according to any one of claims 1 to 12.

**18.** The rolling bearing according to any one of claims 14 to 17, wherein
the roll bearing is used in a high-temperature environment

**19.** The rolling bearing according to any one of claims 14 to 17, wherein
the roll bearing is used in a vacuum high-temperature environment

**20.** The rolling bearing according to anyone of claims 14 to 17, wherein
the roll bearing is used during outer ring rotation in a high-temperature environment.

**21.** The rolling bearing according to any one of claims 14 to 17, wherein
the roll bearing is used during outer ring rotation in a vacuum high-temperature environment.

**22.** The rolling bearing according to any one of claims 14 to 17, wherein
the roll bearing is used during oscillation in a high-temperature environment,

**23.** The rolling bearing according to any one of claims 14 to 17, wherein
the roll bearing is used during oscillation in a vacuum high-temperature environment.

**24.** The rolling bearing according to claim 16, wherein
the roll bearing is used in a high-temperature environment under a high-load condition.

**25.** The rolling bearing according to claim 16, wherein
the roll bearing is used in a vacuum high-temperature environment under a high-load condition.

**26.** The rolling bearing according to claim 16, wherein
the roll bearing is used during oscillation in a high-temperature environment under a high-load condition.

**27.** The rolling bearing according to claim 16, wherein
the roll bearing is used during oscillation in a vacuum high-temperature environment under a high-load condition.

**28.** The rolling bearing according to any one of claims 14 to 17, wherein
the roll bearing is a tenter clip bearing.

**29.** A transport device comprising the rolling bearing according to any one of claims 14 to 27.

59

**30.** A transport device being a high-temperature transport device including the rolling bearing according to claim 18.

**31.** A transport device being a vacuum-high-temperature transport device including the rolling bearing according to claim 19.

**32.** A transport device being an outer-ring-rotation-bearing-high-temperature transport device including the rolling bearing according to claim 20.

**33.** A transport device being an outer-ring-rotation-bearing-vacuum-high-temperature transport device including the rolling bearing according to claim 21.

**34.** A transport device being an oscillating-bearing-high-temperature transport device including the rolling bearing according to claim 22.

**35.** A transport device being an oscillating-bearing-vacuum-high-temperature transport device including the rolling bearing according to claim 23.

**36.** A transport device being a high-temperature-high-load transport device including the rolling bearing according to claim 24.

**37.** A transport device being a vacuum-high-temperature-high-load transport device including the rolling bearing according to claim 25.

**38.** A transport device being an oscillating-bearing-high-temperature-high-load transport device including the rolling bearing according to claim 26.

**39.** A transport device being an oscillating-bearing-vacuum-high-temperature-high-load transport device including the rolling bearing according to claim 27.

**40.** A rolling bearing wherein
a coating film formed of the self-lubricating composite material according to any one of claims 1 to 12 is formed on at least one surfaces of rolling elements, a rolling surface of an outer ring, a rolling surface of an inner ring, and a pocket surface of a cage.

**41.** The rolling bearing according to claim 40, wherein
a spacer formed of the self-lubricating composite material according to any one of claims 1 to 12 is arranged between rolling elements.

**42.** The rolling bearing according to claim 40 or 41, wherein
a wet lubricating material is embedded.

**43.** The rolling bearing according to claim 40 or 42, wherein
the rolling bearing is a touchdown bearing..

**44.** A transport device used in a high-temperature environment, wherein
the transport device comprises the rolling bearing according to any one of claims 40 to 43.

**45.** A transport device used in a vacuum high-temperature environment, wherein
the transport device comprises the rolling bearing according to any one of claims 40 to 43.

**46.** A linear motion device wherein
a coating film formed of the self-lubricating composite material according to any one of claims 1 to 12 is formed on at least one of surfaces of rolling elements and a rolling surface of the linear motion device.

**47.** The linear motion device according to claim 46, wherein
a spacer formed of the self-lubricating composite material according to any one of claims 1 to 12 is provided to be in contact with a shaft member.

**48.** The linear motion device according to claim 46 or 47, wherein
a wet lubricating material is embedded.

**49.** A transport device used in a high-temperature environment, wherein
the transport device comprises the linear motion device according to any one of claims 46 to 48.

**50.** A transport device used in a vacuum high-temperature environment, wherein
the transport device comprises the linear motion device according to any one of claims 46 to 48.

**51.** A ball screw device comprising:

a screw shaft;
a nut penetrating the screw shaft and screwed into the screw shaft through rolling elements so as to be movable in an axis direction of the screw shaft; and
the self-lubricating composite material according to any one of claims 1 to 12 having a ring shape and attached on an end portion side of the nut,
the self-lubricating composite material according to any one of claims 1 to 12 with an inner circumferential surface being attached on the nut so as to be slidable on the screw shaft,
wherein the inner circumferential surface of the self-lubricating composite material is attached on an end surface of the nut so as to be slidable on the screw shaft.

**52.** The ball screw device according to claim 51, wherein
the self-lubricating composite material is accommodated in a fixing member provided on the same axis as an axis of the self-lubricating composite material on the end surface of the nut.

**53.** The ball screw device according to claim 51 or 52, wherein
the inner circumferential surface of the self-lubricating composite material is attached on the end surface of the nut so as to be screwed into the screw shaft

**54.** The ball screw device according to any one of claims 51 to 53, further comprising binding member for allowing the self-lubricating composite material and the fixing member to rotate together.

**55.** The ball screw device according to any one of claims 51 to 54, wherein
the self-lubricating composite material is divided into plural pieces in a circumferential direction.

**56.** A high-temperature transport device comprising the ball screw device according to any one of claims 51 to 55.

**57.** A vacuum-high-temperature transport device comprising the ball screw device according to any one of claims 51 to 55.

**58.** A linear motion guide device comprising:

a guide rail including a rail-side rolling element rolling surface, extending in an axis direction, as an outer surface;
a slider mounted along the guide rail so as to be movable relative to the guide rail; and
a spacer arranged on at least one end portion side in a moving direction of the slider and slidably coming into contact with the rail-side rolling element rolling surface,
wherein the spacer is formed of the self-lubricating composite material according to any one of claims 1 to 12.

**59.** The linear motion guide device according to claim 58, wherein
the spacer is held by a spacer holder provided on an end surface of the slider

**60.** The linear motion guide device according to claim 58 or 59, wherein
the spacer is cylindrical.

**61.** The linear motion guide device according to any one of claims 58 to 60, wherein
an opening is formed on the rail-side rolling element rolling surface, and
a pocket accommodating the spacer is provided on the spacer holder.

**62.** The linear motion guide device according to claim 61, wherein

a plurality of the spacers are held by the single pocket.

63. A high-temperature transport device comprising the linear motion guide device according to any one of claims 58 to 62.

64. A vacuum-high-temperature transport device comprising the linear motion guide device according to any one of claims 58 to 62.

**Amended claims under Art. 19.1 PCT**

1. A self-lubricating composite material comprising:

60 mass% to 80 mass% of molybdenum disulfide ($MoS_2$) ;
0.1 mass% to 2 mass% of at least one of copper (Cu) and nickel (Ni) ; and
a balance comprising iron (Fe)

2. The self-lubricating composite material according to claim 1, comprising
0.1 mass% to 1.8 mass% of at least one of copper (Cu) and nickel (Ni).

3. The self-lubricating composite material according to claim 1 or 2, wherein
the balance comprises 2 mass% to 7 mass% of graphite, 2 mass% to 20 mass% of tungsten (W), and 5 mass% to 20 mass% of iron (Fe).

4. The self-lubricating composite material according to any one of claims 1 to 3, comprising
a lubricant phase comprising lubricating particles comprising molybdenum disulfide ($MoS_2$) and iron (Fe) as a major component; and
a binder phase comprising at least one of copper (Cu) and nickel (Ni).

5. The self-lubricating composite material according to claim 4, wherein
a particle size of the lubricating particles is 30 $\mu$m to 500 $\mu$m.

6. The self-lubricating composite material according to claim 4, wherein
the binder phase comprises at least one of carbon (C) and tungsten (W).

7. The self-lubricating composite material according to claim 4 or 5, wherein
an area ratio of the lubricant phase to the binder phase is 98:2 to 80:20.

8. The self-lubricating composite material according to any one of claims 1 to 7, wherein
a compound of iron (Fe) and nickel (Ni) is formed.

9. (Cancelled)

10. (Amended) The self-lubricating composite material according to claim 8, wherein
a particle size of the compound is 1 to 1mm.

11. A self-lubricating composite material which is formed by sintering
60 mass% to 80 mass% of powdered molybdenum disulfide ($MoS_2$) ;
0. 1 mass% to 2 mass% of at least one of powdered copper (Cu) and powdered nickel (Ni); and
a balance comprising at least powdered iron (Fe).

12. The self-lubricating composite material according to claim 11, wherein
a compressive strength after sintering is higher than or equal to 40 MPa.

13. (Cancelled)

14. (Amended) A rolling bearing wherein
the self-lubricating composite material according to any one of claims 1 to 8 and 10 to 12 as a spacer is arranged between rolling elements.

**15.** (Cancelled)

**16.** (Cancelled)

**17.** (Cancelled)

**18.** (Cancelled)

**19.** (Cancelled)

**20.** (Cancelled)

**21.** (Cancelled)

**22.** (Cancelled)

**23.** (Cancelled)

**24.** (Cancelled)

**25.** (Cancelled)

**26.** (Cancelled)

**27.** (Cancelled)

**28.** (Amended) The rolling bearing according to claim 14, wherein
the roll bearing is a tenter clip bearing.

**29.** (Amended) A transport device comprising the rolling bearing according to claim 14.

**30.** (Cancelled)

**31.** (Cancelled)

**32.** (Cancelled)

**33.** (Cancelled)

**34.** (Cancelled)

**35.** (Cancelled)

**36.** (Cancelled)

**37.** (Cancelled)

**38.** (Cancelled)

**39.** (Cancelled)

**40.** (Amended) A rolling bearing wherein
a coating film formed of the self-lubricating composite material according to any one of claims 1 to 8 and 10 to 12 is formed on at least one of surfaces of rolling elements, a rolling surface of an outer ring, a rolling surface of an inner ring, and a pocket surface of a cage.

**41.** (Amended) The rolling bearing according to claim 40, wherein
a spacer formed of the self-lubricating composite material according to any one of claims 1 to 8 and 10 to 12 is arranged between rolling elements.

**42.** (Cancelled)

**43.** (Amended) The rolling bearing according to claim 40, wherein
the rolling bearing is a touchdown bearing.

**44.** (Amended) A transport device which is used in a high-temperature environment, wherein
the transport device comprises the rolling bearing according to any one of claims 40, 41, and 43.

**45.** (Cancelled)

**46.** (Amended) A linear motion device wherein
a coating film formed of the self-lubricating composite material according to any one of claims 1 to 8 and 10 to 12
is formed on at least one of surfaces of rolling elements and a rolling surface of the linear motion device.

**47.** (Amended) The linear motion device according to claim 46, wherein
a spacer formed of the self-lubricating composite material according to any one of claims 1 to 8 and 10 to 12 is
provided to be in contact with a shaft member

**48.** (Cancelled)

**49.** (Cancelled)

**50.** (Cancelled)

**51.** (Cancelled)

**52.** (Cancelled)

**53.** (Cancelled)

**54.** (Cancelled)

**55.** (Cancelled)

**56.** (Cancelled)

**57.** (Cancelled)

**58.** (Cancelled)

**59.** (Cancelled)

**60.** (Cancelled)

**61.** (Cancelled)

**62.** (Cancelled)

**63.** (Cancelled)

**64.** (Cancelled)

**Statement under Art. 19.1 PCT**

Claims 9, 13, 15 to 27, 30 to 39, 42, 45, and 48 to 64 were canceled.

# FIG. 1

# FIG. 2

# FIG. 3

# FIG. 4

# FIG. 5

BEARING: INNER DIAMETER 10 mm
CAGE: PROVIDED
SHAPE OF SOLID LUBRICANT: ABOUT $\phi$4mm $\times$ 3mm
MoS$_2$ ADDITION AMOUNT: 85 MASS%

▨ COMPRESSIVE STRENGTH_67 MPa
▧ COMPRESSIVE STRENGTH_40 MPa
□ COMPRESSIVE STRENGTH_35 MPa

```
0        500      1000      1500      2000
```

TOTAL NUMBER OF BEARING ROTATIONS, ×10,000 ROTATIONS

# FIG. 6

# FIG. 7

# FIG. 8

SHAPE OF SOLID LUBRICANT: ABOUT $\phi$ 4mm × 3mm
STEEL BALL DIAMETER: ABOUT $\phi$ 3 mm
ENVIRONMENT: AIR
RECIPROCATION DISTANCE × TIMES: 2mm × 1800 RECIPROCATIONS
RECIPROCATING SPEED: 4mm/sec
LOAD: 5N

# FIG. 9

SHAPE OF SOLID LUBRICANT: ABOUT $\phi$4mm×3mm
STEEL BALL DIAMETER: ABOUT $\phi$3 mm
ENVIRONMENT: AIR
RECIPROCATION DISTANCE×TIMES: 2mm×1800 RECIPROCATIONS
RECIPROCATING SPEED: 4mm/sec
LOAD: 5N

—○— FRICTION COEFFICIENT_ROOM TEMPERATURE
—△— FRICTION COEFFICIENT_300℃

FRICTION COEFFICIENT

$MoS_2$ ADDITION AMOUNT, MASS%

# FIG. 10

SHAPE OF SOLID LUBRICANT: ABOUT $\phi$4mm×3mm
ENVIRONMENT: AIR
TEMPERATURE: 500℃×1hr

—○— MASS%

WEIGHT CHANGE, MASS%

C ADDITION AMOUNT, MASS%

# FIG. 11

# FIG. 12

# FIG. 13

Legend:
- Cu and Ni IN TOTAL_2 0 wt%
- Cu and Ni IN TOTAL_1 8 wt%
- Cu and Ni IN TOTAL_1 5 wt%
- Cu and Ni IN TOTAL_1 0 wt%
- Cu and Ni IN TOTAL_0 1 wt%

BEARING: INNER DIAMETER 10 mm
SHAPE OF SOLID LUBRICANT: ABOUT $\phi$ 4mm × 3mm
ENVIRONMENT: AIR
BEARING TEMPERATURE: 400°C
ROTATING SPEED: 1000 $min^{-1}$
RADIAL LOAD: 50 N/1 BEARING

TOTAL NUMBER OF BEARING ROTATIONS

# FIG. 14

# FIG. 15

# FIG. 16

SHAPE OF SOLID LUBRICANT: ABOUT $\phi$ 4mm × 3mm
COMPRESSION SPEED: 5 $\mu$ m/s

# FIG. 17

SHAPE OF SOLID LUBRICANT: ABOUT $\phi$ 4mm × 3mm
COMPRESSION SPEED: 5 $\mu$ m/s

BEARING HAND-ROTATABLE

NON-SINTERABLE

# FIG. 18

SHAPE OF SOLID LUBRICANT: ABOUT $\phi$4mm×3mm
STEEL BALL DIAMETER: ABOUT $\phi$3 mm
ENVIRONMENT: AIR
RECIPROCATION DISTANCE×TIMES: 2mm×1800 RECIPROCATIONS
RECIPROCATING SPEED: 4mm/sec
LOAD: 5N

FRICTION COEFFICIENT (y-axis: 0.06, 0.08, 0.10, 0.12, 0.14, 0.16)

Fe ADDITION AMOUNT, MASS% (x-axis: 0, 5, 10, 15, 20, 25)

# FIG. 19

□ MoS₂_50 mass%    □ MoS₂_60 mass%
☒ MoS₂_70 mass%    ▥ MoS₂_80 mass%
▩ MoS₂_90 mass%

STOPPED

STOPPED

STOPPED

BEARING: INNER DIAMETER 10 mm
SHAPE OF SOLID LUBRICANT: ABOUT $\phi$4mm×3mm
ENVIRONMENT: AIR
BEARING TEMPERATURE: 400°C
ROTATING SPEED: 1000 min⁻¹
RADIAL LOAD: 50 N/1 BEARING

TOTAL NUMBER OF BEARING ROTATIONS, ×10,000 ROTATIONS (x-axis: 0, 1000, 2000, 3000)

# FIG. 20A

# FIG. 20B

# FIG. 21

SHAPE OF SOLID LUBRICANT: ABOUTφ4mm×3mm
SLIDING SURFACE DIAMETER: φ30mm
ENVIRONMENT: AIR x 300℃
DRIVING ROTATING RING: OUTER RING
ROTATING SPEED: 200 min$^{-1}$
LOAD: 5 N

# FIG. 22

○ INNER RING ROTATION
△ OUTER RING ROTATION

SHAPE OF SOLID LUBRICANT: ABOUTφ4mm×3mm
SLIDING SURFACE DIAMETER: φ30mm
ENVIRONMENT: AIR x 300℃
ROTATING SPEED: 60 min$^{-1}$, 360min$^{-1}$
LOAD: 5 N

# FIG. 23

# FIG. 24A

604

641

# FIG. 24B

604

603

641

# FIG. 25A

# FIG. 25B

FIG. 26A

FIG. 26B

# FIG. 27A

# FIG. 27B

# FIG. 28

Legend:
○ EXAMPLE
△ COMPARATIVE EXAMPLE

Y-axis: FRICTION COEFFICIENT (0.06, 0.08, 0.10, 0.12, 0.14)
X-axis: ROTATING SPEED, min-1 (0, 100, 200, 300, 400, 500)

# FIG. 29

Legend:
▨ EXAMPLE_2
▩ EXAMPLE_1
▢ COMPARATIVE EXAMPLE_2
□ COMPARATIVE EXAMPLE_1

STOPPED
STOPPED
STOPPED

BEARING: INNER DIAMETER 10 mm
SHAPE OF SOLID LUBRICANT: MACHINED
ENVIRONMENT: AIR
BEARING TEMPERATURE: 400°C
ROTATING SPEED: 1000 min-1
RADIAL LOAD: 50 N/BEARING

ROTATING RING: INNER RING

X-axis: TOTAL NUMBER OF BEARING ROTATIONS, x10,000 ROTATIONS (0, 1000, 2000, 3000)

# FIG. 30

EXAMPLE_2
EXAMPLE_1
COMPARATIVE EXAMPLE_2
COMPARATIVE EXAMPLE_1

STOPPED

STOPPED

BEARING: INNER DIAMETER 10 mm
SHAPE OF SOLID LUBRICANT: MACHINED
ENVIRONMENT: AIR
BEARING TEMPERATURE: 400°C
ROTATING SPEED: 1000 min$^{-1}$
RADIAL LOAD: 50 N/BEARING
ROTATING RING: OUTER RING

0     1000     2000     3000

TOTAL NUMBER OF BEARING ROTATIONS, x10,000 ROTATIONS

# FIG. 31

EXAMPLE_2
EXAMPLE_1
COMPARATIVE EXAMPLE_2
COMPARATIVE EXAMPLE_1

STOPPED

STOPPED

BEARING: INNER DIAMETER 10 mm
SHAPE OF SOLID LUBRICANT: φ 4 mm x 3 mm
BEARING TYPE: SPACER-FILLING-SLOT-TYPE
ENVIRONMENT: AIR
BEARING TEMPERATURE: 400°C
ROTATING SPEED: 1000 min$^{-1}$
RADIAL LOAD: 50 N/BEARING
ROTATING RING: INNER RING

0     1000     2000     3000

TOTAL NUMBER OF BEARING ROTATIONS, x10,000 ROTATIONS

# FIG. 32

Legend:
- EXAMPLE_2
- EXAMPLE_1
- COMPARATIVE EXAMPLE_2
- COMPARATIVE EXAMPLE_1

BEARING: INNER DIAMETER 10 mm
SHAPE OF SOLID LUBRICANT: φ 4 mm x 3 mm
BEARING TYPE: SPACER-FILLING-SLOT-TYPE
ENVIRONMENT: AIR
BEARING TEMPERATURE: 400°C
ROTATING SPEED: 1000 min$^{-1}$ (CORRESPONDING TO INNER RING ROTATION)
RADIAL LOAD: 50 N/BEARING
ROTATING RING: OUTER RING

0   1000   2000   3000

TOTAL NUMBER OF BEARING ROTATIONS, x10,000 ROTATIONS

# FIG. 33

Legend:
- EXAMPLE_2
- EXAMPLE_1
- COMPARATIVE EXAMPLE_2
- COMPARATIVE EXAMPLE_1

BEARING: INNER DIAMETER 30 mm
SHAPE OF SOLID LUBRICANT: φ 2 mm x 2 mm
BEARING TYPE: SPACER-CAGE-SUPPORTING-TYPE ANGULAR BEARING
ENVIRONMENT: AIR
BEARING TEMPERATURE: 400°C
ROTATING SPEED: 500 min$^{-1}$
RADIAL LOAD: 100 N/BEARING
ROTATING RING: INNER RING

0   500   1000   1500

TOTAL NUMBER OF BEARING ROTATIONS, x10,000 ROTATIONS

# FIG. 34

Legend:
- ▨ EXAMPLE_2
- ▧ EXAMPLE_1
- □ COMPARATIVE EXAMPLE_2
- □ COMPARATIVE EXAMPLE_1

BEARING: INNER DIAMETER 30 mm
SHAPE OF SOLID LUBRICANT: φ 2 mm x 2 mm
BEARING TYPE: SPACER-CAGE-SUPPORTING-TYPE ANGULAR BEARING
ENVIRONMENT: AIR
BEARING TEMPERATURE: 400°C
ROTATING SPEED: 500 min-1 (CORRESPONDING TO INNER RING ROTATION)
RADIAL LOAD: 100 N/BEARING
ROTATING RING: OUTER RING

TOTAL NUMBER OF BEARING ROTATIONS, x10,000 ROTATIONS

# FIG. 35

Legend:
- ▨ EXAMPLE_2
- ▧ EXAMPLE_1
- □ COMPARATIVE EXAMPLE_2
- □ COMPARATIVE EXAMPLE_1

BEARING: INNER DIAMETER 30 mm
SHAPE OF SOLID LUBRICANT: φ 2 mm x 2 mm
BEARING TYPE: SPACER-CAGE-SUPPORTING-TYPE ANGULAR BEARING
ENVIRONMENT: AIR
BEARING TEMPERATURE: 400°C
OSCILLATING SPEED: 100 min-1
OSCILLATING ANGLE: ±45°
RADIAL LOAD: 100 N/BEARING
ROTATING RING: INNER RING

TOTAL NUMBER OF CYCLES, x 10,000 ROTATIONS

# FIG. 36

Legend:
- EXAMPLE_2
- EXAMPLE_1
- COMPARATIVE EXAMPLE_2
- COMPARATIVE EXAMPLE_1

BEARING: INNER DIAMETER 30 mm
SHAPE OF SOLID LUBRICANT: φ 2 mm x 2 mm
BEARING TYPE: SPACER-CAGE-SUPPORTING-TYPE ANGULAR BEARING
ENVIRONMENT: AIR
BEARING TEMPERATURE: 400°C
OSCILLATING SPEED: 100 min$^{-1}$
OSCILLATING ANGLE: ±45°
RADIAL LOAD: 100 N/BEARING
ROTATING RING: OUTER RING

TOTAL NUMBER OF CYCLES, x 10,000 ROTATIONS

# FIG. 37

# FIG. 38

# FIG. 39

# FIG. 40

# FIG. 41

# FIG. 42

# FIG. 43

# FIG. 44

Legend:
- ▨ EXAMPLE_2
- ▨ EXAMPLE_1
- □ COMPARATIVE EXAMPLE_2
- □ COMPARATIVE EXAMPLE_1

STOPPED

STOPPED

BEARING INNER DIAMETER: 10 mm
BEARING TYPE: FIELD PEA-SHAPED CAGE
SHAPE OF SOLID LUBRICANT: φ 4 mm x 3 mm
PRESSURE: $10^{-4}$ Pa
BEARING TEMPERATURE: 400°C
ROTATING SPEED: 1000 $min^{-1}$
RADIAL LOAD: 50 N/BEARING
ROTATING RING: INNER RING

0    1000    2000    3000    4000

TOTAL NUMBER OF BEARING ROTATIONS, x10,000 ROTATIONS

FIG. 45

# FIG. 46

# FIG. 47

# FIG. 48

# FIG. 49

# FIG. 50

1500

1501 1501 1501

# FIG. 51

1601

1604 1603

1605

1606

1607

1602

# FIG. 52

1601

1708

1708

1709

# FIG. 53

1805

1801

1805

1804

1807

1803

1802

# FIG. 54

# FIG. 55

# FIG. 56

# FIG. 57

BEARING: INNER DIAMETER 10 mm
BEARING EMBODIMENT: PRESS CAGE / BALL COATING
ENVIRONMENT: AIR
BEARING TEMPERATURE: 400℃
ROTATING SPEED: 1000 min$^{-1}$
RADIAL LOAD: 50 N/BEARING
ROTATING RING: INNER RING

EXAMPLE_2
EXAMPLE_1
COMPARATIVE EXAMPLE_2
COMPARATIVE EXAMPLE_1

TOTAL NUMBER OF BEARING ROTATIONS, x10,000 ROTATIONS

0    50    100    150    200    250    300

# FIG. 58A

# FIG. 58B

FIG. 59

# FIG. 60

EXAMPLE_2
EXAMPLE_1
COMPARATIVE EXAMPLE_2
COMPARATIVE EXAMPLE_1

BALL SCREW DIAMETER: φ 20 mm
SHAPE OF SELF-LUBRICATING COMPOSITE MATERIAL:
SCREW RING DIVIDED TWO PIECES
ARRANGEMENT OF SELF-LUBRICATING COMPOSITE
MATERIAL: ONE POSITION
BALL SCREW TYPE: END DEFLECTOR TYPE
PRESSURE: AIR
NUT TEMPERATURE: 400°C
TRAVELLING SPEED: 100 mm/s (AVERAGE)
RADIAL LOAD: 50 N
ROTATING POSITION: SCREW SHAFT

0    50    100    150    200    250

TRAVEL DISTANCE, km

# FIG. 61

# FIG. 62

Legend:
- ▨ EXAMPLE_2
- ▩ EXAMPLE_1
- □ COMPARATIVE EXAMPLE_2
- □ COMPARATIVE EXAMPLE_1

BALL SCREW DIAMETER: φ 20 mm
SHAPE OF SELF-LUBRICATING COMPOSITE
MATERIAL: SCREW RING DIVIDED TWO PIECES
ARRANGEMENT OF SELF-LUBRICATING
COMPOSITE MATERIAL: ONE POSITION
BALL SCREW TYPE: END DEFLECTOR TYPE
PRESSURE: $1 \times 10^{-4}$ Pa
NUT TEMPERATURE: 400°C
TRAVELLING SPEED: 100 mm/s (AVERAGE)
RADIAL LOAD: 50 N
ROTATING POSITION: SCREW SHAFT

X-axis: TRAVEL DISTANCE, km (0, 100, 200, 300, 400)

## FIG. 63A

2504

2518

2513

2530

2530

2550

2501

## FIG. 63B

2540

2541

2504

2530

2501

# FIG. 64

MOVING DIRECTION OF SLIDER

# FIG. 65

## FIG. 66

Legend:
- EXAMPLE_2
- EXAMPLE_1
- COMPARATIVE EXAMPLE_2
- COMPARATIVE EXAMPLE_1

RAIL WIDTH: 20 mm
SHAPE OF SELF-LUBRICATING COMPOSITE MATERIAL: φ 4 mm x 3 mm
ARRANGEMENT OF SELF-LUBRICATING COMPOSITE MATERIAL:
ONE END SURFACE
NUMBER OF BALL GROOVE: 1/SINGLE SIDE
PRESSURE: AIR
NUT TEMPERATURE: 400℃
TRAVELLING SPEED: 100 mm/s (AVERAGE)
RADIAL LOAD: 50 N

0    100    200    300    400

TRAVEL DISTANCE, km

## FIG. 67

# FIG. 68

Legend:
- ▨ EXAMPLE_2
- ▧ EXAMPLE_1
- ☐ COMPARATIVE EXAMPLE_2
- ☐ COMPARATIVE EXAMPLE_1

RAIL WIDTH: 20 mm
SHAPE OF SELF-LUBRICATING COMPOSITE MATERIAL: φ 4 mm x 3 mm
ARRANGEMENT OF SELF-LUBRICATING COMPOSITE MATERIAL:
ONE END SURFACE
NUMBER OF BALL GROOVE: 1/SINGLE SIDE
PRESSURE: $1 \times 10^{-4}$ Pa
NUT TEMPERATURE: 400°C
TRAVELLING SPEED: 100 mm/s (AVERAGE)
RADIAL LOAD: 50 N

TRAVEL DISTANCE, km

0    100    200    300    400    500    600

<div align="center">

**INTERNATIONAL SEARCH REPORT**

</div>

| International application No. |
|---|
| PCT/JP2013/000241 |

**A. CLASSIFICATION OF SUBJECT MATTER**
See extra sheet.

According to International Patent Classification (IPC) or to both national classification and IPC

**B. FIELDS SEARCHED**

Minimum documentation searched (classification system followed by classification symbols)
C10M169/04, C10M103/06, C10M125/02, C10M125/04, C10M177/00, F16C19/06, F16C19/16, F16C29/06, F16C33/372, F16C33/38, F16C33/42, F16C33/66, F16H25/24, C10N10/02, C10N10/12, C10N10/16, C10N20/06, C10N30/06, C10N40/02,

Documentation searched other than minimum documentation to the extent that such documents are included in the fields searched
Jitsuyo Shinan Koho          1922–1996     Jitsuyo Shinan Toroku Koho     1996–2013
Kokai Jitsuyo Shinan Koho     1971–2013     Toroku Jitsuyo Shinan Koho     1994–2013

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br><br>Y | JP 52-115971 A  (Rinken Piston Ring Kogyo Kabushiki Kaisha), 28 September 1977 (28.09.1977), claims; page 1, left column, line 12 to page 2, lower right column, line 18; page 3, upper left column, line 6 to page 3, lower right column, line 3; page 3, lower right column, line 9 to page 4, upper left column, line 2; samples I to III; fig. 1 to 4 (Family: none) | 1,2,4,5, 7-15,17-27, 29-42,44-64 3,6,16,28,43 |
| Y | JP 2000-199028 A  (Kabushiki Kaisha Rubutekku), 18 July 2000 (18.07.2000), claim 1; paragraphs [0018], [0024]; examples 1 to 3 (Family: none) | 3,6 |

| ☒ Further documents are listed in the continuation of Box C. | ☐ See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 02 April, 2013 (02.04.13) | 09 April, 2013 (09.04.13) |

| Name and mailing address of the ISA/ Japanese Patent Office | Authorized officer |
|---|---|
| Facsimile No. | Telephone No. |

Form PCT/ISA/210 (second sheet) (July 2009)

**INTERNATIONAL SEARCH REPORT**

| International application No. |
|---|
| PCT/JP2013/000241 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2002-21857 A (NSK Ltd.),<br>23 January 2002 (23.01.2002),<br>paragraphs [0018], [0032]<br>(Family: none) | 16 |
| Y | JP 2008-298116 A (NTN Corp.),<br>11 December 2008 (11.12.2008),<br>claim 1; paragraph [0049]<br>(Family: none) | 28 |
| Y | JP 2011-102642 A (NTN Corp.),<br>26 May 2011 (26.05.2011),<br>claim 11; paragraph [0020]<br>(Family: none) | 43 |
| A | JP 10-60466 A (Fuji Die Co., Ltd.),<br>03 March 1998 (03.03.1998),<br>claims 1 to 6; example 10<br>(Family: none) | 1-64 |
| A | JP 7-247488 A (Nippon Steel Corp.),<br>26 September 1995 (26.09.1995),<br>claims 1, 2; sample no. 2<br>(Family: none) | 1-64 |
| A | JP 2001-49461 A (Kabushiki Kaisha Rubutekku),<br>20 February 2001 (20.02.2001),<br>claims 1 to 5; examples 1, 2<br>(Family: none) | 1-64 |
| A | JP 2008-232267 A (THK Co., Ltd.),<br>02 October 2008 (02.10.2008),<br>claims 1 to 10; paragraph [0057]; fig. 1 to 6<br>(Family: none) | 1-64 |

Form PCT/ISA/210 (continuation of second sheet) (July 2009)

**INTERNATIONAL SEARCH REPORT**

International application No.

PCT/JP2013/000241

Continuation of A. CLASSIFICATION OF SUBJECT MATTER
  (International Patent Classification (IPC))

*C10M169/04*(2006.01)i, *C10M103/06*(2006.01)i, *C10M125/02*(2006.01)i,
*C10M125/04*(2006.01)i, *C10M177/00*(2006.01)i, *F16C19/06*(2006.01)i,
*F16C19/16*(2006.01)i, *F16C29/06*(2006.01)i, *F16C33/372*(2006.01)i,
*F16C33/38*(2006.01)i, *F16C33/42*(2006.01)i, *F16C33/66*(2006.01)i,
*F16H25/24*(2006.01)i, *C10N10/02*(2006.01)n, *C10N10/12*(2006.01)n,
*C10N10/16*(2006.01)n, *C10N20/06*(2006.01)n, *C10N30/06*(2006.01)n,
*C10N40/02*(2006.01)n, *C10N50/08*(2006.01)n, *C10N70/00*(2006.01)n

        (According to International Patent Classification (IPC) or to both national
        classification and IPC)


Continuation of B. FIELDS SEARCHED
  Minimum documentation searched (International Patent Classification (IPC))

C10N50/08, C10N70/00

        Minimum documentation searched (classification system followed by
        classification symbols)

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000199028 A
- JP 3785283 B
- JP 3608064 B
- JP 2009236314 A